(19) Europäisches Patentamt
European Patent Office
Office européen des brevets

(11) **EP 4 248 778 A1**

(12) **EUROPEAN PATENT APPLICATION**
published in accordance with Art. 153(4) EPC

(43) Date of publication:
**27.09.2023   Bulletin 2023/39**

(21) Application number: **21894300.9**

(22) Date of filing: **07.09.2021**

(51) International Patent Classification (IPC):
*A24F 40/50* (2020.01)        *A24F 40/60* (2020.01)

(52) Cooperative Patent Classification (CPC):
**A24F 40/30; A24F 40/42; A24F 40/51; A24F 40/60;**
A24F 40/10; A24F 40/485

(86) International application number:
**PCT/JP2021/032902**

(87) International publication number:
**WO 2022/107425 (27.05.2022 Gazette 2022/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **20.11.2020   JP 2020193903**

(71) Applicant: **Japan Tobacco Inc.**
**Tokyo 105-6927 (JP)**

(72) Inventors:
  • **KAIHATSU, Yutaka**
  **Tokyo 130-8603 (JP)**

  • **FUJIKURA, Hirofumi**
  **Tokyo 130-8603 (JP)**
  • **NAKANO, Takuma**
  **Tokyo 130-8603 (JP)**
  • **MARUBASHI, Keiji**
  **Tokyo 130-8603 (JP)**
  • **FUJINAGA, Ikuo**
  **Tokyo 130-8603 (JP)**
  • **FUJITA, Hajime**
  **Tokyo 130-8603 (JP)**

(74) Representative: **Hoffmann Eitle**
**Patent- und Rechtsanwälte PartmbB**
**Arabellastraße 30**
**81925 München (DE)**

(54)    **POWER SUPPLY UNIT OF AEROSOL PRODUCTION DEVICE**

(57)    Provided is a power supply unit of an aerosol production device with which it is possible to suitably issue notification to a user. An MCU 63 provided to this power supply unit (10) of an aerosol suction apparatus (1) is configured so as to be capable of executing a flavor judgment with respect to whether menthol is contained in each of an aerosol source (71) and a flavor source (52). When the flavor judgment is executed before production of an aerosol to which a flavor from the flavor source (52) is imparted, the MCU 63 performs a first pre-production notification for notifying the user about the result of the flavor judgment through use of a light-emitting element (161) and a vibration element (162). However, when the flavor judgment is not executed before production of an aerosol to which a flavor from the flavor source (52) is imparted, the MCU 63 performs a second pre-production notification for notifying the user about the result of a most-recent flavor judgment through use of only the light-emitting element (161).

FIG. 8

| NOTIFICATION | | NOTIFICATION ISSUED BEFORE GENERATION OF AEROSOL | | NOTIFICATION ISSUED DURING GENERATION OF AEROSOL | | NOTIFICATION ISSUED WHEN THERE IS OPERATION | | CHARGING REQUEST NOTIFICATION |
|---|---|---|---|---|---|---|---|---|
| | | (a) FIRST PRE-GENERATION NOTIFICATION | (a) SECOND PRE-GENERATION NOTIFICATION | (b) FIRST DURING-GENERATION NOTIFICATION | (b) SECOND DURING-GENERATION NOTIFICATION | (c) FIRST OPERATION NOTIFICATION | (c) SECOND OPERATION NOTIFICATION | (d) |
| EXECUTION CONDITION | | FLAVOR DETERMINATION IS EXECUTED BEFORE GENERATION OF AEROSOL | FLAVOR DETERMINATION IS NOT EXECUTED BEFORE GENERATION OF AEROSOL | REMAINING AMOUNT OF POWER SUPPLY IS EQUAL TO OR LARGER THAN FIRST THRESHOLD | REMAINING AMOUNT OF POWER SUPPLY IS SMALLER THAN FIRST THRESHOLD AND EQUAL TO OR LARGER THAN SECOND THRESHOLD | REMAINING AMOUNT OF POWER SUPPLY IS EQUAL TO OR LARGER THAN FIRST THRESHOLD | REMAINING AMOUNT OF POWER SUPPLY IS SMALLER THAN FIRST THRESHOLD AND EQUAL TO OR LARGER THAN SECOND THRESHOLD | REMAINING AMOUNT OF POWER SUPPLY IS SMALLER THAN SECOND THRESHOLD |
| NOTIFICATION MODE | LIGHT EMITTING ELEMENT | TURN ON IN GREEN OR TURN ON IN WHITE | TURN ON IN GREEN OR TURN ON IN WHITE | TURN ON IN GREEN (BLINK) OR TURN ON IN WHITE (BLINK) | TURN ON IN PURPLE | TURN ON IN GREEN (BLINK) OR TURN ON IN WHITE (BLINK) | TURN ON IN PURPLE | BLINK IN RED |
| | VIBRATION ELEMENT | VIBRATE | NOT VIBRATE | NOT VIBRATE | NOT VIBRATE | NOT VIBRATE | NOT VIBRATE | NOT VIBRATE |

**Description**

TECHNICAL FIELD

The present invention relates to a power supply unit for an aerosol generation device.

BACKGROUND ART

Patent Literature 1 discloses an aerosol delivery system 100 (an aerosol generation device) that generates aerosol by heating an aerosol source to vaporize and/or atomize the aerosol source. In the aerosol delivery system disclosed in Patent Literature 1, the generated aerosol flows through a second aerosol generation device 400 (an accommodation chamber) that accommodates an aerosol generation element 425 (a flavor source), so that a flavor component contained in the flavor source is added to the aerosol, and a user can inhale the aerosol containing the flavor component.

The aerosol delivery system disclosed in Patent Literature 1 includes a reservoir substrate 214, a space (a heating chamber) that accommodates a liquid conveyance element 238 and a heating element 240, and the second aerosol generation device 400 (the accommodation chamber) that accommodates the aerosol generation element 425. An aerosol precursor composition is stored in the reservoir substrate 214. The liquid conveyance element 238 conveys and holds the aerosol precursor composition from the reservoir substrate 214 to the heating chamber. The aerosol precursor composition held by the liquid conveyance element 238 is heated by the heating element 240 and is aerosolized. The aerosol passes through the aerosol generation element 425 in the second aerosol generation device 400, is added with a flavor component, and then is supplied to a user.

Patent Literature 1 discloses that menthol may be contained in both the aerosol precursor composition in the reservoir substrate 214 and the aerosol generation element in the second aerosol generation device 400.

CITATION LIST

PATENT LITERATURE

Patent Literature 1: JP2019-150031A

SUMMARY OF INVENTION

TECHNICAL PROBLEM

In a similar manner to cigarettes, among users who use an aerosol generation device, there are users who prefer a flavor of menthol and there are users who prefer a flavor containing no menthol (a so-called regular flavor). In order to satisfy users having such different preferences, there is a demand for an aerosol generation device capable of generating aerosol containing menthol and aerosol containing no menthol. In such an aerosol generation device, it is favorable to appropriately notify a user whether generated aerosol contains menthol.

The present invention provides a power supply unit for an aerosol generation device capable of issuing an appropriate notification to a user.

SOLUTION TO PROBLEM

According to a first aspect of the present invention, there is provided a power supply unit for an aerosol generation device. The power supply unit includes:

a first connector that is detachable from a first heater of an aerosol source unit including an aerosol source and the first heater, the first heater being configured to heat the aerosol source;

a second connector that is connected to a second heater configured to heat a flavor source capable of adding a flavor to the aerosol source vaporized and/or atomized by heating the aerosol source with the first heater;

a power supply that is electrically connected to the first connector and the second connector, capable of discharging to the first heater via the first connector, and capable of discharging to the second heater via the second connector;

a first notification unit configured to notify a user of information;

a second notification unit that is provided separately from the first notification unit and configured to notify a user of information; and

a controller configured to control notifications issued by the first notification unit and the second notification unit, in which
the controller is configured to

execute a flavor determination for determining whether the aerosol source and the flavor source contain menthol,
cause the first notification unit and the second notification unit to notify the user of a result of the flavor determination when the flavor determination is executed before generation of aerosol to which the flavor of the flavor source is to be added, and
cause only the first notification unit of the first notification unit and the second notification unit to notify the user of a result of the latest flavor determination when the flavor determination is not executed before generation of the aerosol to which the flavor of the flavor source is to be added.

According to a second aspect of the present invention, there is provided a power supply unit for an aerosol generation device. The power supply unit includes:

a first connector that is detachable from a first heater of an aerosol source unit including an aerosol source and the first heater, the first heater being configured to heat the aerosol source;
a second connector connected to a second heater configured to heat a flavor source that capable of adding a flavor to the aerosol source vaporized and/or atomized by heating the aerosol source with the first heater;
a power supply that is electrically connected to the first connector and the second connector, capable of discharging to the first heater via the first connector, and capable of discharging to the second heater via the second connector;
a notification unit configured to notify a user of information; and
a controller configured to control a notification issued by the notification unit, in which
the controller is configured to

execute a flavor determination for determining whether the aerosol source and the flavor source contain menthol,
cause the notification unit to notify the user of a result of the flavor determination when the flavor determination is executed before generation of aerosol to which the flavor of the flavor source is to be added, and
cause the notification unit not to notify the user of the result of the flavor determination, when the flavor determination is not executed before generation of the aerosol to which the flavor of the flavor source is to be added.

ADVANTAGEOUS EFFECTS OF INVENTION

According to the present invention, it is possible to provide a power supply unit for an aerosol generation device capable of issuing an appropriate notification to a user.

BRIEF DESCRIPTION OF DRAWINGS

FIG. 1 is a perspective view schematically showing a schematic configuration of an aerosol inhaler.
FIG. 2 is another perspective view showing the aerosol inhaler in FIG. 1.
FIG. 3 is a cross-sectional view showing the aerosol inhaler in FIG. 1.
FIG. 4 is a perspective view showing a power supply unit in the aerosol inhaler in FIG. 1.
FIG. 5 is a perspective view showing a state in which a capsule is accommodated in a capsule holder in the aerosol inhaler in FIG. 1.
FIG. 6 is a schematic diagram showing a hardware configuration of the aerosol inhaler in FIG. 1.
FIG. 7 is a diagram showing a specific example of the power supply unit shown in FIG. 6.
FIG. 8 is a diagram showing notifications in the aerosol inhaler in FIG. 1.
FIG. 9 is a diagram showing specific notification examples in the aerosol inhaler in FIG. 1.
FIG. 10 is a flowchart (part 1) showing an operation of the aerosol inhaler in FIG. 1.
FIG. 11 is a flowchart (part 2) showing an operation of the aerosol inhaler in FIG. 1.
FIG. 12 is a flowchart (part 3) showing an operation of the aerosol inhaler in FIG. 1.
FIG. 13 is a flowchart (part 4) showing an operation of the aerosol inhaler in FIG. 1.
FIG. 14 is a flowchart showing processing contents of a flavor identification processing.
FIG. 15 is a diagram (part 1) showing a specific control example in a menthol mode.
FIG. 16 is a diagram (part 2) showing a specific control example in the menthol mode.

DESCRIPTION OF EMBODIMENTS

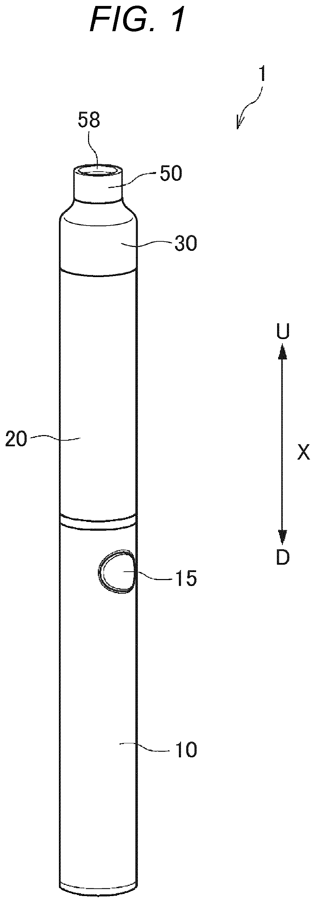

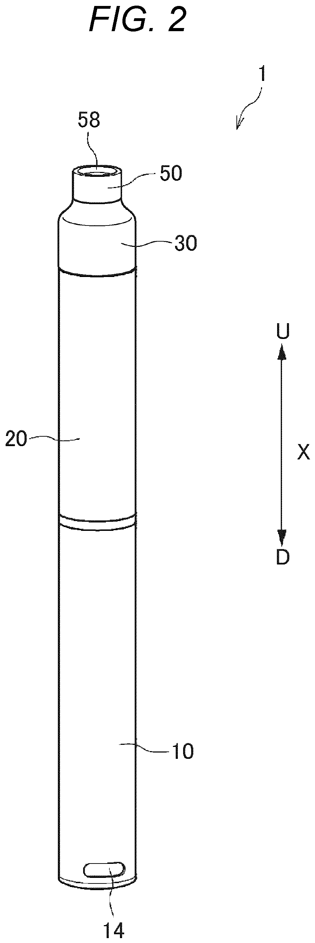

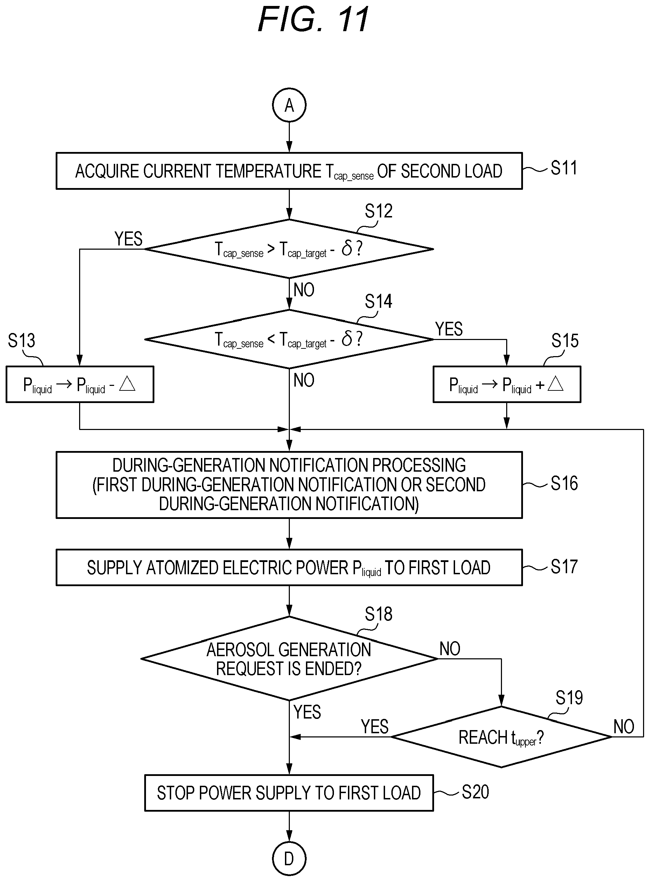

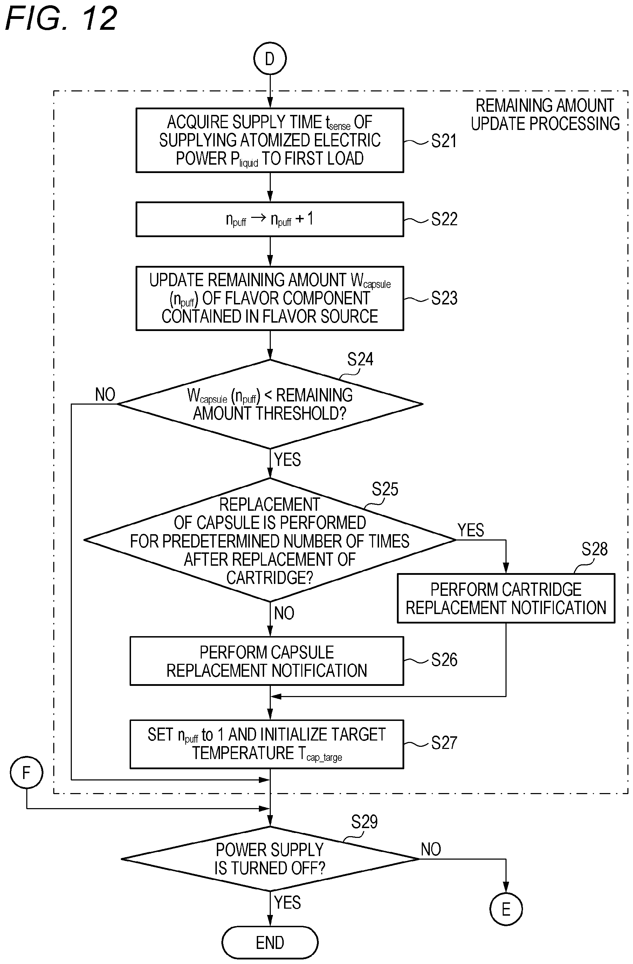

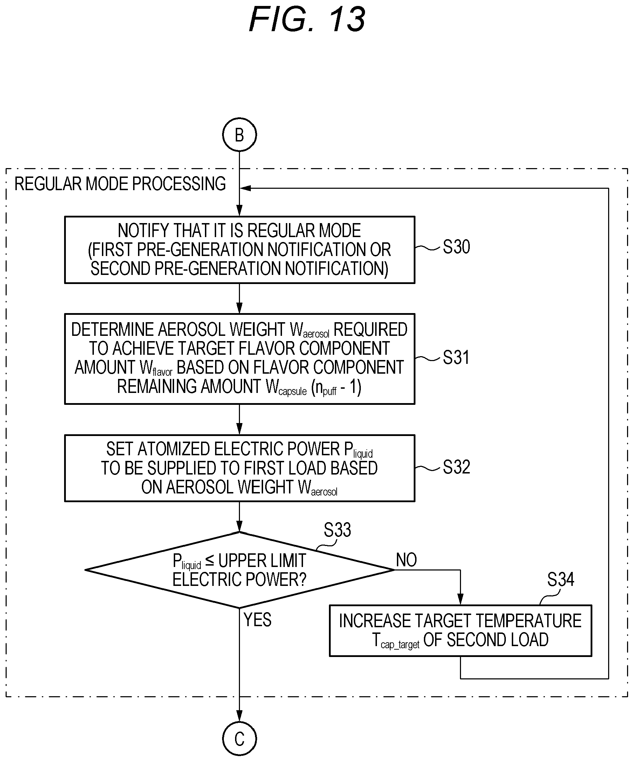

Hereinafter, an aerosol inhaler 1 that is an aerosol generation device according to an embodiment of the present invention will be described with reference to FIGs. 1 to 16. It should be noted that the drawings are viewed in a direction of a reference numeral.

(Overview of Aerosol Inhaler)

As shown in FIGs. 1 to 3, the aerosol inhaler 1 is an instrument that generates aerosol without combustion, adds a flavor component to the generated aerosol, and enables a user to inhale the aerosol containing the flavor component. For example, the aerosol inhaler 1 has a rod shape.

The aerosol inhaler 1 includes a power supply unit 10, a cartridge cover 20 that accommodates a cartridge 40 in which an aerosol source 71 is stored, and a capsule holder 30 that accommodates a capsule 50 having an accommodation chamber 53 in which a flavor source 52 is accommodated. The power supply unit 10, the cartridge cover 20, and the capsule holder 30 are provided in this order from one end side to the other end side in a longitudinal direction of the aerosol inhaler 1.

The power supply unit 10 has a substantially cylindrical shape centered on a center line L extending in the longitudinal direction of the aerosol inhaler 1. The cartridge cover 20 and the capsule holder 30 have a substantially annular shape centered on the center line L extending in the longitudinal direction of the aerosol inhaler 1. An outer peripheral surface of the power supply unit 10 and an outer peripheral surface of the cartridge cover 20 have a substantially annular shape having substantially the same diameter, and the capsule holder 30 has a substantially annular shape having a diameter slightly smaller than the diameter of the power supply unit 10 and the cartridge cover 20.

Hereinafter, in order to simplify and clarify description in the present specification and the like, the longitudinal direction of the rod-shaped aerosol inhaler 1 is defined as a first direction X. In the first direction X, a side of the aerosol inhaler 1 where the power supply unit 10 is disposed is defined as a bottom side, and a side of the aerosol inhaler 1 where the capsule holder 30 is disposed is defined as a top side for convenience. In the drawings, the bottom side of the aerosol inhaler 1 in the first direction X is denoted by D, and the top side of the aerosol inhaler 1 in the first direction X is denoted by U.

The cartridge cover 20 has a hollow and substantially annular shape of which both end surfaces at the bottom side and the top side are opened. The cartridge cover 20 is made of a metal such as stainless steel. An end portion at the bottom side of the cartridge cover 20 is coupled to an end portion at the top side of the power supply unit 10. The cartridge cover 20 is attachable to and detachable from the power supply unit 10. The capsule holder 30 has a hollow and substantially annular shape of which both end surfaces at the bottom side and the top side are opened. An end portion at the bottom side of the capsule holder 30 is coupled to an end portion at the top side of the cartridge cover 20. The capsule holder 30 is made of a metal such as aluminum. The capsule holder 30 is attachable to and detachable from the cartridge cover 20.

The cartridge 40 has a substantially cylindrical shape and is accommodated in the cartridge cover 20. In a state in which the capsule holder 30 is detached from the cartridge cover 20, the cartridge 40 can be accommodated in the cartridge cover 20 and can be taken out from the cartridge cover 20. Therefore, the aerosol inhaler 1 can be used in a manner of replacing the cartridge 40. The cartridge 40 is an example of an aerosol source unit.

The capsule 50 has a substantially cylindrical shape, and is accommodated in a hollow portion of the capsule holder 30 that has a hollow and substantially annular shape in a manner in which an end portion at the top side of the capsule 50 in the first direction X is exposed in the first direction X from an end portion at the top side of the capsule holder 30. The capsule 50 is attachable to and detachable from the capsule holder 30. Therefore, the aerosol inhaler 1 can be used in a manner of replacing the capsule 50.

(Power Supply Unit)

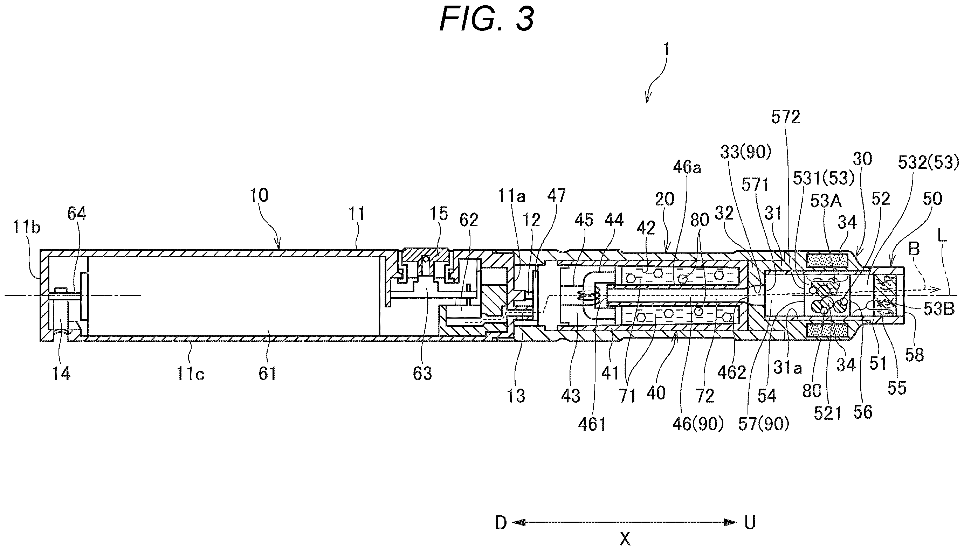

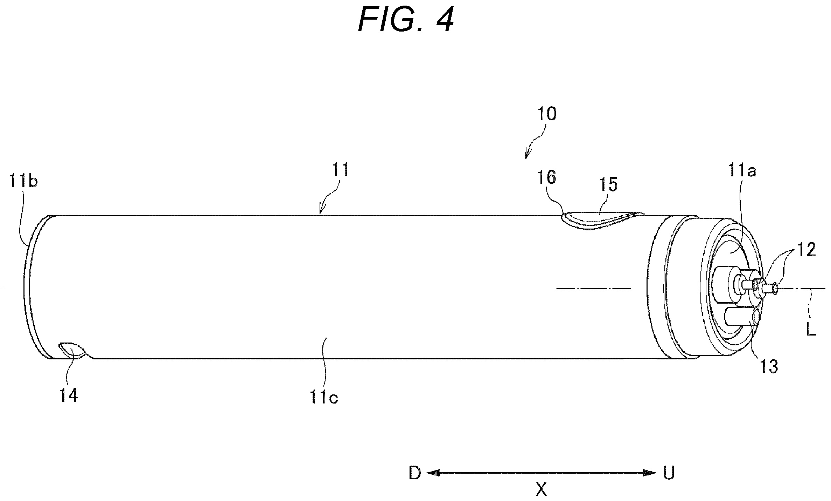

As shown in FIGs. 3 and 4, the power supply unit 10 includes a power supply unit case 11 that has a hollow and substantially annular shape and is centered on the center line L extending in the first direction X. The power supply unit case 11 is made of a metal such as stainless steel. The power supply unit case 11 has a top surface 11a that is an end surface at the top side of the power supply unit case 11 in the first direction X, a bottom surface 11b that is an end surface at the bottom side of the power supply unit case 11 in the first direction X, and a side surface 11c that extends in the first direction X in a substantially annular shape centered on the center line L from the top surface 11a to the bottom surface 11b.

Discharge terminals 12 are provided on the top surface 11a of the power supply unit case 11. The discharge terminal 12 is provided in a manner of protruding from the top surface 11a of the power supply unit case 11 toward the top side in the first direction X.

An air supply portion 13 that supplies air to a heating chamber 43 of the cartridge 40 which will be described later is provided on the top surface 11a in the vicinity of the discharge terminals 12. The air supply portion 13 is provided in a manner of protruding from the top surface 11a of the power supply unit case 11 toward the top side in the first direction X.

A charging terminal 14 that can be electrically connected to an external power supply (not shown) is provided on the side surface 11c of the power supply unit case 11. In the present embodiment, the charging terminal 14 is, for example, a receptacle to which a universal serial bus (USB) terminal, a micro USB terminal, or the like can be connected, and the charging terminal 14 is provided on the side surface 11c in the vicinity of the bottom surface 11b.

The charging terminal 14 may be a power receiving unit capable of wirelessly receiving electric power transmitted from an external power supply. In such a case, the charging terminal 14 (the power receiving unit) may be implemented by a power receiving coil. A wireless power transfer (WPT) system may be of an electromagnetic induction type, a magnetic resonance type, or a combination of an electromagnetic induction type and a magnetic resonance type. The charging terminal 14 may be a power receiving unit capable of receiving, in a contactless manner, electric power transmitted from an external power supply. For example, the charging terminal 14 may include both a receptacle to which a USB terminal, a micro USB terminal, or the like can be connected and the power receiving unit described above.

An operation unit 15 that can be operated by a user is provided on the side surface 11c of the power supply unit case 11. The operation unit 15 is provided on the side surface 11c in the vicinity of the top surface 11a. In the present embodiment, the operation unit 15 is provided at a position about 180 degrees away from the charging terminal 14 about the center line L when viewed from the first direction X. In the present embodiment, the operation unit 15 is a push button type switch having a circular shape when the side surface 11c of the power supply unit case 11 is viewed from the outside. The operation unit 15 may have a shape other than a circular shape, and may be implemented by a switch other than a push button type switch, a touch panel, or the like.

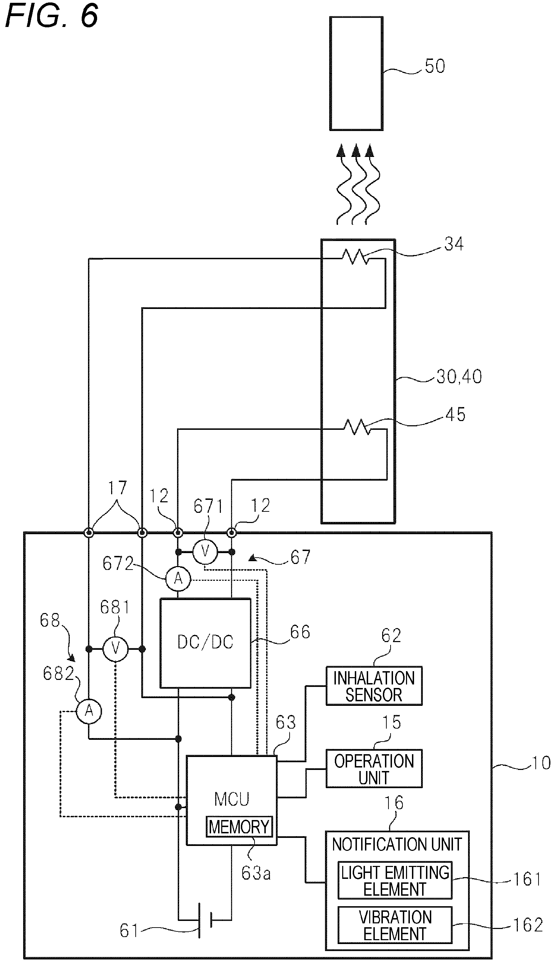

The power supply unit case 11 is provided with a notification unit 16 for notifying a user of various kinds of information. The notification unit 16 includes a light emitting element 161 and a vibration element 162 (see FIG. 6). In the present embodiment, the light emitting element 161 is provided inward of the operation unit 15 on the power supply unit case 11. A periphery of the circular operation unit 15 is translucent when the side surface 11c of the power supply unit case 11 is viewed from the outside, and is configured to be turned on or blinked by the light emitting element 161. In the present embodiment, the light emitting element 161 can emit red, green, blue, white, and purple light. The light emitting element 161 is an example of a first notification unit that issues a notification acting on a sense of vision of a user. The vibration element 162 is an example of a second notification unit that issues a notification acting on a sense of touch of a user.

The power supply unit case 11 is provided with an air intake port (not shown) through which outside air is taken into the power supply unit case 11. The air intake port may be provided around the charging terminal 14, may be provided around the operation unit 15, or may be provided in the power supply unit case 11 at a position away from the charging terminal 14 and the operation unit 15. The air intake port may be provided in the cartridge cover 20. The air intake port may be provided at two or more positions of the above-described positions.

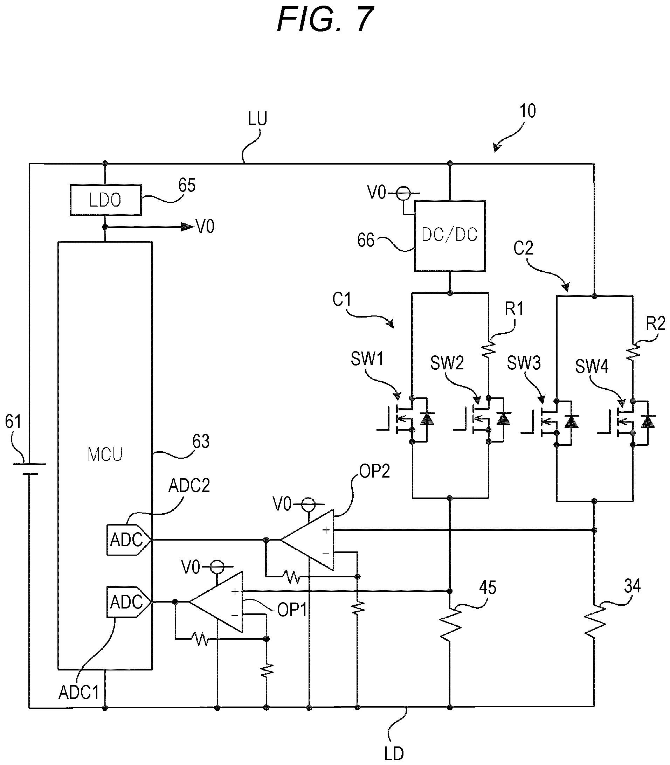

A power supply 61, an inhalation sensor 62, a micro controller unit (MCU) 63, and a charging integrated circuit (IC) 64 are accommodated in a hollow portion of the power supply unit case 11 that has a hollow and substantially annular shape. The power supply unit case 11 further accommodates a low drop out (LDO regulator) 65, a DC/DC converter 66, a first temperature detection element 67 including a voltage sensor 671 and a current sensor 672, and a second temperature detection element 68 including a voltage sensor 681 and a current sensor 682 (see FIGs. 6 and 7).

The power supply 61 is a chargeable and dischargeable power storage device such as a secondary battery or an electric double layer capacitor, and is preferably a lithium ion secondary battery. An electrolyte of the power supply 61 can be implemented by one of or a combination of a gel electrolyte, an electrolytic solution, a solid electrolyte, and an ionic liquid.

The inhalation sensor 62 is a pressure sensor that detects a puff (inhaling) operation, and is provided, for example, in the vicinity of the operation unit 15. The inhalation sensor 62 is configured to output a value of a change in a pressure (internal pressure) inside the power supply unit 10 caused by an inhalation of a user through a mouthpiece 58 of the capsule 50 which will be described later. For example, the inhalation sensor 62 outputs an output value (for example, a voltage value or a current value) corresponding to the internal pressure that changes in accordance with a flow rate of air inhaled from the air intake port toward the mouthpiece 58 of the capsule 50 (that is, an inhaling operation of the user). The inhalation sensor 62 may output an analog value or may output a digital value converted from an analog value.

In order to compensate for a detected pressure, the inhalation sensor 62 may incorporate with a temperature sensor that detects a temperature (outside air temperature) of an environment in which the power supply unit 10 is placed. In addition, the inhalation sensor 62 may be implemented by a condenser microphone, a flow rate sensor, or the like instead of a pressure sensor.

The MCU 63 is an electronic component (controller) that performs various kinds of control of the aerosol inhaler 1. Specifically, the MCU 63 mainly includes a processor, and further includes a memory 63a implemented by a storage medium such as a random access memory (RAM) necessary for an operation of the processor and a read only memory (ROM) that stores various kinds of information (see FIG. 6). Specifically, the processor in the present specification is an electric circuit in which circuit elements such as semiconductor elements are combined.

For example, when the output value of the inhalation sensor 62 exceeds a threshold since a user performs an inhaling operation, the MCU 63 determines that there is an aerosol generation request. Thereafter, for example, when the inhaling operation of the user is ended and the output value of the inhalation sensor 62 falls below the threshold, the MCU 63 determines that the aerosol generation request is ended. In this manner, the output value of the inhalation sensor 62 is used as a signal indicating an aerosol generation request. Therefore, the inhalation sensor 62 constitutes a sensor that outputs an aerosol generation request. The determination for determining whether there is an aerosol generation request may be performed by the inhalation sensor 62 instead of the MCU 63, and the MCU 63 may receive a digital value corresponding to a determination result from the inhalation sensor 62. As a specific example, the inhalation sensor 62 may output a high-level signal when it is determined that there is an aerosol generation request, and may output a low-level signal when it is determined that there is no aerosol generation request (that is, the aerosol generation request is ended). A threshold for the MCU 63 or the inhalation sensor 62 to determine that there is an aerosol generation request may be different from a threshold for the MCU 63 or the inhalation sensor 62 to determine that the aerosol generation request is ended.

The MCU 63 may detect the aerosol generation request based on an operation of the operation unit 15 instead of the inhalation sensor 62. For example, when a user performs a predetermined operation on the operation unit 15 to start inhalation of aerosol, the operation unit 15 may output a signal indicating an aerosol generation request to the MCU 63. In this case, the operation unit 15 constitutes a sensor that outputs an aerosol generation request.

The charging IC 64 is provided in the vicinity of the charging terminal 14. The charging IC 64 controls the charging of the power supply 61 by controlling electric power input from the charging terminal 14 to charge the power supply 61. The charging IC 64 may be disposed in the vicinity of the MCU 63.

(Cartridge)

As shown in FIG. 3, the cartridge 40 includes a cartridge case 41 having a substantially cylindrical shape whose longitudinal direction is an axial direction. The cartridge case 41 is made of a resin such as polycarbonate. A storage chamber 42 that stores the aerosol source 71 and the heating chamber 43 for heating the aerosol source 71 are formed inside the cartridge case 41. The heating chamber 43 accommodates a wick 44 that conveys the aerosol source 71 stored in the storage chamber 42 to the heating chamber 43 and holds the aerosol source 71 in the heating chamber 43, and a first load 45 that heats the aerosol source 71 held in the wick 44 to vaporize and/or atomize the aerosol source 71. The cartridge 40 further includes a first aerosol flow path 46 through which the aerosol source 71 that is vaporized and/or atomized by being heated by the first load 45 is aerosolized and aerosol is conveyed from the heating chamber 43 toward the capsule 50.

The storage chamber 42 and the heating chamber 43 are formed to be adjacent to each other in the longitudinal direction of the cartridge 40. The heating chamber 43 is formed on one end side in the longitudinal direction of the cartridge 40, and the storage chamber 42 is formed in a manner of being adjacent to the heating chamber 43 in the longitudinal direction of the cartridge 40 and extending to an end portion at the other end side in the longitudinal direction of the cartridge 40. A connection terminal 47 is provided on an end surface at one end side in the longitudinal direction of the cartridge case 41, that is, an end surface of the cartridge case 41 at a side where the heating chamber 43 is disposed in the longitudinal direction of the cartridge 40.

The storage chamber 42 has a hollow and substantially annular shape whose axial direction is the longitudinal direction of the cartridge 40, and stores the aerosol source 71 in an annular portion. A porous body such as a resin web or cotton may be stored in the storage chamber 42, and the aerosol source 71 may be impregnated in the porous body. The storage chamber 42 may store only the aerosol source 71 without storing a porous body such as a resin web or cotton. The aerosol source 71 contains a liquid such as glycerin and/or propylene glycol.

In the present embodiment, the cartridge 40 of a regular type that stores the aerosol source 71 containing no menthol 80 and the cartridge 40 of a menthol type that stores the aerosol source 71 containing menthol 80 are provided to a user by a manufacturer or the like of the aerosol inhaler 1. FIG. 3 shows an example in which the cartridge 40 of a menthol type is mounted on the aerosol inhaler 1. In FIG. 3, the menthol 80 is shown in a form of particles in order to facilitate understanding of the description, but in practice, the menthol 80 is dissolved in a liquid such as glycerin and/or propylene glycol that constitutes the aerosol source 71. It should be noted that the menthol 80 shown in FIG. 3 and the like is merely a simulation, and positions and quantity of the menthol 80 in the storage chamber 42, positions and quantity of the menthol 80 in the capsule 50, and a positional relationship between the menthol 80 and the flavor source 52 do not necessarily coincide with actual ones.

The wick 44 is a liquid holding member that draws the aerosol source 71 stored in the storage chamber 42 from the storage chamber 42 into the heating chamber 43 using a capillary action and holds the aerosol source 71 in the heating chamber 43. The wick 44 is made of, for example, glass fiber or porous ceramic. The wick 44 may extend into the storage chamber 42.

The first load 45 is electrically connected to the connection terminal 47. In the present embodiment, the first load 45 is implemented by an electric heating wire (coil) wound around the wick 44 at a predetermined pitch. The first load 45 may be an element that can heat the aerosol source 71 held by the wick 44 to vaporize and/or atomize the aerosol source 71. The first load 45 may be, for example, a heating element such as a heating resistor, a ceramic heater, or an induction heating type heater. The first load 45 is a load whose temperature and electric resistance value have a correlation. For example, the first load 45 is a load having a positive temperature coefficient (PTC) characteristic in which an electric resistance value increases as the temperature increases. Alternatively, the first load 45 may be, for example, a load having a negative temperature coefficient (NTC) characteristic in which an electric resistance value decreases as the temperature increases. A part of the first load 45 may be provided outside the heating chamber 43.

The first aerosol flow path 46 is formed in a hollow portion of the storage chamber 42 having a hollow and substantially annular shape, and extends in the longitudinal direction of the cartridge 40. The first aerosol flow path 46 is formed by a wall portion 46a that extends in a substantially annular shape in the longitudinal direction of the cartridge 40. The wall portion 46a of the first aerosol flow path 46 is also an inner peripheral side wall portion of the storage chamber 42 having a substantially annular shape. A first end portion 461 of the first aerosol flow path 46 in the longitudinal direction of the cartridge 40 is connected to the heating chamber 43, and a second end portion 462 of the first aerosol flow path 46 in the longitudinal direction of the cartridge 40 is open to an end surface at the other end side of the cartridge case 41.

The first aerosol flow path 46 is formed such that a cross-sectional area of the first aerosol flow path 46 does not change or increases from the first end portion 461 toward the second end portion 462 in the longitudinal direction of the cartridge 40. The cross-sectional area of the first aerosol flow path 46 may increase discontinuously from the first end portion 461 toward the second end portion 462, or may increase continuously as shown in FIG. 3.

The cartridge 40 is accommodated in a hollow portion of the cartridge cover 20 having a hollow and substantially annular shape such that the longitudinal direction of the cartridge 40 is the first direction X which is the longitudinal direction of the aerosol inhaler 1. Further, the cartridge 40 is accommodated in the hollow portion of the cartridge cover 20 such that the heating chamber 43 is at the bottom side of the aerosol inhaler 1 (that is, at the power supply unit 10 side) and the storage chamber 42 is at the top side of the aerosol inhaler 1 (that is, at the capsule 50 side) in the first direction X.

The first aerosol flow path 46 of the cartridge 40 is formed in a manner of extending in the first direction X on the center line L of the aerosol inhaler 1 in a state in which the cartridge 40 is accommodated inside the cartridge cover 20.

When the aerosol inhaler 1 is in use, the cartridge 40 is accommodated in a hollow portion of the cartridge cover 20 so as to maintain a state in which the connection terminal 47 comes into contact with the discharge terminal 12 provided on the top surface 11a of the power supply unit case 11. When the discharge terminal 12 of the power supply unit 10 and the connection terminal 47 of the cartridge 40 come into contact with each other, the first load 45 of the cartridge 40 is electrically connected to the power supply 61 of the power supply unit 10 via the discharge terminal 12 and the connection terminal 47.

Furthermore, when the aerosol inhaler 1 is in use, the cartridge 40 is accommodated in the hollow portion of the cartridge cover 20 such that air flowing in from an air intake port (not shown) provided in the power supply unit case 11 is taken into the heating chamber 43 from the air supply portion 13 provided on the top surface 11a of the power supply unit case 11 as indicated by an arrow B in FIG. 3. Although the arrow B is inclined relative the center line L in FIG. 3, the arrow B may be in the same direction as the center line L. In other words, the arrow B may be parallel to the center line L.

When the aerosol inhaler 1 is in use, the first load 45 heats the aerosol source 71 held by the wick 44 without combustion using electric power supplied from the power supply 61 via the discharge terminal 12 provided in the power supply unit case 11 and the connection terminal 47 provided in the cartridge 40. In the heating chamber 43, the aerosol source 71 heated by the first load 45 is vaporized and/or atomized. When the cartridge 40 is a menthol type, the vaporized and/or atomized aerosol source 71 at this time contains the vaporized and/or atomized menthol 80 and vaporized and/or atomized glycerin and/or propylene glycol, or the like.

The aerosol source 71 vaporized and/or atomized in the heating chamber 43 aerosolizes air taken into the heating chamber 43 from the air supply portion 13 of the power supply unit case 11 as a dispersion medium. Further, the aerosol source 71 vaporized and/or atomized in the heating chamber 43 and the air taken into the heating chamber 43 from the air supply portion 13 of the power supply unit case 11 flow through the first aerosol flow path 46 from the first end portion 461 of the first aerosol flow path 46 communicating with the heating chamber 43 to the second end portion 462 of the first aerosol flow path 46 while the aerosol source 71 and the air are further aerosolized. A temperature of the aerosol source 71 vaporized and/or atomized in the heating chamber 43 decreases in the process of flowing through the first aerosol flow path 46, which promotes aerosolization. In this manner, the aerosol source 71 vaporized and/or atomized in the heating chamber 43 and the air taken into the heating chamber 43 from the air supply portion 13 of the power supply unit case 11 are used to generate aerosol 72 in the heating chamber 43 and the first aerosol flow path 46. When the cartridge 40 is a menthol type, the aerosol 72 in the heating chamber 43 and the first aerosol flow path 46 also contains the menthol 80 that is aerosolized and derived from the aerosol source 71.

(Capsule Holder)

The capsule holder 30 has a side wall 31 extending in the first direction X in a substantially annular shape, and has a hollow substantially annular shape of which both end surfaces at the bottom side and the top side are opened. The side wall 31 is formed of a metal such as aluminum. An end portion at the bottom side of the capsule holder 30 is coupled to an end portion at the top side of the cartridge cover 20 by screwing, locking, or the like, and the capsule holder 30 is attachable to and detachable from the cartridge cover 20. An inner peripheral surface 31a of the side wall 31 having a substantially annular shape has an annular shape centered on the center line L of the aerosol inhaler 1, and has a diameter larger than a diameter of the first aerosol flow path 46 of the cartridge 40 and smaller than a diameter of the cartridge cover 20.

The capsule holder 30 has a bottom wall 32 provided at an end portion at the bottom side of the side wall 31. The bottom wall 32 is made of, for example, a resin. The bottom wall 32 is fixed to an end portion at the bottom side of the side wall 31, and closes a hollow portion surrounded by an inner peripheral surface of the side wall 31 at the end portion at the bottom side of the side wall 31 except for a communication hole 33 to be described later.

The bottom wall 32 is provided with the communication hole 33 that passes through the bottom wall 32 in the first direction X. The communication hole 33 is formed at a position overlapping the center line L when viewed from the first direction. In a state in which the cartridge 40 is accommodated in the cartridge cover 20 and the capsule holder 30 is attached to the cartridge cover 20, the communication hole 33 is formed such that the first aerosol flow path 46 of the cartridge 40 is located inside the communication hole 33 when viewed from the top side in the first direction X.

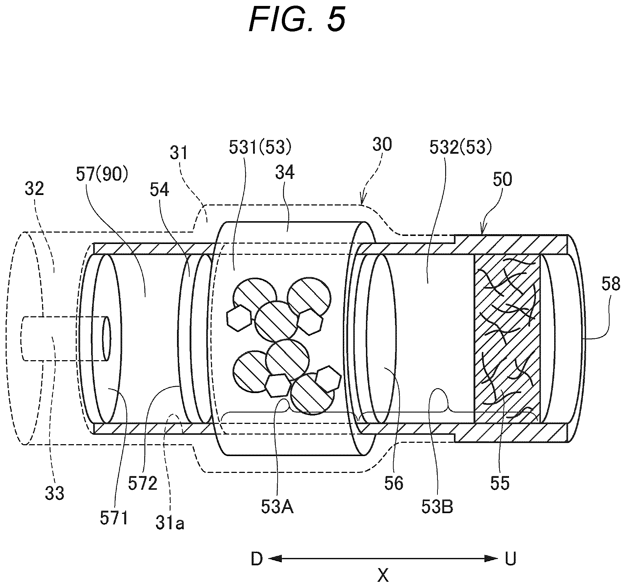

A second load 34 is provided in the side wall 31 of the capsule holder 30. As shown in FIG. 5, the second load 34 is provided at the bottom side of the side wall 31. The second load 34 has an annular shape along the side wall 31 having a substantially annular shape, and extends in the first direction X. The second load 34 heats the accommodation chamber 53 of the capsule 50 to heat the flavor source 52 accommodated in the accommodation chamber 53. The second load 34 may be an element capable of heating the flavor source 52 by heating the accommodation chamber 53 of the capsule 50. The second load 34 may be, for example, a heating element such as a heating resistor, a ceramic heater, or an induction heating type heater. The second load 34 is a load whose temperature and electric resistance value have a correlation. For example, the second load 34 is a load having a positive temperature coefficient (PTC) characteristic in which an electric resistance value increases as the temperature increases. Alternatively, the second load 34 may be, for example, a load having a negative temperature coefficient (NTC) characteristic in which an electric resistance value decreases as the temperature increases.

In a state in which the cartridge cover 20 is attached to the power supply unit 10 and the capsule holder 30 is attached to the cartridge cover 20, the second load 34 is electrically connected to the power supply 61 of the power supply unit 10 (see FIGs. 6 and 7). Specifically, when the cartridge cover 20 is attached to the power supply unit 10 and the capsule holder 30 is attached to the cartridge cover 20, a discharge terminal 17 (see FIG. 6) of the power supply unit 10 and a connection terminal (not shown) of the capsule holder 30 come into contact with each other, so that the second load 34 of the capsule holder 30 is electrically connected to the power supply 61 of the power supply unit 10 via the discharge terminal 17 and the connection terminal of the capsule holder 30.

(Capsule)

Returning to FIG. 3, the capsule 50 has a substantially cylindrical shape, and includes a side wall 51 of which both end surfaces are opened and that extends in a substantially annular shape. The side wall 51 is formed of a resin such as plastic. The side wall 51 has a substantially annular shape having a diameter slightly smaller than a diameter of the inner peripheral surface 31a of the side wall 31 of the capsule holder 30.

The capsule 50 includes the accommodation chamber 53 that accommodates the flavor source 52. As shown in FIG. 3, the accommodation chamber 53 may be formed in an internal space of the capsule 50 surrounded by the side wall 51. Alternatively, the entire internal space of the capsule 50 except for an outlet portion 55 to be described later may serve as the accommodation chamber 53.

The accommodation chamber 53 has an inlet portion 54 provided at one end side in a cylindrical axis direction of the capsule 50 extending in a substantially cylindrical shape, and the outlet portion 55 provided at the other end side in the cylindrical axis direction of the capsule 50.

The flavor source 52 includes cigarette granules 521 obtained by forming a cigarette raw material into granules. In the present embodiment, the capsule 50 of a regular type that accommodates the flavor source 52 containing no menthol 80 and the capsule 50 of a menthol type that accommodates the flavor source 52 containing the menthol 80 are provided to a user by a manufacturer or the like of the aerosol inhaler 1. In the capsule 50 of a menthol type, for example, the menthol 80 is adsorbed to the cigarette granules 521 constituting the flavor source 52.

The flavor source 52 may include shred tobacco instead of the cigarette granules 521. Instead of the cigarette granules 521, the flavor source 52 may include a plant (for example, mint, kampo, and herb) other than cigarettes. The flavor source 52 may be added with another flavor in addition to the menthol 80.

As shown in FIG. 3, when the accommodation chamber 53 is formed in an internal space of the capsule 50, the inlet portion 54 may be a partition wall that partitions the internal space of the capsule 50 in a cylindrical axis direction of the capsule 50 at a position separated from a bottom portion of the capsule 50 in the cylindrical axis direction of the capsule 50. The inlet portion 54 may be a mesh-like partition wall through which the flavor source 52 cannot pass and through which the aerosol 72 can pass.

When the entire internal space of the capsule 50 except for the outlet portion 55 serves as the accommodation chamber 53, the bottom portion of the capsule 50 also serves as the inlet portion 54.

The outlet portion 55 is a filter member that is filled in the internal space of the capsule 50 surrounded by the side wall 51 at an end portion at the top side of the side wall 51 in the cylindrical axis direction of the capsule 50. The outlet portion 55 is a filter member through which the flavor source 52 cannot pass and through which the aerosol 72 can pass. Although the outlet portion 55 is provided in the vicinity of a top portion of the capsule 50 in the present embodiment, the outlet portion 55 may be provided at a position separated from the top portion of the capsule 50.

The accommodation chamber 53 includes a first space 531 in which the flavor source 52 is present, and a second space 532 that is located between the first space 531 and the outlet portion 55, that is adjacent to the outlet portion 55, and in which the flavor source 52 is not present. In the present embodiment, the first space 531 and the second space 532 of the accommodation chamber 53 are formed to be adjacent to each other in the cylindrical axis direction of the capsule 50. One end side of the first space 531 in the cylindrical axis direction of the capsule 50 is adjacent to the inlet portion 54, and the other end side of the first space 531 in the cylindrical axis direction of the capsule 50 is adjacent to the second space 532. One end side of the second space 532 in the cylindrical axis direction of the capsule 50 is adjacent to the first space 531, and the other end side of the second space 532 in the cylindrical axis direction of the capsule 50 is adjacent to the outlet portion 55. The first space 531 and the second space 532 may be partitioned by a mesh-like partition wall 56 through which the flavor source 52 cannot pass and through which the aerosol 72 can pass. The first space 531 and the second space 532 may be formed without using such a partition wall 56. As a specific example, the flavor source 52 may accommodated in a pressed state in a part of the accommodation chamber 53 and it is difficult for the flavor source 52 to move in the accommodation chamber 53, thereby forming the first space 531 and the second space 532. As another specific example, the flavor source 52 can move freely in the accommodation chamber 53 and the flavor source 52 is moved to the bottom side of the accommodation chamber 53 due to gravity when a user performs an inhaling operation through the mouthpiece 58, thereby forming the first space 531 and the second space 532.

As shown in FIG. 3, when the accommodation chamber 53 is formed in the internal space of the capsule 50, a second aerosol flow path 57 may be formed in the capsule 50 between a bottom portion of the capsule 50 and the inlet portion 54 in the cylindrical axis direction of the capsule 50.

The second aerosol flow path 57 is formed by the internal space of the capsule 50 surrounded by the side wall 51 between the bottom portion of the capsule 50 and the inlet portion 54 in the cylindrical axis direction of the capsule 50. Therefore, a first end portion 571 of the second aerosol flow path 57 in the cylindrical axis direction of the capsule 50 is opened at the bottom portion of the capsule 50, and a second end portion 572 of the second aerosol flow path 57 in the cylindrical axis direction of the capsule 50 is connected to the accommodation chamber 53 at the inlet portion 54 of the accommodation chamber 53.

An opening area of the communication hole 33 provided in the bottom wall 32 of the capsule holder 30 is larger than a cross-sectional area of the first aerosol flow path 46 of the cartridge 40, and a cross-sectional area of the second aerosol flow path 57 is larger than the cross-sectional area of the first aerosol flow path 46 of the cartridge 40 and the opening area of the communication hole 33 provided in the bottom wall 32 of the capsule holder 30. Therefore, a cross-sectional area of the second end portion 572 of the second aerosol flow path 57 connected to the accommodation chamber 53 of the capsule 50 is larger than a cross-sectional area of the first end portion 461 of the first aerosol flow path 46 connected to the heating chamber 43 of the cartridge 40. An aerosol flow path 90 in the present embodiment includes the first aerosol flow path 46, the communication hole 33, and the second aerosol flow path 57. A cross-sectional area of the first end portion 461 of the first aerosol flow path 46 connected to the heating chamber 43 is smaller than a cross-sectional area of the second end portion 462 of the first aerosol flow path 46 connected to the communication hole 33. The cross-sectional area of the first end portion 461 of the first aerosol flow path 46 connected to the heating chamber 43 is smaller than the cross-sectional area of the communication hole 33. The cross-sectional area of the communication hole 33 is smaller than the cross-sectional area of the second aerosol flow path 57. That is, the cross-sectional area of the second end portion 572 of the second aerosol flow path 57 that constitutes a second end portion of the aerosol flow path 90 connected to the accommodation chamber 53 is larger than the cross-sectional area of the first end portion 461 of the first aerosol flow path 46 that constitutes a first end portion of the aerosol flow path 90 connected to the heating chamber 43. The aerosol flow path 90 is formed such that the cross-sectional area increases from the first end portion toward the second end portion.

When the entire internal space of the capsule 50 except for the outlet portion 55 serves as the accommodation chamber 53, the bottom portion of the capsule 50 serves as the inlet portion 54, and thus the second aerosol flow path 57 described above is not formed. That is, the aerosol flow path 90 in the present embodiment includes the first aerosol flow path 46 and the communication hole 33. A cross-sectional area of the first end portion 461 of the first aerosol flow path 46 connected to the heating chamber 43 is smaller than a cross-sectional area of the second end portion 462 of the first aerosol flow path 46 connected to the communication hole 33. A cross-sectional area of the first end portion 461 of the first aerosol flow path 46 connected to the heating chamber 43 is smaller than a cross-sectional area of the communication hole 33. In the present embodiment, the cross-sectional area of the communication hole 33 that constitutes the second end portion of the aerosol flow path 90 connected to the accommodation chamber 53 is larger than the cross-sectional area of the first end portion 461 of the first aerosol flow path 46 that constitutes the first end portion of the aerosol flow path 90 connected to the heating chamber 43. The aerosol flow path 90 is formed such that the cross-sectional area increases from the first end portion toward the second end portion.

In a state in which the capsule 50 is accommodated in the capsule holder 30, a space may be formed between the bottom wall 32 of the capsule holder 30 and a bottom portion of the capsule 50. That is, the aerosol flow path 90 in the present embodiment includes the first aerosol flow path 46, the communication hole 33, and the space formed between the bottom wall 32 of the capsule holder 30 and the bottom portion of the capsule 50. The cross-sectional area of the first end portion 461 of the first aerosol flow path 46 connected to the heating chamber 43 is smaller than the cross-sectional area of the second end portion 462 of the first aerosol flow path 46 connected to the communication hole 33. The cross-sectional area of the first end portion 461 of the first aerosol flow path 46 connected to the heating chamber 43 is smaller than the cross-sectional area of the communication hole 33. The cross-sectional area of the communication hole 33 is smaller than a cross-sectional area of the space formed between the bottom wall 32 of the capsule holder 30 and the bottom portion of the capsule 50. In this case, the cross-sectional area of the space that is formed between the bottom wall 32 of the capsule holder 30 and the bottom portion of the capsule 50 and that constitutes the second end portion of the aerosol flow path 90 connected to the accommodation chamber 53 is larger than the cross-sectional area of the first end portion 461 of the first aerosol flow path 46 that constitutes the first end portion of the aerosol flow path 90 connected to the heating chamber 43. The aerosol flow path 90 is formed such that the cross-sectional area increases from the first end portion toward the second end portion.

The capsule 50 is accommodated in a hollow portion of the capsule holder 30 having a hollow and substantially annular shape such that a cylindrical axis direction of the substantially cylindrical shape is the first direction X which is the longitudinal direction of the aerosol inhaler 1. Further, the capsule 50 is accommodated in the hollow portion of the capsule holder 30 such that the inlet portion 54 is at the bottom side of the aerosol inhaler 1 (that is, the cartridge 40 side) and the outlet portion 55 is at the top side of the aerosol inhaler 1 in the first direction X. The capsule 50 is accommodated in the hollow portion of the capsule holder 30 such that an end portion at the other end side of the side wall 51 is exposed in the first direction X from an end portion at the top side of the capsule holder 30 in a state in which the capsule 50 is accommodated in the hollow portion of the capsule holder 30. The end portion at the other end side of the side wall 51 serves as the mouthpiece 58 through which a user performs an inhaling operation when the aerosol inhaler 1 is in use. The end portion at the other end side of the side wall 51 may have a step such that the end portion at the other end side of the side wall 51 is easily exposed in the first direction X from the end portion at the top side of the capsule holder 30.

As shown in FIG. 5, in a state in which the capsule 50 is accommodated in a hollow portion of the cartridge cover 20 having a hollow and substantially annular shape, a part of the accommodation chamber 53 is accommodated in a hollow portion of the annular second load 34 provided in the capsule holder 30.

Returning to FIG. 3, in a state in which the capsule 50 is accommodated in the hollow portion of the cartridge cover 20 in the cylindrical axis direction of the capsule 50, the accommodation chamber 53 has a heating region 53A in which the second load 34 of the capsule holder 30 is disposed and a non-heating region 53B that is located between the heating region 53A and the outlet portion 55, that is adjacent to the outlet portion 55, and in which the second load 34 of the capsule holder 30 is not disposed.

In the present embodiment, the heating region 53A overlaps at least a part of the first space 531, and the non-heating region 53B overlaps at least a part of the second space 532 in the cylindrical axis direction of the capsule 50. In the present embodiment, the first space 531 and the heating region 53A substantially coincide with each other, and the second space 532 and the non-heating region 53B substantially coincide with each other in the cylindrical axis direction of the capsule 50.

(Configuration of Aerosol Inhaler During Use)

The aerosol inhaler 1 having the above-described configuration is used in a state in which the cartridge cover 20, the capsule holder 30, the cartridge 40, and the capsule 50 are attached to the power supply unit 10. In this state, the aerosol flow path 90 is formed in the aerosol inhaler 1 by at least the first aerosol flow path 46 provided in the cartridge 40 and the communication hole 33 provided in the bottom wall 32 of the capsule holder 30. When the accommodation chamber 53 is formed in the internal space of the capsule 50 as shown in FIG. 3, the second aerosol flow path 57 provided in the capsule 50 also constitutes a part of the aerosol flow path 90. When the capsule 50 is accommodated in the capsule holder 30 and a space is formed between the bottom wall of the capsule holder 30 and the bottom portion of the capsule 50, the space formed between the bottom wall of the capsule holder 30 and the bottom portion of the capsule 50 also constitutes a part of the aerosol flow path 90. The aerosol flow path 90 connects the heating chamber 43 of the cartridge 40 and the accommodation chamber 53 of the capsule 50, and is used to convey the aerosol 72 generated in the heating chamber 43 from the heating chamber 43 to the accommodation chamber 53.

When a user performs an inhaling operation through the mouthpiece 58 during use of the aerosol inhaler 1, air flowing in from an air intake port (not shown) provided in the power supply unit case 11 is taken into the heating chamber 43 of the cartridge 40 from the air supply portion 13 provided on the top surface 11a of the power supply unit case 11, as indicated by an arrow B in FIG. 3. Then, the first load 45 generates heat, the aerosol source 71 held by the wick 44 is heated, and the aerosol source 71 heated by the first load 45 is vaporized and/or atomized in the heating chamber 43. The aerosol source 71 vaporized and/or atomized by the first load 45 aerosolizes the air taken into the heating chamber 43 from the air supply portion 13 of the power supply unit case 11 as a dispersion medium. The aerosol source 71 vaporized and/or atomized in the heating chamber 43 and the air taken into the heating chamber 43 from the air supply portion 13 of the power supply unit case 11 flow through the first aerosol flow path 46 from the first end portion 461 of the first aerosol flow path 46 communicating with the heating chamber 43 to the second end portion 462 of the first aerosol flow path 46 while the aerosol source 71 and the air are further aerosolized. The aerosol 72 generated in this manner is introduced from the second end portion 462 of the first aerosol flow path 46, passes through the communication hole 33 provided in the bottom wall 32 of the capsule holder 30, and then is introduced into the accommodation chamber 53 through the inlet portion 54 of the capsule 50. According to the embodiment, before the aerosol 72 is introduced into the accommodation chamber 53, the aerosol 72 flows through the second aerosol flow path 57 provided in the capsule 50 or flows through the space formed between the bottom wall of the capsule holder 30 and the bottom portion of the capsule 50.

The aerosol 72 introduced into the accommodation chamber 53 through the inlet portion 54 passes through the flavor source 52 accommodated in the first space 531 when the aerosol 72 flows through the accommodation chamber 53 in the first direction X of the aerosol inhaler 1 from the inlet portion 54 to the outlet portion 55, so that a flavor component from the flavor source 52 is added to the aerosol 72.

In this manner, the aerosol 72 flows through the accommodation chamber 53 from the inlet portion 54 to the outlet portion 55 in the first direction X of the aerosol inhaler 1. Therefore, in the accommodation chamber 53, a flow direction of the aerosol 72 in which the aerosol 72 flows from the inlet portion 54 to the outlet portion 55 is the cylindrical axis direction of the capsule 50, and is the first direction X of the aerosol inhaler 1 in the present embodiment.

Further, during use of the aerosol inhaler 1, the second load 34 provided in the capsule holder 30 generates heat to heat the heating region 53A of the accommodation chamber 53. Accordingly, the flavor source 52 accommodated in the first space 531 of the accommodation chamber 53 and the aerosol 72 flowing through the heating region 53A of the accommodation chamber 53 are heated.

In order to increase an amount of a flavor component to be added to aerosol in the aerosol inhaler 1, it is found from experiments that it is effective to increase an amount of aerosol generated from the aerosol source 71 and increase a temperature of the flavor source 52. It can be said that a phenomenon in which the amount of the flavor component to be added to the aerosol increases as the amount of the aerosol generated from the aerosol source 71 increases is because the amount of the flavor component accompanying the aerosol passing through the flavor source 52 increases as the amount of aerosol increases. It can be said that a phenomenon in which the amount of the flavor component to be added to the aerosol increases as the temperature of the flavor source 52 increases is because the flavor source 52 and a flavor added to the flavor source 52 are more likely to be entrained by the aerosol as the temperature of the flavor source 52 increases.

Here, adsorption of the menthol 80 to the flavor source 52 inside the capsule 50 will be described in detail. The cigarette granules 521 constituting the flavor source 52 are fairly larger than molecules of the menthol 80, and function as an adsorbent of the menthol 80 which is an adsorbate. The menthol 80 is adsorbed to the cigarette granules 521 by chemical adsorption, and is also adsorbed to the cigarette granules 521 by physical adsorption. The chemical adsorption can be caused by covalent bonding between outermost shell electrons in molecules constituting the cigarette granules 521 and outermost shell electrons in molecules constituting the menthol 80. The physical adsorption may be caused by a Van der Waals force acting between surfaces of the cigarette granules 521 and surfaces of the menthol 80. As an adsorption amount of the menthol 80 to the cigarette granules 521 increases, the cigarette granules 521 and the menthol 80 are brought into a state referred to as an adsorption equilibrium state. In the adsorption equilibrium state, an amount of the menthol 80 newly adsorbed to the cigarette granules 521 is equal to an amount of the menthol 80 desorbed from the cigarette granules 521. That is, even when the menthol 80 is newly supplied to the cigarette granules 521, an apparent adsorption amount does not change. Not only the cigarette granules 521 and the menthol 80, but also the adsorption amount in the adsorption equilibrium state decreases as temperatures of the adsorbent and the adsorbate increase. It should be noted that both chemical adsorption and physical adsorption proceed in a manner in which adsorption sites at interfaces of the cigarette granules 521 are occupied by the menthol 80, and an adsorption amount of the menthol 80 when the adsorption sites are filled up is referred to as a saturated adsorption amount. It is easily understood that an adsorption amount in the adsorption equilibrium state described above is smaller than the saturated adsorption amount.

As described above, in general, as the temperature of the flavor source 52 increases, the adsorption amount of the menthol 80 to the cigarette granules 521 in the adsorption equilibrium state between the cigarette granules 521 and the menthol 80 decreases. Therefore, when the flavor source 52 is heated by the second load 34 and the temperature of the flavor source 52 increases, the adsorption amount of the menthol 80 adsorbed to the cigarette granules 521 is reduced, and a part of the menthol 80 adsorbed to the cigarette granules 521 is desorbed.

The aerosol 72 containing the menthol 80 aerosolized and derived from the aerosol source 71 and the menthol 80 aerosolized and derived from the flavor source 52 flows through the second space 532, are discharged to the outside of the accommodation chamber 53 from the outlet portion 55, and are supplied to a mouth of a user from the mouthpiece 58.

(Details of Power Supply Unit)

Next, the power supply unit 10 will be described in detail with reference to FIG. 6. As shown in FIG. 6, in the power supply unit 10, the DC/DC converter 66 that is an example of a voltage converter capable of converting an output voltage of the power supply 61 and applying the converted output voltage to the first load 45 is connected between the first load 45 and the power supply 61 in a state in which the cartridge 40 is attached to the power supply unit 10. The MCU 63 is connected between the DC/DC converter 66 and the power supply 61. The second load 34 is connected between the MCU 63 and the DC/DC converter 66 in a state in which the cartridge 40 is attached to the power supply unit 10. As described above, in the power supply unit 10, the second load 34 and a series circuit of the DC/DC converter 66 and the first load 45 are connected in parallel to the power supply 61 in a state in which the cartridge 40 is attached.

The DC/DC converter 66 is controlled by the MCU 63 and is a step-up circuit capable of stepping up an input voltage (for example, an output voltage of the power supply 61) and outputting the stepped-up voltage. The DC/DC converter 66 can apply an input voltage or a voltage obtained by stepping up the input voltage to the first load 45. Since electric power supplied to the first load 45 can be adjusted by changing a voltage applied to the first load 45 by the DC/DC converter 66, an amount of the aerosol source 71 vaporized or atomized by the first load 45 can be controlled. The DC/DC converter 66 is, for example, a switching regulator that converts an input voltage into a desired output voltage by controlling an on and off time of a switching element while monitoring an output voltage. When a switching regulator is used as the DC/DC converter 66, an input voltage can be output without being stepped up by controlling the switching element. The DC/DC converter 66 is not limited to a step-up type (boost converter) described above, and may be a step-down type (buck converter) or a step-up and step-down type converter. For example, the DC/DC converter 66 may be used to set a voltage applied to the first load 45 to V1 to V5 [V] to be described later.

The MCU 63 is configured to acquire a temperature of the second load 34, a temperature of the flavor source 52, or a temperature of the accommodation chamber 53 (that is, a second temperature T2 to be described later) in order to control discharging to the second load 34 using a switch (not shown). The MCU 63 is preferably configured to acquire a temperature of the first load 45. The temperature of the first load 45 can be used to prevent overheating of the first load 45 and the aerosol source 71 and highly control an amount of the aerosol source 71 vaporized or atomized by the first load 45.

The voltage sensor 671 measures a voltage value applied to the first load 45 and outputs the voltage value. The current sensor 672 measures a current value flowing through the first load 45 and outputs the current value. An output of the voltage sensor 671 and an output of the current sensor 672 are input to the MCU 63. The MCU 63 acquires a resistance value of the first load 45 based on the output of the voltage sensor 671 and the output of the current sensor 672, and acquires a temperature of the first load 45 based on the acquired resistance value of the first load 45. Specifically, for example, the voltage sensor 671 and the current sensor 672 may be implemented by an operational amplifier and an analog-to-digital converter. At least a part of the voltage sensor 671 and/or at least a part of the current sensor 672 may be provided inside the MCU 63.

In a case where a constant current flows through the first load 45 when the resistance value of the first load 45 is acquired, the current sensor 672 in the first temperature detection element 67 is unnecessary. Similarly, in a case where a constant voltage is applied to the first load 45 when the resistance value of the first load 45 is acquired, the voltage sensor 671 in the first temperature detection element 67 is unnecessary.

The voltage sensor 681 measures a voltage value applied to the second load 34 and outputs the voltage value. The current sensor 682 measures a current value flowing through the second load 34 and outputs the current value. An output of the voltage sensor 681 and an output of the current sensor 682 are input to the MCU 63. The MCU 63 acquires a resistance value of the second load 34 based on the output of the voltage sensor 681 and the output of the current sensor 682, and acquires a temperature of the second load 34 based on the acquired resistance value of the second load 34.

Here, the temperature of the second load 34 does not strictly coincide with the temperature of the flavor source 52 heated by the second load 34, and can be regarded as substantially the same as the temperature of the flavor source 52. The temperature of the second load 34 does not strictly coincide with the temperature of the accommodation chamber 53 of the capsule 50 heated by the second load 34, and can be regarded as substantially the same as the temperature of the accommodation chamber 53 of the capsule 50. Therefore, the second temperature detection element 68 can also be used as a temperature detection element for detecting the temperature of the flavor source 52 or the temperature of the accommodation chamber 53 of the capsule 50. Specifically, for example, the voltage sensor 681 and the current sensor 682 may be implemented by an operational amplifier and an analog-to-digital converter. At least a part of the voltage sensor 681 and/or at least a part of the current sensor 682 may be provided inside the MCU 63.

In a case where a constant current flows through the second load 34 when the resistance value of the second load 34 is acquired, the current sensor 682 in the second temperature detection element 68 is unnecessary. Similarly, in a case where a constant voltage is applied to the second load 34 when the resistance value of the second load 34 is acquired, the voltage sensor 681 in the second temperature detection element 68 is unnecessary.

Even when the second temperature detection element 68 is provided in the capsule holder 30 or the cartridge 40, the temperature of the second load 34, the temperature of the flavor source 52, or the temperature of the accommodation chamber 53 of the capsule 50 can be acquired based on an output of the second temperature detection element 68, and the second temperature detection element 68 is preferably provided in the power supply unit 10 with a lowest replacement frequency in the aerosol inhaler 1. In this manner, it is possible to reduce the manufacturing cost of the capsule holder 30 and the cartridge 40 and provide the capsule holder 30 and the cartridge 40 that are more frequently replaced than the power supply unit 10 to a user at low cost.

FIG. 7 is a diagram showing a specific example of the power supply unit 10 shown in FIG. 6. FIG. 7 shows a specific example of a configuration in which the current sensor 682 is not provided in the second temperature detection element 68 and the current sensor 672 is not provided in the first temperature detection element 67.

As shown in FIG. 7, the power supply unit 10 includes the power supply 61, the MCU 63, the LDO regulator 65, a parallel circuit C1 including a switch SW1 and a series circuit of a resistance element R1 and a switch SW2 connected in parallel to the switch SW1, a parallel circuit C2 including a switch SW3 and a series circuit of a resistance element R2 and a switch SW4 connected in parallel to the switch SW3, an operational amplifier OP1 and an analog-to-digital converter ADC 1 that constitute the voltage sensor 671, and an operational amplifier OP2 and an analog-to-digital converter ADC2 that constitute the voltage sensor 681. At least one of the operational amplifier OP1 and the operational amplifier OP2 may be provided inside the MCU 63.

The resistance element described in the present specification may be an element having a fixed electric resistance value, and is, for example, a resistor, a diode, or a transistor. In the example shown in FIG. 7, the resistance element R1 and the resistance element R2 are a resistor.

The switch described in the present specification is a switching element such as a transistor that switches a wiring path between disconnection and conduction, and for example, the switch may be a bipolar transistor such as an insulated gate bipolar transistor (IGBT) or a field effect transistor such as a metal-oxide-semiconductor field-effect transistor (MOSFET). In addition, the switch described in the present specification may be implemented by a relay. In the example shown in FIG. 7, switches SW1 to SW4 are a transistor.

The LDO regulator 65 is connected to a main positive busbar LU connected to a positive electrode of the power supply 61. The MCU 63 is connected to the LDO regulator 65 and a main negative busbar LD connected to a negative electrode of the power supply 61. The MCU 63 is also connected to each of the switches SW1 to SW4, and controls opening and closing of the switches SW1 to SW4. The LDO regulator 65 steps down a voltage from the power supply 61 and outputs the stepped-down voltage. An output voltage V0 of the LDO regulator 65 is also used as an operation voltage of each of the MCU 63, the DC/DC converter 66, the operational amplifier OP1, the operational amplifier OP2, and the notification unit 16. Alternatively, at least one of the MCU 63, the DC/DC converter 66, the operational amplifier OP1, the operational amplifier OP2, and the notification unit 16 may use the output voltage of the power supply 61 as an operation voltage. Alternatively, at least one of the MCU 63, the DC/DC converter 66, the operational amplifier OP1, the operational amplifier OP2, and the notification unit 16 may use a voltage output from a regulator (not shown) other than the LDO regulator 65 as an operation voltage. The output voltage of the regulator may be different from V0 or may be the same as V0.

The DC/DC converter 66 is connected to the main positive busbar LU. The first load 45 is connected to the main negative busbar LD. The parallel circuit C1 is connected to the DC/DC converter 66 and the first load 45.

The parallel circuit C2 is connected to the main positive busbar LU. The second load 34 is connected to the parallel circuit C2 and the main negative busbar LD.

A non-inverting input terminal of the operational amplifier OP1 is connected to a connection node between the parallel circuit C1 and the first load 45. An inverting input terminal of the operational amplifier OP1 is connected to an output terminal of the operational amplifier OP1 and the main negative busbar LD via resistance elements.

A non-inverting input terminal of the operational amplifier OP2 is connected to a connection node between the parallel circuit C2 and the second load 34. An inverting input terminal of the operational amplifier OP2 is connected to an output terminal of the operational amplifier OP2 and the main negative busbar LD via resistance elements.

The analog-to-digital converter ADC1 is connected to the output terminal of the operational amplifier OP1. The analog-to-digital converter ADC2 is connected to the output terminal of the operational amplifier OP2. The analog-to-digital converter ADC 1 and the analog-to-digital converter ADC2 may be provided outside the MCU 63.

(MCU)

Next, a function of the MCU 63 will be described. The MCU 63 includes a temperature detection unit, an electric power control unit, and a notification control unit as functional blocks implemented by a processor executing a program stored in a ROM.

(Temperature Detection Unit)

The temperature detection unit acquires a first temperature T1 which is a temperature of the first load 45 based on an output of the first temperature detection element 67. The temperature detection unit acquires a second temperature T2 which is a temperature of the second load 34, a temperature of the flavor source 52, or a temperature of the accommodation chamber 53 based on an output of the second temperature detection element 68.

In the case of a circuit example shown in FIG. 7, the temperature detection unit controls the switch SW1, the switch SW3, and the switch SW4 to be in a disconnection state, and controls the DC/DC converter 66 to output a predetermined constant voltage. Further, the temperature detection unit acquires an output value (a voltage value applied to the first load 45) of the analog-to-digital converter ADC 1 in a state in which the switch SW2 is controlled to be in a conductive state, and acquires the first temperature T1 based on the output value.

The non-inverting input terminal of the operational amplifier OP1 may be connected to a terminal of the resistance element R1 at the DC/DC converter 66 side, and the inverting input terminal of the operational amplifier OP1 may be connected to a terminal of the resistance element R1 at the switch SW2 side. In this case, the temperature detection unit controls the switch SW1, the switch SW3, and the switch SW4 to be in a disconnection state, and controls the DC/DC converter 66 to output a predetermined constant voltage. Further, the temperature detection unit can acquire an output value (a voltage value applied to the resistance element R1) of the analog-to-digital converter ADC 1 in a state in which the switch SW2 is controlled to be in a conductive state, and can acquire the first temperature T1 based on the output value.

In the case of the circuit example shown in FIG. 7, the temperature detection unit controls the switch SW1, the switch SW2, and the switch SW3 to be in a disconnection state, and controls an element such as an DC/DC converter (not shown) to output a predetermined constant voltage. Further, the temperature detection unit acquires an output value (a voltage value applied to the second load 34) of the analog-to-digital converter ADC2 in a state in which the switch SW4 is controlled to be in a conductive state, and acquires the second temperature T2 based on the output value.

The non-inverting input terminal of the operational amplifier OP2 may be connected to a terminal of the resistance element R2 at the main positive busbar LU side, and the inverting input terminal of the operational amplifier OP2 may be connected to a terminal of the resistance element R2 at the switch SW4 side. In this case, the temperature detection unit controls the switch SW1, the switch SW2, and the switch SW3 to be in a disconnection state, and controls an element such as an DC/DC converter (not shown) to output a predetermined constant voltage. Further, the temperature detection unit can acquire an output value (a voltage value applied to the resistance element R2) of the analog-to-digital converter ADC2 in a state in which the switch SW4 is controlled to be in a conductive state, and can acquire the second temperature T2 based on the output value.

(Electric Power Control Unit)

The electric power control unit controls discharging from the power supply 61 to the first load 45 (hereinafter, simply referred to as discharging to the first load 45) and discharging from the power supply 61 to the second load 34 (hereinafter, simply referred to as discharging to the second load 34). For example, when the power supply unit 10 has the circuit configuration shown in FIG. 7, the electric power control unit can implement discharging to the first load 45 by setting the switch SW2, the switch SW3, and the switch SW4 to a disconnection state (that is, an OFF state) and setting the switch SW1 to a conductive state (that is, an ON state). In addition, when the power supply unit 10 has the circuit configuration shown in FIG. 7, the electric power control unit can implement discharging to the second load 34 by setting the switch SW1, the switch SW2, and the switch SW4 to a disconnection state and setting the switch SW3 to a conductive state.

When the electric power control unit detects an aerosol generation request from a user based on an output of the inhalation sensor 62 (that is, when the user performs an inhaling operation), the electric power control unit performs discharging to the first load 45 and the second load 34. As a result, the aerosol source 71 is heated by the first load 45 (that is, aerosol is generated) and the flavor source 52 is heated by the second load 34 in response to the aerosol generation request. At this time, the electric power control unit controls discharging to the first load 45 and the second load 34 such that an amount of a flavor component added from the flavor source 52 (hereinafter, simply referred to as a flavor component amount, and for example, a flavor component amount $W_{flavor}$ to be described later) to aerosol (the vaporized and/or atomized aerosol source 71) generated in response to the aerosol generation request converges to a predetermined target amount. The target amount is a value determined as appropriate, and for example, a target range of the flavor component amount may be determined as appropriate, and a median value in the target range may be determined as the target amount. Accordingly, the flavor component amount converges to the target amount, so that the flavor component amount can converge in the target range having a certain range. A unit of the flavor component amount and the target amount may be weight (for example, [mg]).

As described above, the cartridge 40 mounted in the aerosol inhaler 1 includes a menthol type cartridge in which the aerosol source 71 contains menthol and a regular type cartridge in which the aerosol source 71 does not contain menthol. Similarly, the capsule 50 mounted in the aerosol inhaler 1 includes a menthol type capsule in which the flavor source 52 contains menthol and a regular type capsule in which the flavor source 52 does not contain menthol.

Therefore, the aerosol inhaler 1 may be used in a state in which at least one of the mounted cartridge 40 and the capsule 50 is a menthol type and a state in which both the mounted cartridge 40 and the capsule 50 are a regular type. In other words, the aerosol inhaler 1 may be used in a state in which at least one of the aerosol source 71 and the flavor source 52 contains menthol and a state in which neither the aerosol source 71 nor the flavor source 52 contains menthol.

In such an aerosol inhaler 1, it is preferable to appropriately control discharging to the first load 45 and the second load 34 in accordance with a target containing (or not containing) menthol. Therefore, the MCU 63 is configured to execute a flavor determination for determining whether the aerosol source 71 and the flavor source 52 contain menthol before generation of aerosol to which a flavor of the flavor source 52 is to be imparted (hereinafter, simply referred to as aerosol).

Here, a time before generation of aerosol to which a flavor of the flavor source 52 is to be imparted (hereinafter, also simply referred to as before generation of aerosol) may be a time in which power supply of the aerosol inhaler 1 is turned on and discharging to the first load 45 in response to an aerosol generation request is not performed. For example, before generation of aerosol corresponds to a time from when the power supply of the aerosol inhaler 1 is turned on up to when a first time inhaling operation is performed, or a time from when an inhaling operation is ended up to when a next inhaling operation is performed.

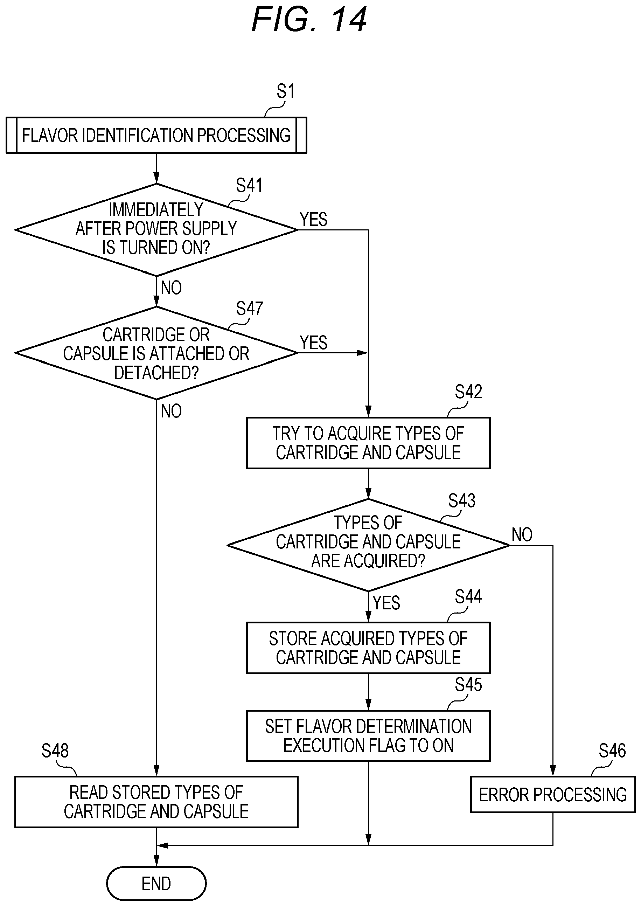

The MCU 63 executes the flavor determination by, for example, acquiring information indicating whether the aerosol source 71 and the flavor source 52 contain menthol. That is, the flavor determination can be implemented by acquiring information indicating whether the aerosol source 71 and the flavor source 52 contain menthol. Details of acquisition of the information will be described later, and for example, the information indicating whether the aerosol source 71 and the flavor source 52 contain menthol can be acquired based on an operation on the operation unit 15, can be read from a storage medium provided in the cartridge 40 or the like, or can be acquired based on detection of a specific physical quantity of the cartridge 40 or the like. For example, the flavor determination can be implemented by the MCU 63 executing a flavor identification processing (to be described later) shown in FIG. 14.

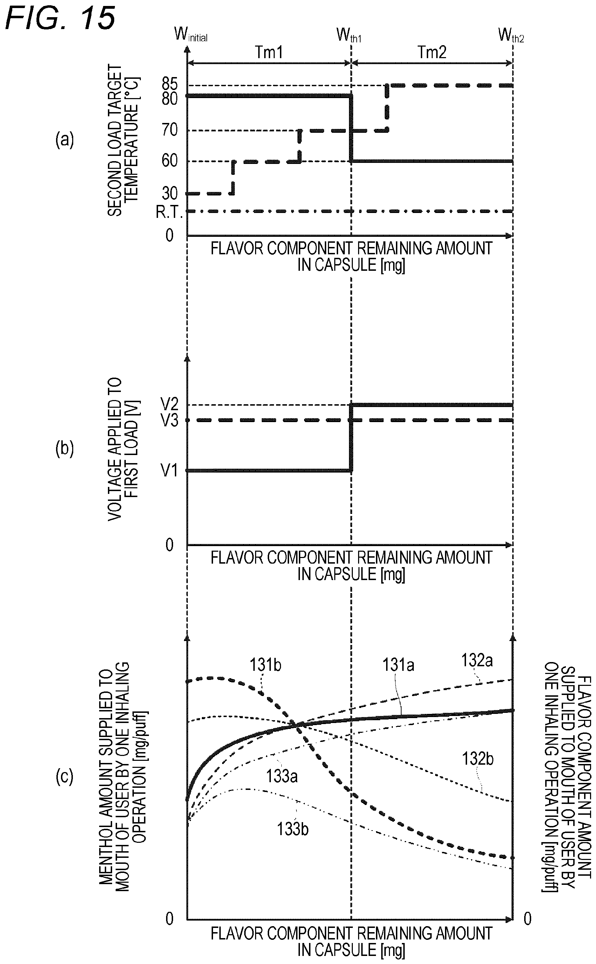

The electric power control unit controls discharging to the first load 45 and the second load 34 based on a result of the flavor determination executed by the MCU 63. For example, it is assumed that information indicating that at least one of the aerosol source 71 and the flavor source 52 contains menthol is acquired by the flavor determination. In this case, the electric power control unit sets a discharging mode for controlling discharging to the first load 45 and the second load 34 to a menthol mode. The electric power control unit controls discharging to the first load 45 and the second load 34 in the menthol mode. An example of a mode of discharging to the first load 45 and the second load 34 in the menthol mode will be described later with reference to FIG. 15 and the like.

It is assumed that information indicating that neither the aerosol source 71 nor the flavor source 52 contains menthol is acquired by the flavor determination. In this case, the electric power control unit sets the discharging mode to a regular mode. The electric power control unit controls discharging to the first load 45 and the second load 34 in the regular mode. A mode of discharging to the first load 45 and the second load 34 in the regular mode is different from the mode of discharging to the first load 45 and the second load 34 in the menthol mode. An example of the mode of discharging to the first load 45 and the second load 34 in the regular mode will be described later with reference to FIG. 15 and the like.

In this manner, the MCU 63 causes the electric power control unit to control discharging to the first load 45 and the second load 34 in accordance with a target containing (or not containing) menthol between the aerosol source 71 and the flavor source 52. Accordingly, the MCU 63 can appropriately control discharging to the first load 45 and the second load 34 in accordance with the target containing (or not containing) menthol.

The target containing (or not containing) menthol can be changed by attaching and detaching the cartridge 40 or the capsule 50. In other words, in a case where the cartridge 40 or the capsule 50 is not attached or detached after the flavor determination, it is considered that the target containing (or not containing) menthol is not changed from when the flavor determination is executed.

Therefore, in a case where the cartridge 40 or the capsule 50 is not attached or detached after the latest flavor determination, when discharging to the first load 45 and the second load 34 is controlled based on a result of the latest flavor determination without executing the flavor determination again before generation of aerosol, it is considered that discharging to the first load 45 and the second load 34 can be appropriately controlled.

The MCU 63 is configured to detect attachment and detachment of the cartridge 40 and the capsule 50 according to any method (an example will be described later). Then, the MCU 63 executes the flavor determination before generation of aerosol in a case where attachment and detachment of the cartridge 40 or the capsule 50 are detected. In this manner, when the flavor determination is executed before generation of aerosol, the MCU 63 controls discharging to the first load 45 or the like based on a result of the flavor determination to generate aerosol.

On the other hand, the MCU 63 does not execute the flavor determination before generation of aerosol in a case where attachment and detachment of the cartridge 40 or the capsule 50 are not detected. In this manner, when the flavor determination is not executed before generation of aerosol, the MCU 63 controls discharging to the first load 45 or the like based on a result of the latest flavor determination to generate aerosol.

In this manner, it is possible to appropriately control discharging to the first load 45 or the like in accordance with a target containing (or not containing) menthol while reducing the number of times of executing the flavor determination and reducing a processing load and power consumption of the MCU 63 due to the execution of the flavor determination.

In the present specification and the like, a current flavor determination executed before generation of aerosol is not included in the latest flavor determination. Hereinafter, the phrase "flavor determination" refers to a current flavor determination executed before generation of aerosol.

(Notification Control Unit)

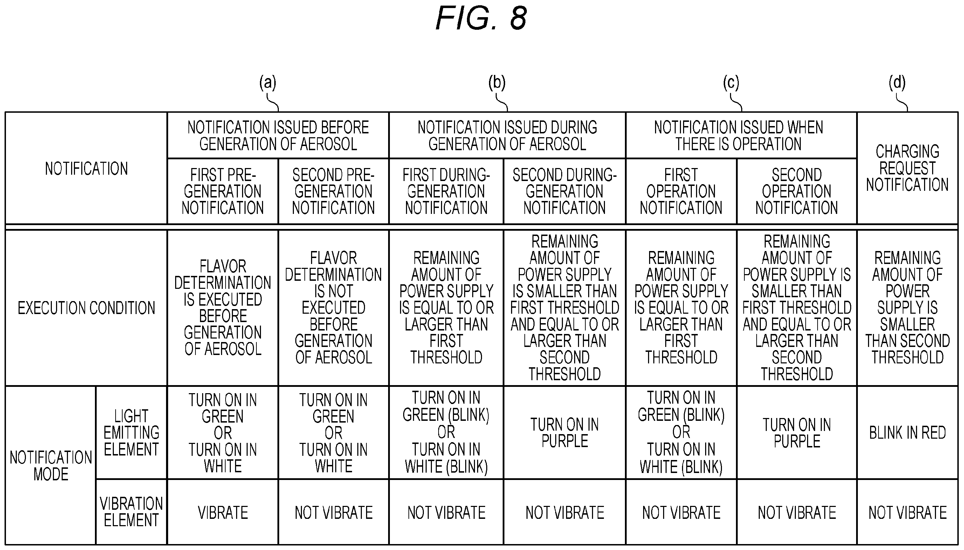

The notification control unit controls the notification unit 16 to notify a user of various kinds of information. Specifically, the notification control unit controls light emission of the light emitting element 161 and vibration of the vibration element 162 so as to notify a user of various kinds of information. Hereinafter, notifications issued by the notification control unit of the MCU 63 will be described with reference to FIG. 8. An operation mode of the notification unit 16 (for example, an emitted light color and a light emitting mode of the light emitting element 161, and whether the vibration element 162 vibrates) in each notification is set in advance by a manufacturer of the aerosol inhaler 1 or the like. The operation mode of the notification unit 16 in each notification may be appropriately changed by a user using the operation unit 15 or the like.

(Notification Issued Before Generation of Aerosol)

As shown in (a) of FIG. 8, the MCU 63 can issue a first pre-generation notification and a second pre-generation notification as notifications issued before generation of aerosol.

(First Pre-generation Notification)

Before generation of aerosol in a case where the flavor determination is executed, the MCU 63 issues the first pre-generation notification for notifying a user of a result of the flavor determination. For example, the MCU 63 issues the first pre-generation notification by causing the light emitting element 161 to emit light in a color set based on the result of the flavor determination (in other words, a color corresponding to the result of the flavor determination) and causing the vibration element 162 to vibrate.

In the present embodiment, the light emitting element 161 is turned on in green or white in the first pre-generation notification. Specifically, when information indicating that at least one of the aerosol source 71 and the flavor source 52 contains menthol is acquired by the flavor determination, the light emitting element 161 is turned on in green in the first pre-generation notification. In other words, when discharging to the first load 45 and the second load 34 is controlled by the menthol mode, the light emitting element 161 is turned on in green in the first pre-generation notification.

On the other hand, when information indicating that neither the aerosol source 71 nor the flavor source 52 contains menthol is acquired by the flavor determination, the light emitting element 161 is turned on in white in the first pre-generation notification. In other words, when discharging to the first load 45 and the second load 34 is controlled by the regular mode, the light emitting element 161 is turned on in white in the first pre-generation notification. In the present specification and the like, turning on the light emitting element 161 refers to that the light emitting element 161 continues to emit light for a certain period of time. It should be noted that green or white described above is merely a specific example of a color for turning on the light emitting element 161 in the first pre-generation notification. The light emitting element 161 may be turned on in any color in the first pre-generation notification as long as the above cases can be distinguished from each other.

In this manner, in a case where the MCU 63 executes the flavor determination before generation of aerosol, the MCU 63 issues the first pre-generation notification, thereby notifying a user of a result of the flavor determination through the light emitting element 161 and the vibration element 162. Accordingly, the result of the flavor determination executed before generation of aerosol can be notified to a user by a plurality of notification units. Therefore, it is possible to notify the user of the result of the flavor determination in an easy-to-understand manner as compared with a case where the result of the flavor determination is notified to the user by a single notification unit. Therefore, the user can easily confirm whether the result of the flavor determination executed before generation of aerosol corresponds to intention of the user. For example, according to the first pre-generation notification, the user can easily confirm whether discharging to the first load 45 and the second load 34 is controlled by the menthol mode or the regular mode in the present embodiment.

The light emitting element 161 issues a notification acting on a sense of vision of a user. The vibration element 162 issues a notification acting on a sense of touch of a user. Therefore, when the first pre-generation notification is issued, the MCU 63 can cause notification units that act on different senses of a user such as a sense of vision and a sense of touch to notify a user of a result of the flavor determination. Accordingly, it is possible to notify the user of the result of the flavor determination in an easy-to-understand manner as compared with a case where the result of the flavor determination is notified to the user by a notification unit that acts on one sense of the user. Therefore, the user can easily confirm whether the result of the flavor determination corresponds to intention of the user.

The MCU 63 can cause a notification unit including the light emitting element 161 that acts on a sense of vision of a user to notify the user of a result of the flavor determination. Accordingly, it is possible to notify the user of the result of the flavor determination in an easy-to-understand manner as compared with a case where the result of the flavor determination is notified to the user by a notification unit that acts on a sense other than a sense of vision of the user. Therefore, the user can easily confirm whether the result of the flavor determination corresponds to intention of the user.

(Second Pre-generation Notification)

Before generation of aerosol in a case where the flavor determination is not executed, the MCU 63 issues the second pre-generation notification for notifying a user of a result of a latest flavor determination. For example, the MCU 63 issues the second pre-generation notification by only causing the light emitting element 161 to emit light in a color set based on the result of the latest flavor determination. That is, the second pre-generation notification is different from the first pre-generation notification in that the vibration element 162 does not vibrate.

That is, similar to the first pre-generation notification, the light emitting element 161 is also turned on in green or white in the second pre-generation notification in the present embodiment. Specifically, when information indicating that at least one of the aerosol source 71 and the flavor source 52 contains menthol is acquired by the latest flavor determination, the light emitting element 161 is turned on in green in the second pre-generation notification. In other words, when discharging to the first load 45 and the second load 34 is controlled by the menthol mode, the light emitting element 161 is turned on in green in the second pre-generation notification.

On the other hand, when information indicating that neither the aerosol source 71 nor the flavor source 52 contains menthol is acquired by the latest flavor determination, the light emitting element 161 is turned on in white in the second pre-generation notification. In other words, when discharging to the first load 45 and the second load 34 is controlled by the regular mode, the light emitting element 161 is turned on in white in the second pre-generation notification. It should be noted that green or white described above is merely a specific example of a color for turning on the light emitting element 161 in the second pre-generation notification. The light emitting element 161 may be turned on in any color in the second pre-generation notification as long as the above cases can be distinguished from each other.

In this manner, in a case where the MCU 63 does not execute the flavor determination before generation of aerosol, the MCU 63 issues the second pre-generation notification, thereby notifying a user of a result of the latest flavor determination through only the light emitting element 161. Accordingly, when the user is notified of the result of the latest flavor determination (for example, when the user is notified of the same contents as that in previous aerosol generation), the notification is simplified, and it is possible to prevent issuing of a notification that may bother the user. In addition, it is also possible to reduce power consumption due to the notification. Further, when the result of the latest flavor determination is notified to the user, the MCU 63 uses the light emitting element 161 that acts on a sense of vision of the user. Therefore, when a notification for notifying the result of the latest flavor determination is simplified, the result of the latest flavor determination can be notified to the user in an easy-to-understand manner.

(Notification Issued During Generation of Aerosol)

As shown in (b) of FIG. 8, the MCU 63 can issue a first during-generation notification and a second during-generation notification as notifications issued during generation of aerosol.

(First During-generation Notification)

The MCU 63 is configured to acquire information related to a remaining amount of the power supply 61. For example, the MCU 63 acquires information indicating an output voltage of the power supply 61 based on an output of a voltage sensor (not shown) that detects the output voltage of the power supply 61, and derives the remaining amount of the power supply 61 based on the output voltage. The MCU 63 acquires information indicating the derived remaining amount of the power supply 61 as information related to the remaining amount of the power supply 61. The present invention is not limited thereto, and the MCU 63 may acquire information related to the remaining amount of the power supply 61 (for example, information indicating the remaining amount of the power supply 61) according to any method.

Then, the MCU 63 issues the first during-generation notification during generation of aerosol in a case where the remaining amount of the power supply 61 is equal to or larger than a first threshold. Here, the first threshold is equal to or smaller than a value corresponding to a fully-charged state of the power supply 61 and is larger than a value corresponding to a discharging ended state of the power supply 61. That is, when the remaining amount of the power supply 61 is equal to or larger than the first threshold, the power supply 61 is in a state in which discharging to the first load 45 and the second load 34 can be performed. In other words, when the remaining amount of the power supply 61 is equal to or larger than the first threshold, the aerosol inhaler 1 is in a state in which aerosol can be generated. The first threshold is set in advance by a manufacturer or the like of the aerosol inhaler 1.

For example, the MCU 63 issues the first during-generation notification by causing the light emitting element 161 to emit light in the same color as a color set based on the result of the flavor determination or the result of the latest flavor determination. The vibration element 162 does not vibrate in the first during-generation notification.

For example, the MCU 63 turns on the light emitting element 161 in green before generation of aerosol based on the result of the flavor determination or the result of the latest flavor determination. In this case, thereafter, when the remaining amount of the power supply 61 is equal to or larger than the first threshold during generation of aerosol, the MCU 63 issues the first during-generation notification in which the light emitting element 161 is turned on in green.

On the other hand, the MCU 63 turns on the light emitting element 161 in white before generation of aerosol based on the result of the flavor determination or the result of the latest flavor determination. In this case, thereafter, when the remaining amount of the power supply 61 is equal to or larger than the first threshold during generation of aerosol, the MCU 63 issues the first during-generation notification in which the light emitting element 161 is turned on in white.

As described above, during generation of aerosol in a case where the remaining amount of the power supply 61 is equal to or larger than the first threshold, the MCU 63 causes the light emitting element 161 to emit light in the same color as the color set based on the result of the flavor determination or the result of the latest flavor determination. As a result, a notification unit (the light emitting element 161) used in a notification for notifying the result of the flavor determination or the result of the latest flavor determination and a notification unit (the light emitting element 161) used in a notification related to the remaining amount of the power supply 61 can be shared. Therefore, it is possible to issue a notification related to the remaining amount of the power supply 61 while preventing an increase in the number of notification units mounted in the aerosol inhaler 1, as compared with a case where a notification unit that issues a notification related to the remaining amount of the power supply 61 is separately provided. A user can appropriately confirm whether the remaining amount of the power supply 61 is equal to or larger than the first threshold and the result of the flavor determination or the latest flavor determination during generation of aerosol. Therefore, convenience of the aerosol inhaler 1 can be improved.

(Second During-generation Notification)

The MCU 63 issues the second during-generation notification during generation of aerosol in a case where the remaining amount of the power supply 61 is smaller than the first threshold and is equal to or larger than a second threshold. Here, the second threshold is smaller than the first threshold and larger than a value corresponding to a discharging ended state of the power supply 61. That is, when the remaining amount of the power supply 61 is smaller than the first threshold and equal to or larger than the second threshold, discharging to the first load 45 and the second load 34 can be performed, but the remaining amount of the power supply 61 is lower than that in a case where the remaining amount of the power supply 61 is equal to or larger than the first threshold. Similar to the first threshold, the second threshold is set in advance by a manufacturer of the aerosol inhaler 1 or the like.

For example, the MCU 63 issues the second during-generation notification by causing the light emitting element 161 to emit light in a color different from the color set based on the result of the flavor determination or the result of the latest flavor determination. Here, the different color is, for example, a constant color regardless of the result of the flavor determination or the result of the latest flavor determination. In the present embodiment, the MCU 63 turns on the light emitting element 161 in purple (that is, a color different from green and white) in the second during-generation notification.

As described above, during generation of aerosol in a case where the remaining amount of the power supply 61 is smaller than the first threshold and equal to or larger than the second threshold, the MCU 63 causes the light emitting element 161 to emit light in a predetermined color different from the color in a case of notifying the result of the flavor determination or the result of the latest flavor determination. As a result, a notification unit (the light emitting element 161) used in a notification for notifying the result of the flavor determination or the result of the latest flavor determination and a notification unit (the light emitting element 161) used in a notification related to the remaining amount of the power supply 61 can be shared. Therefore, it is possible to issue a notification related to the remaining amount of the power supply 61 while preventing an increase in the number of notification units mounted in the aerosol inhaler 1, as compared with a case where a notification unit that issues a notification related to the remaining amount of the power supply 61 is separately provided.

In a case where the remaining amount of the power supply 61 is smaller than the first threshold and equal to or larger than the second threshold, the MCU 63 causes the light emitting element 161 to emit light in a predetermined color (purple in the present embodiment), thereby notifying a user that the remaining amount of the power supply 61 is reduced before the power supply 61 enters the discharging ended state. As a result, the user can be prompted to charge the power supply 61 or the like before the power supply 61 enters the discharging ended state, and convenience of the aerosol inhaler 1 can be improved. In this case, the MCU 63 causes the light emitting element to emit light in a constant color regardless of the result of the flavor determination or the result of the latest flavor determination, so that it is possible to notify a user that the remaining amount of the power supply 61 is reduced in an easy-to-understand manner.

Although the vibration element 162 does not vibrate in the second during-generation notification in the present embodiment, the present invention is not limited thereto. That is, the vibration element 162 may vibrate in the second during-generation notification. In this manner, it is possible to notify the user that the remaining amount of the power supply 61 is reduced by using both the light emitting element 161 and the vibration element 162, and it is possible to further promote the user to charge the power supply 61 or the like.

When the MCU 63 notifies the result of the flavor determination or the result of the latest flavor determination (that is, in the first pre-generation notification and the second pre-generation notification), the MCU 63 may cause the light emitting element 161 to emit light in a first mode in a color (for example, green or white as described above) set based on the result. Here, the first mode may be, for example, a light emitting mode in which luminance of the light emitting element 161 is maintained constant.

On the other hand, the MCU 63 may cause the light emitting element 161 to emit light in a second mode in a color set based on the remaining amount of the power supply 61 during generation of aerosol. Here, the color set based on the remaining amount of the power supply 61 may be, for example, green or white when the remaining amount of the power supply 61 is equal to or larger than the first threshold, purple when the remaining amount of the power supply 61 is smaller than the first threshold and equal to or larger than the second threshold, and red when the remaining amount of the power supply 61 is smaller than the second threshold. Here, the second mode may be, for example, a light emitting mode in which luminance of the light emitting element 161 changes. The MCU 63 can cause the light emitting element 161 to emit light in the second mode by controlling the luminance of the light emitting element 161 using any control method such as a pulse width modulation (PWM) method.

As described above, the light emitting modes of the light emitting element 161 in a notification for notifying the result of the flavor determination or the result of the latest flavor determination and a notification related to the remaining amount of the power supply during generation of aerosol are different from each other, so that notifications can be issued using various light emitting modes of the light emitting element 161. Therefore, marketability of the aerosol inhaler 1 can be improved.

(Notification Issued When Operation Unit is Operated)

As shown in (c) of FIG. 8, the MCU 63 can issue a first operation notification and a second operation notification as notifications issued when the operation unit 15 is operated.

(First Operation Notification)

In a case where the remaining amount of the power supply 61 is equal to or larger than the first threshold, in response to the operation unit 15 being operated, the MCU 63 issues the first operation notification. For example, similar to the first during-generation notification, the MCU 63 issues the first operation notification by causing the light emitting element 161 to emit light in the same color as the color set based on the result of the flavor determination or the result of the latest flavor determination. For example, the vibration element 162 does not vibrate in the first operation notification.

For example, the MCU 63 turns on the light emitting element 161 in green based on the result of the flavor determination or the result of the latest flavor determination at the time of latest light emission of the light emitting element 161 before the operation unit 15 is operated. In this case, in response to the operation unit 15 being operated thereafter, in a case where the remaining amount of the power supply 61 is equal to or larger than the first threshold, the MCU 63 issues the first operation notification in which the light emitting element 161 is turned on in green.

On the other hand, the MCU 63 turns on the light emitting element 161 in white based on the result of the flavor determination or the result of the latest flavor determination at the time of the latest light emission of the light emitting element 161 before the operation unit 15 is operated. In this case, in response to the operation unit 15 being operated thereafter, in a case where the remaining amount of the power supply 61 is equal to or larger than the first threshold, the MCU 63 issues the first operation notification in which the light emitting element 161 is turned on in white.

As described above, when the operation unit 15 is operated in a case where the remaining amount of the power supply 61 is equal to or larger than the first threshold, the MCU 63 causes the light emitting element 161 to emit light in the same color as the color set based on the result of the flavor determination or the result of the latest flavor determination. As a result, a notification unit (the light emitting element 161) used in a notification for notifying the result of the flavor determination or the result of the latest flavor determination and a notification unit (the light emitting element 161) used in a notification related to the remaining amount of the power supply 61 can be shared. Therefore, it is possible to issue a notification related to the remaining amount of the power supply 61 while preventing an increase in the number of notification units mounted in the aerosol inhaler 1, as compared with a case where a notification unit that issues a notification related to the remaining amount of the power supply 61 is separately provided. A user can appropriately confirm whether the remaining amount of the power supply 61 is equal to or larger than the first threshold and the result of the flavor determination or the latest flavor determination by operating the operation unit 15 at a desired time. Therefore, convenience of the aerosol inhaler 1 can be improved.

(Second Operation Notification)

In a case where the remaining amount of the power supply 61 is smaller than the first threshold and equal to or larger than the second threshold, in response to the operation unit 15 being operated, the MCU 63 issues the second operation notification. For example, similar to the second during-generation notification, the MCU 63 issues the second operation notification by causing the light emitting element 161 to emit light in a color different from the color set based on the result of the flavor determination or the result of the latest flavor determination (for example, a constant purple color regardless of the result of the flavor determination or the like). For example, the vibration element 162 does not vibrate in the second operation notification.

As described above, when the operation unit 15 is operated in a case where the remaining amount of the power supply 61 is smaller than the first threshold and is equal to or larger than the second threshold, the MCU 63 causes the light emitting element 161 to emit light in a predetermined color different from the color in a case of notifying the result of the flavor determination or the result of the latest flavor determination. As a result, a notification unit (the light emitting element 161) used in a notification for notifying the result of the flavor determination or the result of the latest flavor determination and a notification unit (the light emitting element 161) used in a notification related to the remaining amount of the power supply 61 can be shared. Therefore, it is possible to issue a notification related to the remaining amount of the power supply 61 while preventing an increase in the number of notification units mounted in the aerosol inhaler 1, as compared with a case where a notification unit that issues a notification related to the remaining amount of the power supply 61 is separately provided. A user can appropriately confirm whether the remaining amount of the power supply 61 is smaller than the first threshold by operating the operation unit 15 at a desired time. Therefore, convenience of the aerosol inhaler 1 can be improved.

(Charging Request Notification)

As shown in (d) of FIG. 8, when the remaining amount of the power supply 61 is smaller than the second threshold and is equal to or larger than the value corresponding to a discharging ended state of the power supply 61, the MCU 63 issues a charging request notification. That is, in a case where the remaining amount of the power supply 61 is smaller than the second threshold and is equal to or larger than the value corresponding to the discharging ended state of the power supply 61, discharging to the first load 45 and the second load 34 can be performed, but the remaining amount of the power supply 61 is further reduced as compared with a case where the remaining amount of the power supply 61 is equal to or larger than the second threshold.

For example, in a case where the remaining amount of the power supply 61 is smaller than the second threshold and is equal to or larger than the value corresponding to the discharging ended state of the power supply 61, the MCU 63 issues the charging request notification by causing the light emitting element 161 to emit light in a predetermined color during an inhaling operation of a user. A color of light emitted from the light emitting element 161 in response to the charging request notification is different from, for example, the color (green or white in the present embodiment) set based on the result of the flavor determination or the result of the latest flavor determination, and is also different from the color (purple in the present embodiment) of light emitted during generation of aerosol in a case where the remaining amount of the power supply 61 is equal to or larger than the first threshold and in a case where the remaining amount of the power supply 61 is equal to or larger than the second threshold. The color of light emitted from the light emitting element 161 in response to the charging request notification is, for example, a constant color regardless of the result of the flavor determination or the result of the latest flavor determination. In the present embodiment, the MCU 63 causes the light emitting element 161 to blink in red in the charging request notification. In the present specification and the like, blinking the light emitting element 161 refers to intermittently turning-on (light emission) and turning-off of the light emitting element 161 are repeated for a certain period of time.

A timing of issuing the charging request notification is not limited to a timing during an inhaling operation of a user, and may be, for example, a timing when the operation unit 15 is operated. That is, in a case where the remaining amount of the power supply 61 is smaller than the second threshold and is equal to or larger than the value corresponding to the discharging ended state of the power supply 61, in response to the operation unit 15 being operated, the MCU 63 issues the charging request notification.

As described above, in a case where the remaining amount of the power supply 61 is smaller than the second threshold and equal to or larger than the value corresponding to the discharging ended state, the MCU 63 causes the light emitting element 161 to emit light in a color different from that in a case of issuing other notifications. As a result, the MCU 63 can notify a user that the remaining amount of the power supply 61 is further reduced as compared with a case where the remaining amount of the power supply 61 is equal to or larger than the second threshold before the power supply 61 enters the discharging ended state. Therefore, the user can be prompted to charge the power supply 61 or the like before the power supply 61 enters the discharging ended state, and convenience of the aerosol inhaler 1 can be improved. In this case, the MCU 63 causes the light emitting element to emit light in a constant color regardless of the result of the flavor determination or the result of the latest flavor determination, so that it is possible to notify a user that the remaining amount of the power supply 61 is further reduced in an easy-to-understand manner.

Although the vibration element 162 does not vibrate in the charging request notification in the present embodiment, the present invention is not limited thereto. That is, the vibration element 162 may vibrate in the charging request notification. In this manner, it is possible to notify the user that the remaining amount of the power supply 61 is further reduced by using both the light emitting element 161 and the vibration element 162.

(First Example of Specific Notification in Aerosol Inhaler 1)

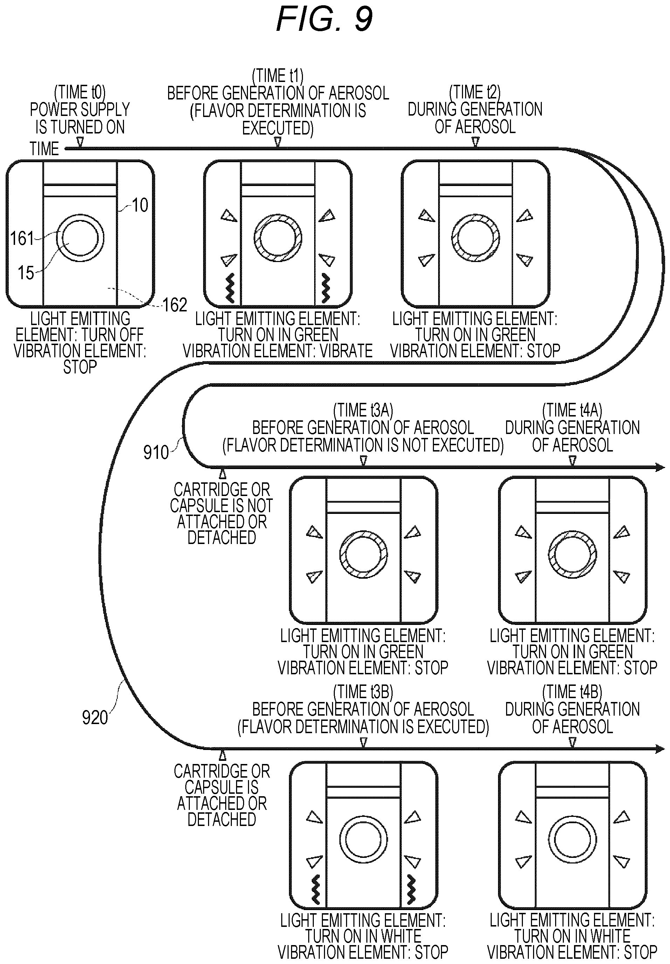

Next, a specific notification example in the aerosol inhaler 1 will be described with reference to FIG. 9. In FIG. 9, reference numerals for respective components of the aerosol inhaler 1 are shown only in a part corresponding to a time t0. That is, in FIG. 9, reference numerals for respective components of the aerosol inhaler 1 are omitted in parts corresponding to times other than the time t0, and the reference numerals in these parts are the same as those in the part corresponding to the time t0. In times shown in FIG. 9, it is assumed that the remaining amount of the power supply 61 is equal to or larger than the first threshold (that is, the remaining amount of the power supply 61 is sufficient).

An arrow denoted by a reference numeral 910 in FIG. 9 represents a first example of a specific notification in the aerosol inhaler 1. An arrow denoted by a reference numeral 920 in FIG. 9 represents a second example of a specific notification in the aerosol inhaler 1. Hereinafter, first, the first example of a specific notification in the aerosol inhaler 1 will be described.

The time t0 is a time in which power supply of the aerosol inhaler 1 is turned off. At the time t0, the MCU 63 does not issue any notification in the aerosol inhaler 1. Therefore, at the time t0, the light emitting element 161 is turned off, and the vibration element 162 is stopped.

A time t1 is a time in which the power supply of the aerosol inhaler 1 is turned on after the time t0. At the time 11, the MCU 63 executes the flavor determination and issues the first pre-generation notification based on a result of the flavor determination. Here, the MCU 63 determines that at least one of the aerosol source 71 and the flavor source 52 contains menthol as the result of the flavor determination. Therefore, at the time 11, the MCU 63 issues the first pre-generation notification in which the light emitting element 161 is turned on in green and the vibration element 162 vibrates.

A time t2 is a time in which the aerosol inhaler 1 whose power supply is turned on at the time t1 is generating aerosol. As described above, the remaining amount of the power supply 61 at the time t2 is equal to or larger than the first threshold. In this manner, the MCU 63 issues the first during-generation notification at the time t2. Here, the MCU 63 issues the first during-generation notification in which the light emitting element 161 is turned on in green in a similar manner to that at the time t1. As described above, the vibration element 162 does not vibrate in the first during-generation notification. Therefore, the vibration element 162 is stopped at the time t2.

A time t3A is a time after generation of aerosol performed in the time t2 is ended and before next generation of aerosol. In the first example, it is assumed that the cartridge 40 and the capsule 50 are not attached or detached from the time t2 to the time t3A. In this manner, at the time t3A, the MCU 63 issues the second pre-generation notification based on a result of the latest flavor determination executed at the time t1 without executing the flavor determination again. Here, the MCU 63 issues the second pre-generation notification in which the light emitting element 161 is turned on in green in a similar manner to that at the time t1. As described above, the vibration element 162 does not vibrate in the second pre-generation notification. Therefore, the vibration element 162 is stopped at the time t3A.

A time t4A is a time in which generation of aerosol is started after the time t3A. As described above, the remaining amount of the power supply 61 at the time t4A is equal to or larger than the first threshold. In this manner, at the time t4A, the MCU 63 issues the first during-generation notification. Here, the MCU 63 issues the first during-generation notification in which the light emitting element 161 is turned on in green in a similar manner to that at the time t3A. As described above, the vibration element 162 does not vibrate in the first during-generation notification. Therefore, the vibration element 162 is stopped at the time t4A.

(Second Example of Specific Notification in Aerosol inhaler 1)

Next, a second example of a specific notification in the aerosol inhaler 1 will be described. The second example is different from the first example in that the cartridge 40 or the capsule 50 is attached or detached after the time t2. In the following description of the second example, description of the same parts as those in the first example will be omitted as appropriate.

A time t3B is a time after generation of aerosol performed in the time t2 is ended and before next generation of aerosol. In the second example, it is assumed that the cartridge 40 and the capsule 50 are attached or detached from the time t2 to the time t3B. In this manner, at the time t3B, the MCU 63 executes the flavor determination again, and issues the first pre-generation notification based on a result of the flavor determination. Here, the MCU 63 determines that neither the aerosol source 71 nor the flavor source 52 contains menthol as the result of the flavor determination. Therefore, at the time t3B, the MCU 63 issues the first pre-generation notification in which the light emitting element 161 is turned on in white and the vibration element 162 vibrates.

A time t4B is a time in which generation of aerosol is started after the time t3B. As described above, the remaining amount of the power supply 61 at the time t4B is equal to or larger than the first threshold. In this manner, at the time t4B, the MCU 63 issues the first during-generation notification. Here, the MCU 63 issues the first during-generation notification in which the light emitting element 161 is turned on in white in a similar manner to that at the time t3B. As described above, the vibration element 162 does not vibrate in the first during-generation notification. Therefore, the vibration element 162 is stopped at the time t4B.

(Various Parameters Used for Generating Aerosol)

Next, specific control of discharging to the first load 45 and the like performed by the MCU 63 in order to generate aerosol will be described. First, various parameters used for control of discharging to the first load 45 and the like performed by the MCU 63 will be described.

A weight [mg] of aerosol that is generated using heating of the first load 45 and that passes through the flavor source 52 (that is, an inner side of the capsule 50) in response to one inhaling operation performed by a user is defined as an aerosol weight $W_{aerosol}$. Electric power required to be supplied to the first load 45 in order to generate aerosol having the aerosol weight $W_{aerosol}$ is defined as atomized electric power $P_{liquid}$. A supply time of the atomized electric power $P_{liquid}$ to the first load 45 is defined as a supply time $t_{sense}$. From the viewpoint of preventing overheating of the first load 45 and the like, a predetermined upper limit value $t_{upper}$ (for example, 2.4 [s]) is set for the supply time $t_{sense}$, and the MCU 63 stops the power supply to the first load 45 regardless of an output value of the inhalation sensor 62 when the supply time $t_{sense}$ reaches the upper limit value $t_{upper}$ (see steps S19 and S20 to be described later).

A weight [mg] of a flavor component contained in the flavor source 52 when a user performs an inhaling operation for $n_{puff}$ times ($n_{puff}$ is a natural number of 0 or more) after the capsule 50 is mounted in the aerosol inhaler 1 is defined as a flavor component remaining amount $W_{capsule}$ ($n_{puff}$). A weight [mg] of a flavor component contained in the flavor source 52 of the new capsule 50 (the capsule 50 in which the inhaling operation is not performed even once after the capsule 50 is mounted), that is, the flavor component remaining amount $W_{capsule}$ ($n_{puff} = 0$) is also defined as $W_{initial}$.

A weight [mg] of a flavor component added to the aerosol passing through the flavor source 52 (that is, the inner side of the capsule 50) in response to one inhaling operation performed by the user is defined as a flavor component amount $W_{flavor}$. A parameter related to a temperature of the flavor source 52 is defined as a temperature parameter $T_{capsule}$. The temperature parameter $T_{capsule}$ is a parameter indicating the second temperature T2 described above, and is, for example, a parameter indicating a temperature of the second load 34.

It is found from experiments that the flavor component amount $W_{flavor}$ depends on the flavor component remaining amount $W_{capsule}$, the temperature parameter $T_{capsule}$, and the aerosol weight $W_{aerosol}$. Therefore, the flavor component amount $W_{flavor}$ can be modeled by the following formula (1).

$$W_{flavor} = \beta \times (W_{capsule} \times T_{capsule}) \times \gamma \times W_{aerosol} \qquad (1)$$

$\beta$ in the above formula (1) is a coefficient indicating a ratio of a flavor component to be added to the aerosol generated in response to one inhaling operation performed by the user when the aerosol passes through the flavor source 52, and is obtained from experiments. $\gamma$ in the above formula (1) is a coefficient obtained from experiments. In a period in which one inhaling operation is performed, the temperature parameter $T_{capsule}$ and the flavor component remaining amount $W_{capsule}$ may vary, and $\gamma$ is introduced here in order to treat the temperature parameter $T_{capsule}$ and the flavor component remaining amount $W_{capsule}$ as constant values.

The flavor component remaining amount $W_{capsule}$ is reduced each time a user performs an inhaling operation. Therefore, the flavor component remaining amount $W_{capsule}$ is inversely proportional to the number of times of the inhaling operation (hereinafter, also referred to as the number of times of inhalation). In the aerosol inhaler 1, since discharging to the first load 45 is performed each time the inhaling operation is performed, it can be said that the flavor component remaining amount $W_{capsule}$ is inversely proportional to the number of times at which discharging to the first load 45 is performed to generate aerosol or a cumulative value in a period in which discharging to the first load 45 is performed.

As can be seen from the above formula (1), when it is assumed that the aerosol weight $W_{aerosol}$ generated in response to one inhaling operation performed by a user is controlled to be substantially constant, it is necessary to increase the temperature parameter $T_{capsule}$ (that is, the temperature of the flavor source 52) as the flavor component remaining amount $W_{capsule}$ decreases (that is, the number of times of inhalation increases) in order to stabilize the flavor component amount $W_{flavor}$.

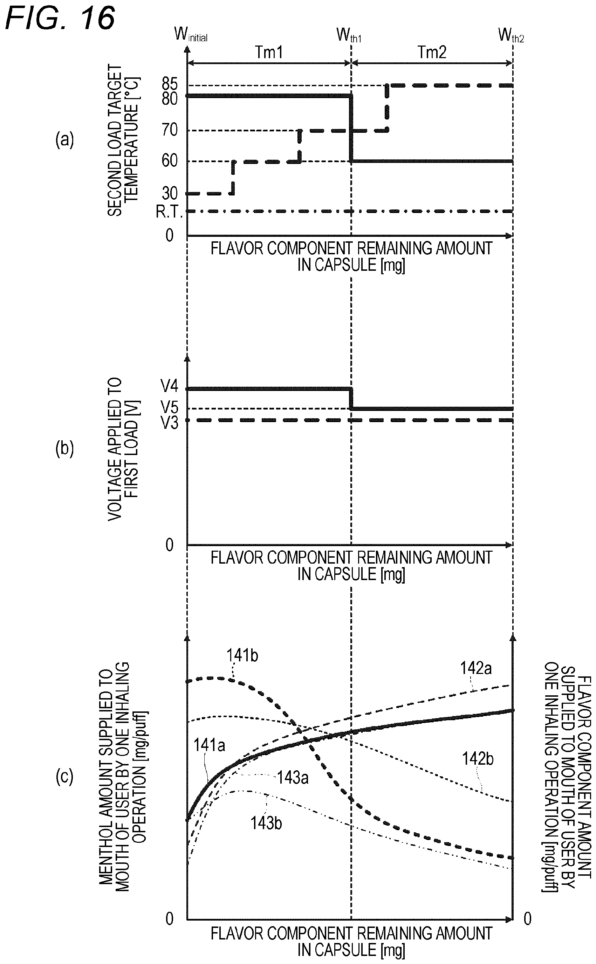

Therefore, when the cartridge 40 and the capsule 50 mounted in the aerosol inhaler 1 are a regular type (that is, when neither the aerosol source 71 nor the flavor source 52 contains menthol), the MCU 63 (an electric power control unit) sets a discharging mode for controlling discharging to the first load 45 and the second load 34 to a regular mode. When the discharging mode is set to the regular mode, the MCU 63 controls discharging to the second load 34 in order to increase the temperature of the flavor source 52 as the flavor component remaining amount $W_{capsule}$ decreases (that is, the number of times of inhalation increases) (see FIGs. 15 and 16).

On the other hand, when the cartridge 40 or the capsule 50 mounted in the aerosol inhaler 1 is a menthol type (that is, when the aerosol source 71 or the flavor source 52 contains menthol), the MCU 63 (the electric power control unit) sets the discharging mode to a menthol mode different from the regular mode. When the discharging mode is set to the menthol mode, the MCU 63 controls discharging to the second load 34 in order to reduce the temperature of the flavor source 52 as the flavor component remaining amount $W_{capsule}$ decreases (that is, the number of times of inhalation increases) from the viewpoint of supplying an appropriate amount of menthol to a user (see FIGS. 15 and 16). Accordingly, as will be described later, it is possible to supply an appropriate amount of menthol to a user.

When the temperature of the flavor source 52 is reduced as the flavor component remaining amount $W_{capsule}$ decreases, the flavor component amount $W_{flavor}$ decreases. Therefore, when the temperature of the flavor source 52 is reduced as the flavor component remaining amount $W_{capsule}$ decreases, the MCU 63 may increase the aerosol weight $W_{aerosol}$ by increasing a voltage applied to the first load 45 to increase electric power supplied to the first load 45 (see FIG. 15). As a result, a decrease in the flavor component amount $W_{flavor}$ caused by a decrease in the temperature of the flavor source 52 in order to supply an appropriate amount of menthol to a user can be compensated by an increase in the aerosol weight $W_{aerosol}$ of aerosol generated using heating of the first load 45, so that it is possible to prevent a decrease in the flavor component amount $W_{flavor}$ supplied to a mouth of a user, and it is possible to stably supply menthol and a flavor component to the user.

(Operation of Aerosol Inhaler)

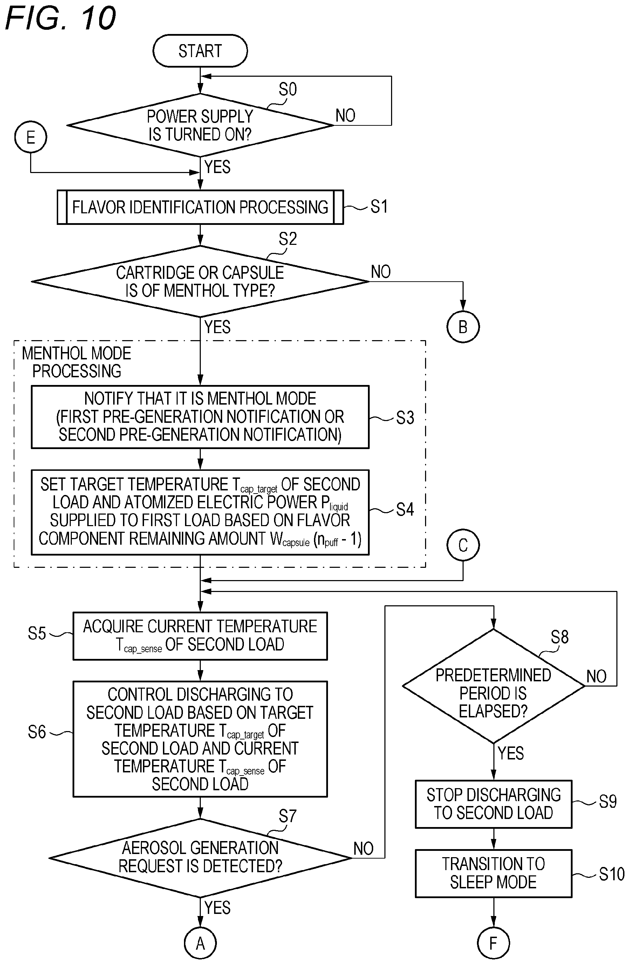

Next, an example of an operation of the aerosol inhaler 1 will be described with reference to FIGs. 10 to 14. For example, the operation of the aerosol inhaler 1 to be described below is implemented by a processor of the MCU 63 executing a program stored in advance in the memory 63 a or the like.

As shown in FIG. 10, the MCU 63 is in standby until a power supply of the aerosol inhaler 1 is turned on by an operation performed on the operation unit 15 or the like (step S0: NO loop). When the power supply of the aerosol inhaler 1 is turned on (step S0: YES), the MCU 63 causes an operation mode of the aerosol inhaler 1 to transition to a startup mode in which aerosol can be generated, and executes a flavor identification processing (to be described later) of identifying types of the cartridge 40 and the capsule 50 (step S1).

As will be described in detail later, in the flavor identification processing, the MCU 63 may newly acquire information indicating the types of the cartridge 40 and the capsule 50, and may read previously acquired information indicating the types of the cartridge 40 and the capsule 50 from the memory 63a. When the MCU 63 newly acquires information indicating the types of the cartridge 40 and the capsule 50, the MCU 63 sets a flavor determination execution flag to ON. The flavor determination execution flag is referred to when determining whether to issue the first pre-generation notification or the second pre-generation notification before generation of aerosol.

The MCU 63 may start discharging to the second load 34 in response to the transition to the startup mode so as to cause a target temperature of the second load 34 (hereinafter, also referred to as a target temperature $T_{cap\_target}$) which will be described later to converge to a predetermined temperature. As a result, the second load 34 can be preheated in response to the transition to the startup mode, and a temperature of the second load 34 and the flavor source 52 can be increased at an early stage. For example, as will be described later, the initial target temperature $T_{cap\_target}$ is set to 80 [°C] which is high in the menthol mode from the viewpoint of ensuring an amount of menthol that can be supplied to a user. Although a certain period of time is required for the second load 34 to reach such a high temperature, the second load 34 is promoted to reach such a high temperature at an early stage by preheating the second load 34 in response to the transition to the startup mode. Therefore, in a case where the aerosol source 71 or the like contains menthol, an amount of menthol (a flavor derived from menthol) provided to a user can be stabilized at an early stage, and an appropriate amount of menthol can be stably supplied to a user immediately after the transition to the startup mode (for example, after a so-called inhalation start).

Next, the MCU 63 determines whether the cartridge 40 or the capsule 50 is a menthol type based on the processing result of the flavor identification processing (step S2). For example, when it is set that the cartridge 40 or the capsule 50 is a menthol type as the processing result of the flavor identification processing, the MCU 63 makes an affirmative determination in step S2 (step S2: YES), and executes a menthol mode processing in order to control discharging from the power supply 61 to the first load 45 and the second load 34 by the menthol mode.

In the menthol mode processing, the MCU 63 first causes the notification unit 16 to notify a user of the menthol mode (step S3). Specifically, in step S4, the MCU 63 determines whether the above-described flavor determination execution flag is set to ON. When the flavor determination execution flag is set to ON, the MCU 63 notifies a user that the mode is the menthol mode by issuing the first pre-generation notification in which the light emitting element 161 is turned on in green and the vibration element 162 vibrates. On the other hand, when the flavor determination execution flag is set to OFF, the MCU 63 notifies a user that the mode is the menthol mode by issuing the second pre-generation notification in which the light emitting element 161 is turned on in green (the vibration element 162 does not vibrate). When the MCU 63 issued the first pre-generation notification, the MCU 63 sets the flavor determination execution flag to OFF.

Next, the MCU 63 sets the target temperature $T_{cap\_target}$ and the atomized electric power to be supplied to the first load 45 (hereinafter, also referred to as the atomized electric power $P_{liquid}$) based on the remaining amount $W_{capsule}$ ($n_{puff}$ - 1) of the flavor component contained in the flavor source 52 (step S4), and the operation proceeds to step S5. Here, when the inhaling operation is not performed even once after the new capsule 50 is mounted, the flavor component remaining amount $W_{capsule}$ ($n_{puff}$ - 1) is $W_{initial}$, and when the inhaling operation is performed once or more, the flavor component remaining amount $W_{capsule}$ ($n_{puff}$-1) is the flavor component remaining amount $W_{capsule}$ ($n_{puff}$) calculated by a remaining amount update processing (to be described later) immediately before the inhaling operation. A specific setting example of the target temperature $T_{cap\_target}$ and the like in the menthol mode will be described later with reference to FIGs. 15 and 16.

Next, the MCU 63 acquires a current temperature of the second load 34 (hereinafter, also referred to as a temperature $T_{cap\_sense}$) based on an output of the second temperature detection element 68 (step S5). The temperature $T_{cap\_sense}$ that is a temperature of the second load 34 is an example of the temperature parameter $T_{capsule}$ described above. Here, although an example in which the temperature of the second load 34 is used as the temperature parameter $T_{capsule}$ is described, a temperature of the flavor source 52 or the accommodation chamber 53 may be used instead of the temperature of the second load 34.

Next, the MCU 63 controls discharging from the power supply 61 to the second load 34 based on the set target temperature $T_{cap\_target}$ and the acquired temperature $T_{cap\_sense}$ so that the temperature $T_{cap\_sense}$ converges to the target temperature $T_{cap\_target}$ (step S6). At this time, the MCU 63 performs, for example, proportional-integral-differential (PID) control so as to cause the temperature $T_{cap\_sense}$ to converge to the target temperature $T_{cap\_target}$.

As the control for causing the temperature $T_{cap\_sense}$ to converge to the target temperature $T_{cap\_target}$, ON and OFF control for turning on and off the power supply to the second load 34, proportional (P) control, proportional-integral (PI) control, or the like may be used instead of the PID control. The target temperature $T_{cap\_target}$ may have hysteresis.

Next, the MCU 63 determines whether there is an aerosol generation request (step S7). When there is no aerosol generation request (step S7: NO), the MCU 63 determines whether a predetermined period has elapsed in a state in which there is no aerosol generation request (step S8). When the predetermined period has not elapsed in a state in which there is no aerosol generation request (step S8: NO), the MCU 63 returns the operation to step S5.

When the predetermined period has elapsed in a state in which there is no aerosol generation request (step S8: YES), the MCU 63 stops the discharging to the second load 34 (step S9), causes the operation mode of the aerosol inhaler 1 to transition to a sleep mode (step S10), and the operation proceeds to step S29 to be described later. Here, the sleep mode is an operation mode in which power consumption of the aerosol inhaler 1 is lower than that in the startup mode, and that can be caused to transition to the startup mode. Therefore, the MCU 63 causes the aerosol inhaler 1 to transition to the sleep mode, so that power consumption of the aerosol inhaler 1 can be reduced while a state in which the aerosol inhaler 1 can return to the startup mode as needed can be maintained.

On the other hand, when there is an aerosol generation request (step S7: YES), the MCU 63 temporarily stops the heating of the flavor source 52 performed by the second load 34 (that is, the discharging to the second load 34), and acquires the temperature $T_{cap\_sense}$ based on an output of the second temperature detection element 68 (step S11). The MCU 63 may not stop the heating of the flavor source 52 performed by the second load 34 (that is, the discharging to the second load 34) when executing step S11.

The MCU 63 determines whether the acquired temperature $T_{cap\_sense}$ is higher than the set target temperature $T_{cap\_target}$ - $\delta$ ($\delta \geq 0$) (step S12). $\delta$ can be arbitrarily determined by a manufacturer of the aerosol inhaler 1. When the temperature $T_{cap\_sense}$ is higher than the target temperature $T_{cap\_target}$ - $\delta$ (step S12: YES), the MCU 63 sets the current atomized electric power $P_{liquid}$ - $\Delta$ ($\Delta > 0$) as a new atomized electric power $P_{liquid}$ (step S13), and the operation proceeds to step S16.

In the present embodiment, when the target temperature $T_{cap\_target}$ is controlled by the menthol mode, the MCU 63 changes the target temperature $T_{cap\_target}$ from 80 [°C] to 60 [°C] in a predetermined period, details of which will be described later with reference to FIG. 15 and the like. Immediately after the target temperature $T_{cap\_target}$ is changed in such a manner, the temperature $T_{cap\_sense}$ (for example, 80 [°C]) which is the temperature of the second load 34 at that time may exceed the target temperature $T_{cap\_target}$ (that is, 60 [°C]) after the change. In such a case, the MCU 63 makes an affirmative determination in step S12 and performs a processing in step S13 to reduce the atomized electric power $P_{liquid}$. Accordingly, even when an actual temperature of the flavor source 52, the second load 34, or the like is higher than 60 [°C] immediately after the target temperature $T_{cap\_target}$ is changed from 80 [°C] to 60 [°C], the atomized electric power $P_{liquid}$ can be reduced, and an amount of the aerosol source 71 that is generated by being heated by the first load 45 and is supplied to the flavor source 52 can be reduced. Therefore, it is possible to prevent a large amount of menthol from being supplied to a mouth of a user, and it is possible to stably supply an appropriate amount of menthol to the user.

On the other hand, when the temperature $T_{cap\_sense}$ is not higher than the target temperature $T_{cap\_target}$ - $\delta$ (step S12: NO), the MCU 63 determines whether the temperature $T_{cap\_sense}$ is lower than the target temperature $T_{cap\_target}$ - $\delta$ (step S14). When the temperature $T_{cap\_sense}$ is lower than the target temperature $T_{cap\_target}$ - $\delta$ (step S14: YES), the MCU 63 sets the current atomized electric power $P_{liquid}$ + $\Delta$ as a new atomized electric power $P_{liquid}$ (step S15), and the operation proceeds to step S16.

On the other hand, when the temperature $T_{cap\_sense}$ is not lower than the target temperature $T_{cap\_target}$ - $\delta$ (step S14: NO), since the temperature $T_{cap\_sense}$ = the target temperature $T_{cap\_target}$ - $\delta$, the MCU 63 maintains the current atomized electric power $P_{liquid}$ and the operation proceeds to step S16.

Next, the MCU 63 executes a during-generation notification processing (step S16). Specifically, in step S16, the MCU 63 acquires information related to the remaining amount of the power supply 61, and determines whether the remaining amount of the power supply 61 is equal to or larger than the first threshold based on the acquired information related to the remaining amount of the power supply 61. When it is determined that the remaining amount of the power supply 61 is equal to or larger than the first threshold, the MCU 63 issues the first during-generation notification. When the light emitting element 161 is turned on in green in the latest first pre-generation notification or second pre-generation notification, the MCU 63 may turn on the light emitting element 161 in green in the first during-generation notification issued at this time. When the light emitting element 161 is turned on in white in the latest first pre-generation notification or second pre-generation notification, the MCU 63 may turn on the light emitting element 161 in white in the first during-generation notification issued at this time. The MCU 63 control the vibration element 162 to not vibrate in the first during-generation notification issues at this time.

When it is determined that the remaining amount of the power supply 61 is smaller than the first threshold, the MCU 63 determines whether the remaining amount of the power supply 61 is equal to or larger than the second threshold. When it is determined that the remaining amount of the power supply 61 is equal to or larger than the second threshold, the MCU 63 issues the second during-generation notification. In this case, the MCU 63 may turn on the light emitting element 161 in purple. When it is determined that the remaining amount of the power supply 61 is smaller than the second threshold, the MCU 63 may issue the charging request notification. In this case, the MCU 63 may cause the light emitting element 161 to blink in red.

Next, the MCU 63 controls the DC/DC converter 66 so that the atomized electric power $P_{liquid}$ set in step S13 or step S15 is supplied to the first load 45 (step S17). Specifically, the MCU 63 controls a voltage applied to the first load 45 by the DC/DC converter 66, so that the atomized electric power $P_{liquid}$ is supplied to the first load 45. As a result, the atomized electric power $P_{liquid}$ is supplied to the first load 45, the aerosol source 71 is heated by the first load 45, and the vaporized and/or atomized aerosol source 71 is generated.

Next, the MCU 63 determines whether the aerosol generation request is ended (step S18). When the aerosol generation request is not ended (step S18: NO), the MCU 63 determines whether a time elapsed from the start of the supply of the atomized electric power $P_{liquid}$, that is, the supply time $t_{sense}$, reaches the upper limit value $t_{upper}$ (step S19). When the supply time $t_{sense}$ does not reach the upper limit value $t_{upper}$ (step S19: NO), the MCU 63 returns the operation to step S16. In this case, the supply of the atomized electric power $P_{liquid}$ to the first load 45, that is, the generation of the vaporized and/or atomized aerosol source 71, is continued.

On the other hand, when the aerosol generation request is ended (step S18: YES), and when the supply time $t_{sense}$ reaches the upper limit value $t_{upper}$ (step S19: YES), the MCU 63 stops the supply of the atomized electric power $P_{liquid}$ to the first load 45 (that is, the discharging to the first load 45) (step S20), and executes a remaining amount update processing of calculating a remaining amount of the flavor component contained in the flavor source 52.

In the remaining amount update processing, the MCU 63 first acquires the supply time $t_{sense}$ in which the atomized electric power $P_{liquid}$ is supplied (step S21). Next, the MCU 63 adds "1" to $n_{puff}$ which is a count value of a puff number counter (step S22).

The MCU 63 updates a remaining amount $W_{capsule}$ ($n_{puff}$) of the flavor component contained in the flavor source 52 based on the acquired supply time $t_{sense}$, the atomized electric power $P_{liquid}$ supplied to the first load 45 in response to the aerosol generation request, and the target temperature $T_{cap\_target}$ set when the aerosol generation request is detected (step S23). For example, the MCU 63 calculates the flavor component remaining amount $W_{capsule}$ ($n_{puff}$) according to the following formula (2), and stores the calculated flavor component remaining amount $W_{capsule}$ ($n_{puff}$) in the memory 63a, thereby updating the flavor component remaining amount $W_{capsule}$ ($n_{puff}$).

$$W_{capsule}(n_{puff})$$
$$= W_{initial} - \delta \cdot \sum_{i=1}^{n_{puff}-1} W_{flavor}(i)$$
$$= W_{initial} - \delta \cdot \sum_{i=1}^{n_{puff}-1} \beta \cdot W_{capsule}(i) \cdot T_{capsule}(i) \cdot \gamma \cdot \alpha \cdot P_{liquid}(i) \cdot t_{sense}(i) \cdots (2)$$

$\beta$ and $\gamma$ in the above formula (2) are the same as $\beta$ and $\gamma$ in the above formula (1), and are obtained from experiments. In addition, $\delta$ in the above formula (2) is the same as $\delta$ used in step S13, and is set in advance by a manufacturer of the aerosol inhaler 1. In the above formula (2), $\alpha$ is a coefficient obtained from experiments in a similar manner to $\beta$ and $\gamma$.

Next, the MCU 63 determines whether the updated flavor component remaining amount $W_{capsule}$ ($n_{puff}$) is smaller than a predetermined remaining amount threshold that is a condition for performing a capsule replacement notification (step S24). When the updated remaining amount $W_{capsule}$ ($n_{puff}$) of the flavor component is equal to or larger than the remaining amount threshold (step S24: NO), it is considered that the flavor component contained in the flavor source 52 (that is, in the capsule 50) is still sufficient, and thus the MCU 63 causes the operation to proceed to step S29.

On the other hand, when the updated remaining amount $W_{capsule}$ ($n_{puff}$) of the flavor component is smaller than the remaining amount threshold (step S24: YES), it is considered that the flavor component contained in the flavor source 52 almost runs out, and thus the MCU 63 determines whether replacement of the capsule 50 is performed for a predetermined number of times after replacement of the cartridge 40 (step S25). For example, the aerosol inhaler 1 is provided to a user in a manner of combining five capsules 50 with one cartridge 40 in the present embodiment. In this case, in step S25, the MCU 63 determines whether the replacement of the capsule 50 is performed for five times after the replacement of the cartridge 40.

When the replacement of the capsule 50 is not performed for a predetermined number of times after the replacement of the cartridge 40 (step S25: NO), it is considered that the cartridge 40 is still in a usable state, and thus the MCU 63 performs a capsule replacement notification (step S26). For example, the MCU 63 performs the capsule replacement notification by operating the notification unit 16 in an operation mode for the capsule replacement notification.

On the other hand, when the replacement of the capsule 50 is performed for a predetermined number of times after the replacement of the cartridge 40 (step S25: YES), it is considered that the cartridge 40 reaches the end of life, and thus the MCU 63 performs a cartridge replacement notification (step S27). For example, the MCU 63 performs the cartridge replacement notification by operating the notification unit 16 in an operation mode for the cartridge replacement notification.

Next, the MCU 63 resets the count value of the puff number counter to 1 and initializes the setting of the target temperature $T_{cap\_target}$ (step S28). In setting and initializing the target temperature $T_{cap\_target}$, for example, the MCU 63 sets the target temperature $T_{cap\_target}$ to -273 [°C] which is the absolute zero degree. Accordingly, regardless of the temperature of the second load 34 at that time, the discharging to the second load 34 can be substantially stopped and the heating of the flavor source 52 performed by the second load 34 can be substantially stopped.

Next, the MCU 63 determines whether the power supply of the aerosol inhaler 1 is turned off by an operation performed on the operation unit 15 or the like (step S29). When the power supply of the aerosol inhaler 1 is turned off (step S29: YES), the MCU 63 ends the series of processing. On the other hand, when the power supply of the aerosol inhaler 1 is not turned off (step S29: NO), the MCU 63 returns the operation to step S1.

When the cartridge 40 and the capsule 50 are set to the regular type as the processing result of the flavor identification processing in step S1, the MCU 63 makes a negative determination in step S3 (step S3: NO), and executes the regular mode processing in order to control the discharge from the power supply 61 to the first load 45 and the second load 34 in the regular mode.

In the regular mode processing, the MCU 63 first causes the notification unit 16 to notify a user of the regular mode (step S30). Specifically, in step S30, the MCU 63 determines whether the above-described flavor determination execution flag is set to ON. When the flavor determination execution flag is set to ON, the MCU 63 notifies a user that the mode is the regular mode by issuing the first pre-generation notification in which the light emitting element 161 is turned on in white and the vibration element 162 vibrates. On the other hand, when the flavor determination execution flag is set to OFF, the MCU 63 notifies a user that the mode is the regular mode by issuing the second pre-generation notification in which the light emitting element 161 is turned on in white (the vibration element 162 does not vibrate). As described above, when the MCU 63 issued the first pre-generation notification, the MCU 63 sets the flavor determination execution flag to OFF.

Next, the MCU 63 determines the aerosol weight $W_{aerosol}$ required to achieve the target flavor component amount $W_{flavor}$ based on the remaining amount $W_{capsule}$ ($n_{puff} - 1$) of the flavor component contained in the flavor source 52 (step S31). In step S31, for example, the MCU 63 calculates the aerosol weight $W_{aerosol}$ according to the following formula (3) obtained by modifying the above formula (1), and determines the calculated aerosol weight $W_{aerosol}$ as the aerosol weight $W_{aerosol}$.

$$W_{aerosol} = \frac{W_{flavor}}{\beta \cdot W_{capsule}(n_{puff} - 1) \cdot T_{capsule} \cdot \gamma} \quad \cdots \quad (3)$$

$\beta$ and $\gamma$ in the above formula (3) are the same as $\beta$ and $\gamma$ in the above formula (1), and are obtained from experiments. In the above formula (3), the target flavor component amount $W_{flavor}$ is set in advance by a manufacturer of the aerosol inhaler 1. When the inhaling operation is not performed even once after the new capsule 50 is mounted, the flavor component remaining amount $W_{capsule}$ ($n_{puff} - 1$) in the above formula (3) is $W_{initial}$, and when the inhaling operation is performed once or more, the flavor component remaining amount $W_{capsule}$ ($n_{puff} - 1$) in the above formula (3) is the flavor component remaining amount $W_{capsule}$ ($n_{puff}$) calculated in a remaining amount update processing immediately before the inhaling operation.

Next, the MCU 63 sets the atomized electric power $P_{liquid}$ to be supplied to the first load 45 based on the aerosol weight $W_{aerosol}$ determined in step S31 (step S32). In step S32, the MCU 63 calculates, for example, the atomized electric power $P_{liquid}$ according to the following formula (4), and sets the calculated atomized electric power $P_{liquid}$.

$$P_{liquid} = \frac{W_{aerosol}}{\alpha \cdot t} \quad \cdots \quad (4)$$

$\alpha$ in the above formula (4) is the same as $\alpha$ in the above formula (2), and is obtained from experiments. The aerosol weight $W_{aerosol}$ in the above formula (4) is the aerosol weight $W_{aerosol}$ determined in step S31. t in the above formula (4) is the supply time $t_{sense}$ in which the atomized electric power $P_{liquid}$ is expected to be supplied, and may have, for example, the upper limit value $t_{upper}$.

Next, the MCU 63 determines whether the atomized electric power $P_{liquid}$ determined in step S32 is equal to or smaller than predetermined upper limit electric power that can be discharged from the power supply 61 to the first load 45 at that time (step S33). When the atomized electric power $P_{liquid}$ is equal to or smaller than the upper limit electric power (step S33: Yes), the MCU 63 returns the operation to step S6 described above. On the other hand, when the atomized electric power $P_{liquid}$ exceeds the upper limit electric power (step S33: NO), the MCU 63 increases the target temperature $T_{cap\_target}$ by a predetermined amount (step S34), and returns the operation to step S30.

That is, as can be seen from the above formula (1), by increasing the target temperature $T_{cap\_target}$ (that is, $T_{capsule}$), the aerosol weight $W_{aerosol}$ required to achieve the target flavor component amount $W_{flavor}$ can be reduced by the increase amount of the target temperature $T_{cap\_target}$, and as a result, the atomized electric power $P_{liquid}$ determined in the above step S32 can be reduced. By repeating steps S31 to S34, the MCU 63 can change the determination in step S33 that was initially a negative determination to an affirmative determination, and can cause the operation to transition to step S5 as shown in FIG. 10.

(Flavor Identification Processing)

Next, the flavor identification processing shown in step S1 will be described. In the flavor identification processing, the MCU 63 first determines whether it is immediately after the power supply of the aerosol inhaler 1 is turned on (step S41), as shown in FIG. 14. For example, the MCU 63 makes an affirmative determination in step S41 only in the case of the first time flavor identification processing after the power supply of the aerosol inhaler 1 is turned on.

Next, the MCU 63 tries to acquire information indicating types of the cartridge 40 and the capsule 50 (step S42). The MCU 63 can acquire information indicating the types of the cartridge 40 and the capsule 50 based on, for example, an operation performed on the operation unit 15. In addition, each of the cartridge 40 and the capsule 50 may be provided with a storage medium (for example, an IC chip) that stores information indicating the types, and the MCU 63 may acquire the information indicating the types of the cartridge 40 and the capsule 50 by reading the information stored in the storage medium. Further, electric resistance values of the cartridge 40 and the capsule 50 may be different corresponding to types of the cartridge 40 and the capsule 50, and the MCU 63 may acquire information indicating the types of the cartridge 40 and the capsule 50 based on the electric resistance values. Instead of the electric resistance value, information indicating the types of the cartridge 40 and the capsule 50 may be acquired using other detectable physical quantities such as light transmittance and light reflectance of the capsule 50 and the cartridge 40.

Next, the MCU 63 determines whether the information indicating the types of the cartridge 40 and the capsule 50 are acquired in step S42 (step S43). When the information indicating the types of the cartridge 40 and the capsule 50 are acquired (step S43: YES), the MCU 63 stores the acquired information indicating the types of the cartridge 40 and the capsule 50 in the memory 63a (step S44). In this case, the MCU 63 sets the types of the cartridge 40 and the capsule 50 indicated by the information stored the memory 63a in step S44 as a processing result of the current flavor identification processing. Then, the MCU 63 sets a flavor identification execution flag to ON (step S45), and ends the flavor identification processing.

On the other hand, when the types of the cartridge 40 and the capsule 50 are not acquired (step S43: NO), the MCU 63 performs a predetermined error processing (step S46), and ends the flavor identification processing. A situation in which the types of the cartridge 40 and the capsule 50 cannot be acquired may occur, for example, when attachment (connection) of the cartridge 40 to the power supply unit 10 is poor or the accommodation of the capsule 50 in the capsule holder 30 is poor. When the operation unit 15 is not operated, when the MCU 63 cannot read information stored in the storage medium of the cartridge 40 or the capsule 50, or when the electric resistance value, the light transmittance, or the light reflectance of the cartridge 40 and the capsule 50 has an abnormal value, the MCU 63 cannot acquire the types of the cartridge 40 and the capsule 50.

When it is determined that it is not immediately after the power supply of the aerosol inhaler 1 is turned on (step S41: NO), the MCU 63 determines whether the cartridge 40 or the capsule 50 is attached or detached (step S47). When the cartridge 40 or the capsule 50 is attached or detached (step S47: YES), the types of the cartridge 40 and the capsule 50 may be changed, and thus the MCU 63 proceeds the operation to step S42 described above and tries to acquire the information indicating the types of the cartridge 40 and the capsule 50.

On the other hand, when the cartridge 40 and the capsule 50 are not attached or detached (step S47: NO), since there is no change in the types, the MCU 63 reads the information indicating the types of the cartridge 40 and the capsule 50 stored in the memory 63a (step S48). Then, the MCU 63 sets the types of the cartridge 40 and the capsule 50 indicated by the information read from the memory 63a in step S48 as a processing result of the current flavor identification processing, and ends the flavor identification processing.

The MCU 63 may detect the attachment and detachment of the cartridge 40 and the capsule 50 using any method.

For example, the MCU 63 may detect the attachment and detachment of the cartridge 40 based on an electric resistance value between a pair of discharge terminals 12 acquired using the voltage sensor 671 and the current sensor 672 or an electric resistance value between a pair of discharge terminals 17 acquired using the voltage sensor 681 and the current sensor 682. It is clear that the electric resistance value between the discharge terminals 12 that can be acquired by the MCU 63 is different between a state in which the pair of discharge terminals 12 are electrically connected by connecting the first load 45 between the pair of discharge terminals 12 and a state in which the first load 45 is not connected between the pair of discharge terminals 12 and the pair of discharge terminals 12 are insulated by air. Therefore, the MCU 63 can detect the attachment and detachment of the cartridge 40 based on the electric resistance value between the discharge terminals 12.

Similarly, it is clear that the electric resistance value between the discharge terminals 17 that can be acquired by the MCU 63 is different between a state in which the pair of discharge terminals 17 are electrically connected by connecting the second load 34 between the pair of discharge terminals 17 and a state in which the second load 34 is not connected between the pair of discharge terminals 17 and the pair of discharge terminals 17 are insulated by air. Therefore, the MCU 63 can detect the attachment and detachment of the cartridge 40 based on the electric resistance value between the discharge terminals 17.

The MCU 63 may detect attachment and detachment of the capsule 50 based on fluctuation of the electric resistance value between the pair of discharge terminals 12 acquired using the voltage sensor 671 and the current sensor 672 or fluctuation of the electric resistance value between the pair of discharge terminals 17 acquired using the voltage sensor 681 and the current sensor 682. For example, when the capsule 50 is attached and detached, stress is applied to the discharge terminals 12 and the discharge terminals 17 due to the attachment and detachment. This stress causes fluctuation in the electric resistance value between the pair of discharge terminals 12 and the electric resistance value between the pair of discharge terminals 17. Therefore, the MCU 63 can detect the attachment and detachment of the capsule 50 based on the fluctuation of the electric resistance value between the discharge terminals 12 and the fluctuation of the electric resistance value between the discharge terminals 17.

The MCU 63 may detect attachment and detachment of the cartridge 40 and the capsule 50 based on information stored in a storage medium provided in each of the cartridge 40 and the capsule 50. For example, when the information stored in the storage medium transitions from a state where it can be acquired (read) to a state where it cannot be acquired, the MCU 63 detects detachment of the cartridge 40 and the capsule 50. When the information stored in the storage medium transitions from a state where it cannot be acquired to a state where it can be acquired, the MCU 63 detects the attachment of the cartridge 40 and the capsule 50.

In addition, identification information (ID) for identifying the cartridge 40 and the capsule 50 may be stored in storage medium provided in each of the cartridge 40 and the capsule 50, and the MCU 63 may detect attachment and detachment of the cartridge 40 and the capsule 50 based on the identification information. In this case, when the identification information of the cartridge 40 and the capsule 50 changes, the MCU 63 detects attachment and detachment (in this case, replacement) of the cartridge 40 and the capsule 50.

The MCU 63 may detect the attachment and detachment of the cartridge 40 and the capsule 50 based on light transmittance and light reflectance of the cartridge 40 and the capsule 50. For example, when the light transmittance and the light reflectance of the cartridge 40 and the capsule 50 change from a value indicating attachment to a value indicating detachment, the MCU 63 detects detachment of the cartridge 40 and the capsule 50. When the light transmittance and the light reflectance of the cartridge 40 and the capsule 50 change from a value indicating detachment to a value indicating attachment, the MCU 63 detects attachment of the cartridge 40 and the capsule 50.

Although not shown in the flowchart, the MCU 63 may issue the first operation notification, the second operation notification, the charging request notification, and the like in response to an operation on the operation unit 15. In this case, for example, when the power supply 61 is not in the discharging ended state, the MCU 63 monitors an operation on the operation unit 15. When the MCU 63 detects an operation on the operation unit 15, the MCU 63 acquires information related to the remaining amount of the power supply 61. The MCU 63 determines whether the remaining amount of the power supply 61 is equal to or larger than the first threshold based on the acquired information related to the remaining amount of the power supply 61. Accordingly, when it is determined that the remaining amount of the power supply 61 is equal to or larger than the first threshold, the MCU 63 issues the first operation notification as described above.

When it is determined that the remaining amount of the power supply 61 is smaller than the first threshold, the MCU 63 determines whether the remaining amount of the power supply 61 is equal to or larger than the second threshold. Accordingly, when it is determined that the remaining amount of the power supply 61 is equal to or larger than the second threshold, the MCU 63 issues the second operation notification as described above. When it is determined that the remaining amount of the power supply 61 is smaller than the second threshold, the MCU 63 issues the charging request notification.

(Specific Control Example when Cartridge 40 and Capsule 50 are of Menthol Type)

Next, a specific control example of the MCU 63 when both the cartridge 40 and the capsule 50 are the menthol type (that is when both the aerosol source 71 and the flavor source 52 contain menthol) will be described with reference to FIG. 15. Here, it is assumed that an inhaling operation is performed for a predetermined number of times from when the new capsule 50 is mounted in the aerosol inhaler 1 up to when the flavor component remaining amount in the capsule 50 is smaller than the above-described remaining amount threshold (that is, when the flavor component remaining amount in the capsule 50 almost runs out). It is assumed that a sufficient amount of the aerosol source 71 is stored in the cartridge 40 during a period in which the inhaling operation is performed for a predetermined number of times.

In (a), (b), and (c) of FIG. 15, a horizontal axis indicates a remaining amount [mg] of the flavor component contained in the flavor source 52 in the capsule 50 (that is, the flavor component remaining amount $W_{capsule}$). A vertical axis in (a) of FIG. 15 indicates a target temperature (that is, the target temperature $T_{cap\_target}$) [°C] of the second load 34 that is a heater for heating the capsule 50 (that is, the flavor source 52). A vertical axis in (b) of FIG. 15 indicates a voltage [V] applied to the first load 45 that is a heater for heating the aerosol source 71 stored in the cartridge 40.

A vertical axis at the left side in (c) of FIG. 15 indicates a menthol amount supplied to a mouth of a user by one inhaling operation [mg/puff], A vertical axis at the right side in (c) of FIG. 15 indicates a flavor component amount supplied to the mouth of the user by one inhaling operation [mg/puff]. Hereinafter, the menthol amount supplied to a mouth of a user by one inhaling operation is also referred to as a unit supply menthol amount. Hereinafter, the flavor component amount supplied to the mouth of the user by one inhaling operation is also referred to as a unit supply flavor component amount.

In FIG. 15, a first period Tm1 is a certain period immediately after the capsule 50 is replaced. Specifically, the first period Tm1 is a period from when the flavor component remaining amount in the capsule 50 is $W_{initial}$ up to when the flavor component remaining amount in the capsule 50 reaches $W_{th1}$ that is set in advance by a manufacturer of the aerosol inhaler 1. Here, $W_{th1}$ is set to a value smaller than $W_{initial}$ and larger than $W_{th2}$ that is the above-described remaining amount threshold which is a condition for performing the capsule replacement notification. For example, $W_{th1}$ may be a flavor component remaining amount when the inhaling operation is performed for about ten times after the new capsule 50 is mounted. In FIG. 15, a second period Tm2 is a period after the first period Tm1. Specifically, the second period Tm2 is a period from when the flavor component remaining amount in the capsule 50 reaches $W_{th1}$ up to when the flavor component remaining amount reaches $W_{th2}$.

When both the cartridge 40 and the capsule 50 are the menthol type, as described above, the MCU 63 controls the discharging to the first load 45 and the second load 34 by the menthol mode. Specifically, in the menthol mode in this case, the MCU 63 sets the target temperature of the second load 34 in the first period Tm1 to 80 [°C], as indicated by a thick solid line in (a) of FIG. 15.

For example, the target temperature (80 [°C]) of the second load 34 in the first period Tm1 in this case is a temperature higher than a melting point (for example, 42 [°C] to 45 [°C]) of the menthol and lower than a boiling point (for example, 212 [°C] to 216 [°C]) of the menthol. The target temperature of the second load 34 in the first period Tm1 in this case may be a temperature equal to or lower than 90 [°C]. Accordingly, in the first period Tm1, the temperature of the second load 34 (that is, the flavor source 52) is controlled to converge to 80 [°C] in the present embodiment. Therefore, in the first period Tm1, since the menthol adsorbed to the flavor source 52 is heated to an appropriate temperature by the second load 34, rapid progress of desorption of the menthol from the flavor source 52 can be prevented, and an appropriate amount of menthol can be stably supplied to a user.

In the menthol mode in a case where both the cartridge 40 and the capsule 50 are the menthol type, in the second period Tm2 after the first period Tm1, the MCU 63 sets the target temperature of the second load 34 to 60 [°C] which is lower than the target temperature in the immediately preceding first period Tm1. For example, the target temperature (60 [°C]) of the second load 34 in the second period Tm2 in this case is also a temperature higher than the melting point of the menthol and lower than the boiling point of the menthol. The target temperature of the second load 34 in the second period Tm2 in this case may also be a temperature equal to or lower than 90 [°C]. Accordingly, in the second period Tm2, the temperature of the second load 34 (that is, the flavor source 52) is controlled to converge to 60 [°C] in the present embodiment. Therefore, in the second period Tm2, since the menthol adsorbed to the flavor source 52 is heated to an appropriate temperature by the second load 34, rapid progress of desorption of the menthol from the flavor source 52 can also be prevented, and an appropriate amount of menthol can also be stably supplied to a user.

In this manner, in the menthol mode in a case where both the cartridge 40 and the capsule 50 are the menthol type, the target temperature of the second load 34 can be reduced in two stages from 80 [°C] to 60 [°C]. That is, in the menthol mode in a case where both the cartridge 40 and the capsule 50 are the menthol type, in the first period Tm1, the MCU 63 controls discharging to the second load 34 whose target temperature is 80 [°C] so as to cause the temperature of the second load 34 (that is, the flavor source 52) to converge to a temperature close to 80 [°C] which is high. In the second period Tm2 after the first period Tm1, the MCU 63 controls discharging to the second load 34 whose target temperature is 60 [°C] so as to cause the temperature of the second load 34 (that is, the flavor source 52) to converge to a temperature close to 60 [°C] which is low.

In the menthol mode in a case where both the cartridge 40 and the capsule 50 are the menthol type, the MCU 63 sets a voltage applied to the first load 45 in the first period Tm1 to V1 [V] as indicated by a thick solid line in (b) of FIG. 15. V1 [V] is a voltage set in advance by a manufacturer of the aerosol inhaler 1. Accordingly, in the first period Tm1 in this case, electric power corresponding to the applied voltage V1 [V] is supplied from the power supply 61 to the first load 45, and the aerosol source 71 vaporized and/or atomized by an amount corresponding to the electric power is generated by the first load 45.

In the menthol mode in a case where both the cartridge 40 and the capsule 50 are the menthol type, the MCU 63 sets a voltage applied to the first load 45 to V2 [V] in the second period Tm2 after the first period Tm1. V2 [V] is a voltage higher than V1 [V] as shown in (b) of FIG. 15. V2 [V] is set in advance by a manufacturer of the aerosol inhaler 1. For example, the MCU 63 can apply a voltage such as V1 [V] or V2 [V] to the first load 45 by controlling the DC/DC converter 66.

In this manner, in the menthol mode in a case where the cartridge 40 and the capsule 50 are the menthol type, the MCU 63 increases the voltage applied to the first load 45 in two stages from V1 [V] to V2 [V]. That is, in the menthol mode in a case where both the cartridge 40 and the capsule 50 are the menthol type, discharging to the first load 45 with an applied voltage of V1 [V] which is low is performed in the first period Tm1. In the second period Tm2 after the first period Tm1, discharging to the first load 45 with an applied voltage of V2 [V] which is high is performed, and electric power larger than that in the immediately preceding first period Tm1 is supplied to the first load 45. As a result, an amount of vaporized and/or atomized aerosol source 71 generated by the first load 45 is increased as compared with that in the immediately preceding first period Tm1.

An example of a unit supply menthol amount in a case where both the cartridge 40 and the capsule 50 are the menthol type and the MCU 63 controls the target temperature of the second load 34 and the voltage applied to the first load 45 by the menthol mode is indicated by a unit supply menthol amount 131a in (c) of FIG. 15.

An example of a unit supply flavor component amount in a case where both the cartridge 40 and the capsule 50 are the menthol type and the MCU 63 controls the target temperature of the second load 34 and the voltage applied to the first load 45 by the menthol mode is indicated by a unit supply flavor component amount 131b in (c) of FIG. 15.

In order to compare the unit supply menthol amount 131a and the unit supply flavor component amount 131b, an example will be described in which the MCU 63 controls the discharging to the first load 45 and the second load 34 (that is, the target temperature of the second load 34 and the voltage applied to the first load 45) by the regular mode even though both the cartridge 40 and the capsule 50 are the menthol type.

In the regular mode, for example, the MCU 63 increases the target temperature of the second load 34 in the first period Tm1 and the second period Tm2 in a stepwise manner such as 30 [°C], 60 [°C], 70 [°C], and 85 [°C], as indicated by a thick broken line in (a) of FIG. 15. The target temperature of the second load 34 and a timing of changing the target temperature in the regular mode are set in advance by a manufacturer of the aerosol inhaler 1. As another example, the timing of changing the target temperature of the second load 34 in the regular mode may be determined based on a remaining amount [mg] of the flavor component (that is, the flavor component remaining amount $W_{capsule}$) contained in the flavor source 52 in the capsule 50.

For example, a maximum value (here, 70 [°C]) of the target temperature of the second load 34 in the first period Tm1 in the regular mode is lower than the target temperature (here, 80 [°C]) of the second load 34 in the first period Tm1 in the menthol mode. A minimum value (here, 70 [°C]) of the target temperature of the second load 34 in the second period Tm2 in the regular mode is higher than the target temperature (here, 60 [°C]) of the second load 34 in the second period Tm2 in the menthol mode.

In the regular mode, the MCU 63 maintains the voltage applied to the first load 45 in the first period Tm1 and the second period Tm2 at a constant V3 [V], as indicated by a thick broken line in (b) of FIG. 15. V3 [V] is a voltage higher than V1 [V] and lower than V2 [V], and is a voltage set in advance by a manufacturer of the aerosol inhaler 1. For example, the MCU 63 can apply a voltage of V3 [V] to the first load 45 by controlling the DC/DC converter 66.

An example of a unit supply menthol amount in a case where both the cartridge 40 and the capsule 50 are the menthol type and the MCU 63 controls the target temperature of the second load 34 and the voltage applied to the first load 45 by the regular mode is indicated by a unit supply menthol amount 132a in (c) of FIG. 15.

An example of a unit supply flavor component amount in a case where both the cartridge 40 and the capsule 50 are the menthol type and the MCU 63 controls the target temperature of the second load 34 and the voltage applied to the first load 45 by the regular mode is indicated by a unit supply flavor component amount 132b in (c) of FIG. 15.

That is, even when both the cartridge 40 and the capsule 50 are the menthol type, the discharging to the first load 45 and the discharging to the second load 34 (that is, the target temperature of the second load 34 and the voltage applied to the first load 45) are controlled by the regular mode. In this case, since the target temperature of the second load 34 in the first period Tm1 is lower than that in a case where the target temperature of the second load 34 and the voltage applied to the first load 45 are controlled by the menthol mode, the temperature of the flavor source 52 in the first period Tm1 is low.

Therefore, when the discharging to the first load 45 or the like is controlled by the regular mode in a case where both the cartridge 40 and the capsule 50 are the menthol type, a time up to when the flavor source 52 (specifically, the cigarette granules 521) and the menthol reach the adsorption equilibrium state in the capsule 50 is longer than that in a case where the discharging to the first load 45 or the like is controlled by the menthol mode. During this period, most menthol derived from the aerosol source 71 is adsorbed to the flavor source 52, and menthol that can pass through the flavor source 52 is reduced.

As described above, when the discharging to the first load 45 or the like is controlled by the regular mode in a case where both the cartridge 40 and the capsule 50 are the menthol type, the unit supply menthol amount of menthol that can be supplied to a user in the first period Tm1 is reduced as indicated by the unit supply menthol amount 131a and the unit supply menthol amount 132a, as compared with a case where the discharging to the first load 45 or the like is controlled by the menthol mode as described above. Therefore, in this case, a sufficient amount of menthol cannot be supplied to the user in the first period Tm1.

On the other hand, in the menthol mode in a case where both the cartridge 40 and the capsule 50 are the menthol type, the MCU 63 sets the second load 34 (that is, the flavor source 52) to have a high temperature in the vicinity of 80 [°C] in the first period Tm1 which is assumed to be a period before the flavor source 52 (specifically, the cigarette granules 521) and the menthol reach the adsorption equilibrium state. Accordingly, in the first period Tm1, the MCU 63 can prompt the flavor source 52 (specifically, the cigarette granules 521) and the menthol to reach the adsorption equilibrium state at an early stage in the capsule 50, and can prevent the menthol derived from the aerosol source 71 from being adsorbed to the flavor source 52, and can ensure an amount of the menthol to be supplied to a mouth of a user avoiding the menthol being adsorbed to the flavor source 52 among the menthol derived from the aerosol source 71. Further, the MCU 63 can increase the menthol derived from the flavor source 52 that is desorbed from the flavor source 52 (specifically, the cigarette granules 521) and is to be supplied to a mouth of a user by setting the second load 34 (that is, the flavor source 52) to have a high temperature in the first period Tm1. Therefore, a sufficient amount of menthol can be supplied to the user from a period when the flavor component contained in the flavor source 52 is sufficient (new product time), as indicated by the unit supply menthol amount 131a.

In (c) of FIG. 15, a unit supply menthol amount 133a is an example of a unit supply menthol amount in a case where both the cartridge 40 and the capsule 50 are the menthol type and the flavor source 52 is not heated by the second load 34. In this case, the temperature of the second load 34 (that is, the flavor source 52) in the first period Tm1 is the room temperature (see R.T. in (c) of FIG. 15). Therefore, in this case, since the temperature of the flavor source 52 in the first period Tm1 is lower than that in a case where the discharging to the first load 45 or the like is controlled by the menthol mode, a sufficient amount of menthol cannot be supplied to a user in the first period Tm1, as shown by the unit supply menthol amount 133a.

In order to supply a sufficient amount of menthol to a user in the first period Tm1, the target temperature of the second load 34 in the first period Tm1 is set to be high in the menthol mode in a case where both the cartridge 40 and the capsule 50 are the menthol type. However, when the flavor source 52 heated to a high temperature in the first period Tm1 is continuously heated at a high temperature in the second period Tm2, a large amount of menthol is supplied to a user, which may lead to a decrease in flavor.

Therefore, as described above, in the menthol mode in a case where both the cartridge 40 and the capsule 50 are the menthol type, the target temperature of the second load 34 in the second period Tm2 is set to be lower than the target temperature of the second load 34 in the first period Tm1, so that the flavor source 52 that is heated to a high temperature in the first period Tm1 is prevented from being continued to be further heated at a high temperature in the second period Tm2. Accordingly, as indicated by the unit supply menthol amount 131a, in the second period Tm2 which is assumed to be a period after the flavor source 52 (specifically, the cigarette granules 521) and the menthol reach the adsorption equilibrium state, the temperature of the flavor source 52 is lowered, so that an amount of the menthol that can be adsorbed to the flavor source 52 (specifically, the cigarette granules 521) can be increased, and the unit supply menthol amount can be prevented from increasing. Therefore, it is possible to supply an appropriate amount of menthol to a user in the second period Tm2.

In order to prevent a large amount of menthol from being supplied to the user in the second period Tm2, the target temperature of the second load 34 in the second period Tm2 is set to be low in the menthol mode in a case where both the cartridge 40 and the capsule 50 are the menthol type. However, when the target temperature of the second load 34 is set to be low in this manner, it is possible to prevent an increase in the unit supply menthol amount in the second period Tm2, but it is considered that the unit supply flavor component amount in the second period Tm2 also decreases, and it is not possible to provide a sufficient inhalation feeling to a user.

Therefore, in the menthol mode in a case where both the cartridge 40 and the capsule 50 are of the menthol type, that is, the aerosol source 71 and the flavor source 52 contain menthol, the MCU 63 sets the voltage applied to the first load 45 in the first period Tm1 to V1 [V], and sets the voltage applied to the first load 45 in the second period Tm2 after the first period Tm1 to V2 [V] that is higher than V1 [V]. As a result, in the second period Tm2, and the voltage applied to the first load 45 can be changed to V2 [V] which is high in accordance with the target temperature of the second load 34 being changed to 60 [°C] which is low. Therefore, in the second period Tm2, an amount of the aerosol source 71 that is generated by being heated by the first load 45 and is supplied to the flavor source 52 can be increased, and the unit supply flavor component amount in the second period Tm2 can be prevented from decreasing as indicated by the unit supply flavor component amount 131b.

(Specific Control Example when Only Cartridge 40 is Menthol Type)

Next, a specific control example of the MCU 63 when only the cartridge 40 is the menthol type (that is when only the aerosol source 71 contains menthol) will be described with reference to FIG. 16. In the menthol mode in a case where only the cartridge 40 is the menthol type, only the voltage applied to the first load 45 in the first period Tm1 and the second period Tm2 is different from that in the menthol mode in a case where both the cartridge 40 and the capsule 50 are the menthol type. Therefore, in the following description, portions different from those described with reference to FIG. 15 will be mainly described, and description of portions similar to those described with reference to FIG. 15 will be omitted as appropriate.

In the menthol mode in a case where only the cartridge 40 is the menthol type, the MCU 63 sets the voltage applied to the first load 45 in the first period Tm1 to V4 [V] as indicated by a thick solid line in (b) of FIG. 16. V4 [V] is a voltage higher than V3 [V] as shown in (b) of FIG. 16, and is a voltage set in advance by a manufacturer of the aerosol inhaler 1. Accordingly, in the first period Tm1 in this case, electric power corresponding to the applied voltage V3 [V] is supplied from the power supply 61 to the first load 45, and the aerosol source 71 vaporized and/or atomized by an amount corresponding to the electric power is generated by the first load 45.

In the menthol mode in a case where only the cartridge 40 is the menthol type, the MCU 63 sets the voltage applied to the first load 45 to V5 [V] in the second period Tm2 after the first period Tm1. As shown in (b) of FIG. 16, V5 [V] is a voltage higher than V3 [V] and lower than V4 [V]. V5 [V] is set in advance by a manufacturer of the aerosol inhaler 1. For example, the MCU 63 can apply a voltage such as V4 [V] or V5 [V] to the first load 45 by controlling the DC/DC converter 66.

In this manner, in the menthol mode in a case where only the cartridge 40 is the menthol type, the MCU 63 reduces the voltage applied to the first load 45 in two stages from V4 [V] to V5 [V]. That is, in the menthol mode in a case where only the cartridge 40 is the menthol type, discharging to the first load 45 with an applied voltage of V4 [V] which is high is performed in the first period Tm1. In the second period Tm2 after the first period Tm1, discharging to the first load 45 with an applied voltage of V5 [V] which is low is performed, and electric power smaller than that in the immediately preceding first period Tm1 is supplied to the first load 45. As a result, an amount of the aerosol source 71 (the vaporized and/or atomized aerosol source 71) that is generated by the first load 45 and is supplied to the flavor source 52 is reduced as compared with that in the immediately preceding first period Tm1.

An example of a unit supply menthol amount in a case where only the cartridge 40 is the menthol type and the MCU 63 controls the target temperature of the second load 34 and the voltage applied to the first load 45 by the menthol mode is indicated by a unit supply menthol amount 141a in (c) of FIG. 16.

An example of a unit supply flavor component amount in a case where only the cartridge 40 is the menthol type and the MCU 63 controls the target temperature of the second load 34 and the voltage applied to the first load 45 by the menthol mode is indicated by a unit supply flavor component amount 141b in (c) of FIG. 16.

An example of a unit supply menthol amount in a case where only the cartridge 40 is the menthol type and the MCU 63 controls the target temperature of the second load 34 and the voltage applied to the first load 45 by the regular mode is indicated by a unit supply menthol amount 142a in (c) of FIG. 16.

An example of a unit supply flavor component amount in a case where only the cartridge 40 is the menthol type and the MCU 63 controls the target temperature of the second load 34 and the voltage applied to the first load 45 by the regular mode is indicated by a unit supply flavor component amount 142b in (c) of FIG. 16.

An example of a unit supply menthol amount in a case where only the cartridge 40 is the menthol type and the flavor source 52 is not heated by the second load 34 is indicated by a unit supply menthol amount 143a in (c) of FIG. 16.

An example of a unit supply flavor component amount in a case where only the cartridge 40 is the menthol type and the flavor source 52 is not heated by the second load 34 is indicated by a unit supply flavor component amount 143b in (c) of FIG. 16.

That is, in the menthol mode in a case where only the cartridge 40 is the menthol type, that is, the flavor source 52 does not contain menthol, the MCU 63 sets the voltage applied to the first load 45 in the first period Tm1 to V4 [V], and sets the voltage applied to the first load 45 in the second period Tm2 after the first period Tm1 to V5 [V] lower than V4 [V]. Accordingly, in the first period Tm1 which is assumed to be a period before the flavor source 52 (specifically, the cigarette granules 521) and menthol reach the adsorption equilibrium state in the capsule 50, an amount of the aerosol source 71 that is generated by being heated by the first load 45 and is supplied to the flavor source 52 can be increased by applying V4 [V] which is high to the first load 45 (that is, by supplying large electric power to the first load 45).

Therefore, in the period before the flavor source 52 and the menthol reach the adsorption equilibrium state, it is possible to increase an amount of menthol supplied to a mouth of a user avoiding the menthol being adsorbed to the flavor source 52 among the menthol derived from the aerosol source 71, and it is possible to promote the flavor source 52 and the menthol to reach the adsorption equilibrium state at an early stage in the capsule 50. Therefore, it is possible to stably supply an appropriate and sufficient amount of menthol to a user from a time (for example, a so-called inhalation start) when the flavor component contained in the flavor source 52 is sufficient, as indicated by the unit supply menthol amount 141a.

As described above, the power supply unit 10 can issue an appropriate notification to a user. As a result, convenience for a user can be improved, and marketability of the aerosol inhaler 1 can be improved.

Although an embodiment of the present invention is described above with reference to the accompanying drawings, it is needless to say that the present invention is not limited to the embodiment. It will be apparent to those skilled in the art that various changes and modifications may be conceived within the scope of the claims. It is also understood that various changes and modifications belong to the technical scope of the present invention. Further, constituent elements in the embodiment described above may be combined arbitrarily within a range not departing from the spirit of the present invention.

For example, although the voltage applied to the first load 45 is changed in a stepwise manner in two stages in the menthol mode in a case where at least the aerosol source 71 contains menthol in the present embodiment, the present invention is not limited thereto. The voltage applied to the first load 45 may be changed in a stepwise manner in stages more than two stages, or may be changed continuously.

For example, although the target temperature of the second load 34 is changed in a stepwise manner in two stages in the menthol mode in a case where at least the aerosol source 71 contains menthol in the present embodiment, the present invention is not limited thereto. The target temperature of the second load 34 may be changed in a stepwise manner in stages more than two stages (in stages smaller than stages in the regular mode), or may be changed continuously. Similarly, the target temperature of the second load 34 may be changed in a stepwise manner in stages more than four stages, or may be changed continuously in the regular mode.

For example, although in a case where the flavor determination is executed before generation of aerosol, the result of the flavor determination is notified to a user by the light emitting element 161 and the vibration element 162, and in a case where the flavor determination is not executed before generation of aerosol, the result of the latest flavor determination is notified to a user by only the light emitting element 161 in the present embodiment, the present invention is not limited thereto. For example, in a case where the flavor determination is executed before generation of aerosol, the result of the flavor determination may be notified to a user by the notification unit 16 (for example, the light emitting element 161 and the vibration element 162), and in a case where the flavor determination is not executed before generation of aerosol, the result of the flavor determination may not be notified to a user by the notification unit 16 (for example, the light emitting element 161 and the vibration element 162). In this manner, when the flavor determination is executed, the result of the flavor determination is notified to the user, so that the user can confirm whether the result of the flavor determination corresponds to intention of the user. On the other hand, when the flavor determination is not executed, no notification is issued to the user, so that it is possible to prevent the occurrence of a notification that may bother the user. Since no notification is issued, it is also possible to reduce power consumption due to a notification.

Although an example in which the light emitting element 161 and the vibration element 162 are provided as the notification unit 16 of the power supply unit 10 in the present embodiment, the present invention is not limited thereto. Instead of the light emitting element 161 and the vibration element 162, or in addition to the light emitting element 161 and the vibration element 162, the power supply unit 10 may include a display, a speaker, or the like as the notification unit 16. In addition to the light emitting element 161 and the vibration element 162, the power supply unit 10 may include a notification unit (hereinafter, also referred to as a third notification unit) separate from the light emitting element 161 and the vibration element 162. In a case where the flavor determination is executed before generation of aerosol, the MCU 63 may cause the light emitting element 161, the vibration element 162, and the third notification unit to notify a user of the result of the flavor determination. In a case where the power supply unit 10 includes the third notification unit in addition to the light emitting element 161 and the vibration element 162, and the flavor determination is not executed before generation of aerosol, the MCU 63 may cause the light emitting element 161 and the third notification unit to notify a user of the result of the latest flavor determination.

For example, an overall shape of the aerosol inhaler 1 is not limited to a shape in which the power supply unit 10, the cartridge 40, and the capsule 50 are arranged in a line as shown in FIG. 1. The aerosol inhaler 1 may have any shape such as a substantially box shape as long as the cartridge 40 and the capsule 50 can be replaced relative to the power supply unit 10.

For example, the cartridge 40 may be integrated with the power supply unit 10.

For example, the capsule 50 may be implemented in a manner of being detachable from the power supply unit 10 as along as the capsule 50 can be replaced relative to the power supply unit 10.

For example, although the first load 45 and the second load 34 are heaters that generate heat using electric power discharged from the power supply 61 in the present embodiment, the first load 45 and the second load 34 may be Peltier elements that can generate heat and perform cooling using electric power discharged from the power supply 61. When the first load 45 and the second load 34 have such a configuration, the degree of freedom in controlling the temperature of the aerosol source 71 and the temperature of the flavor source 52 is improved, and thus a unit flavor amount can be controlled at a high level.

For example, although the MCU 63 controls discharging from the power supply 61 to the first load 45 and the second load 34 so as to cause the flavor component amount to converge to a target amount in the present embodiment, the target amount is not limited to a specific value and may be a range having a certain width.

For example, although the MCU 63 controls discharging from the power supply 61 to the second load 34 so as to cause the temperature of the flavor source 52 to converge to a target temperature in the present embodiment, the target temperature is not limited to a specific value and may be a range having a certain width.

At least the following matters are described in the present description. Although corresponding constituent elements or the like in the above embodiment are shown in parentheses, the present invention is not limited thereto.

(1) A power supply unit (the power supply unit 10) for an aerosol generation device (the aerosol inhaler 1), the power supply unit including:

a first connector (the discharge terminal 12) that is detachable from a first heater (the first load 45) of an aerosol source unit (the cartridge 40) including an aerosol source (the aerosol source 71) and the first heater, the first heater being configured to heat the aerosol source;

a second connector (the discharge terminal 17) connected to a second heater (the second load 34) configured to heat a flavor source (the flavor source 52) capable of adding a flavor to the aerosol source vaporized and/or atomized by heating the aerosol source with the first heater;

a power supply (the power supply 61) that is electrically connected to the first connector and the second connector, configured to discharge to the first heater via the first connector, and configured to discharge to the second heater via the second connector;

a first notification unit (the notification unit 16, the light emitting element 161) configured to notify a user of information;

a second notification unit (the notification unit 16, the vibration element 162) that is provided separately from the first notification unit and configured to notify a user of information; and

a controller (the MCU 63) configured to control notifications issued by the first notification unit and the second notification unit, in which

the controller is configured to

execute a flavor determination for determining whether the aerosol source and the flavor source contain menthol,

cause the first notification unit and the second notification unit to notify the user of a result of the flavor determination when the flavor determination is executed before generation of aerosol to which the flavor of the flavor source is to be added, and

cause only the first notification unit of the first notification unit and the second notification unit to notify the user of a result of the latest flavor determination when the flavor determination is not executed before generation of the aerosol to which the flavor of the flavor source is to be added.

According to (1), in a case where the flavor determination is executed before generation of aerosol, the user is notified of the result of the flavor determination by notification units more than that in a case where the flavor determination is not executed. As a result, the user can be notified of the result of the flavor determination in an easy-to-understand manner. Therefore, the user can easily confirm whether the result of the flavor determination corresponds to intention of the user. On the other hand, in a case where the flavor determination is not executed before generation of aerosol, the user is notified of the result of the latest flavor determination by one notification unit. As a result, when the user is notified of the result of the latest flavor determination, the notification can be simplified, and it is possible to prevent issuing of a notification that may bother the user. Since the notification is simplified, it is also possible to reduce power consumption due to issuing the notification.

(2) The power supply unit for an aerosol generation device according to (1), in which

the first notification unit issues a notification acting on a sense of vision of the user, and

the second notification unit issues a notification acting on a sense of touch of the user.

According to (2), in a case where the flavor determination is executed before generation of aerosol, the user is notified of the result of the flavor determination by the first notification unit and the second notification unit that act on different senses of the user. Accordingly, it is possible to notify the user of the result of the flavor determination in an easy-to-understand manner as compared with a case where the result of the flavor determination is notified to the user by a notification unit that acts on one sense of the user.

(3) The power supply unit for an aerosol generation device according to (1) or (2), in which the first notification unit includes a light emitting element.

According to (3), the user is notified of the result of the flavor determination or the result of the latest flavor determination by the notification unit including the light emitting element that acts on a sense of vision of the user. As a result, the user can be notified of the result of the flavor determination or the result of the latest flavor determination in an easy-to-understand manner.

(4) The power supply unit for an aerosol generation device according to (3), further including:

an operation unit configured to be operated by the user, in which
the controller is configured to

cause the light emitting element to emit light in a color set based on the result of the flavor determination or the result of the latest flavor determination when the result of the flavor determination or the result of the latest flavor determination is notified, and
acquire information related to a remaining amount of the power supply,

in a case where the remaining amount is equal to or larger than a first threshold, in response to the operation unit being operated, the controller is configured to cause the light emitting element to emit light in the same color as the color set based on the result, and
the first threshold is equal to or smaller than a value corresponding to a fully-charged state of the power supply and is larger than a value corresponding to a discharging ended state of the power supply.

According to (4), in a case where the remaining amount of the power supply is equal to or larger than the first threshold, in response to the operation unit being operated, the light emitting element emits light in the same color as the color in a case where the result of the flavor determination or the result of the latest flavor determination is notified. As a result, a notification unit (the light emitting element) used in a notification for notifying the result of the flavor determination or the result of the latest flavor determination and a notification unit (the light emitting element) used in a notification related to the remaining amount of the power supply can be shared. Therefore, it is possible to issue a notification related to the remaining amount of the power supply while preventing an increase in the number of notification units mounted in the aerosol generation device, as compared with a case where a notification unit that issues a notification related to the remaining amount of the power supply is separately provided. A user can appropriately confirm whether the remaining amount of the power supply is equal to or larger than the first threshold and the result of the flavor determination or the latest flavor determination by operating the operation unit at a desired time. Therefore, convenience of the aerosol generation device can be improved.

(5) The power supply unit for an aerosol generation device according to (3) or (4), in which

the controller is configured to

cause the light emitting element to emit light in a color set based on the result of the flavor determination or the result of the latest flavor determination when the result of the flavor determination or the result of the latest flavor determination is notified, and
acquire information related to the remaining amount of the power supply, in a case where the remaining amount is equal to or larger than the first threshold, during generation of the aerosol, the controller is configured to cause the light emitting element to emit light in the same color as the color set based on the result, and

the first threshold is equal to or smaller than the value corresponding to the fully-charged state of the power supply and is larger than the value corresponding to the discharging ended state of the power supply.

According to (5), in a case where the remaining amount of the power supply is equal to or larger than the first threshold, during generation of aerosol, the light emitting element emits light in the same color as the color in a case where the result of the flavor determination or the result of the latest flavor determination is notified. As a result, a notification unit (the light emitting element) used in a notification for notifying the result of the flavor determination or the result of the latest flavor determination and a notification unit (the light emitting element) used in a notification related to the remaining amount of the power supply can be shared. Therefore, it is possible to issue a notification related to the remaining amount of the power supply while preventing an increase in the number of notification units mounted in the aerosol generation device, as compared with a case where a notification unit that issues a notification related to the remaining amount of the power supply is separately provided. A user can appropriately confirm whether the remaining amount of the power supply is equal to or larger than the first threshold and the result of the flavor determination or the latest flavor determination during generation of aerosol. Therefore, convenience of the aerosol generation device can be improved.

(6) The power supply unit for an aerosol generation device according to any one of (3) to (5), further including:

an operation unit configured to be operated by the user, in which

the controller is configured to

cause the light emitting element to emit light in the color set based on the result of the flavor determination or the result of the latest flavor determination when the result of the flavor determination or the result of the latest flavor determination is notified, and
acquire information related to the remaining amount of the power supply,

in a case where the remaining amount is smaller than the first threshold and equal to or larger than a second threshold, in response to the operation unit being operated, the controller is configured to cause the light emitting element to emit light in a color different from the color set based on the result,
the first threshold is equal to or smaller than the value corresponding to the fully-charged state of the power supply and is larger than the value corresponding to the discharging ended state of the power supply, and
the second threshold is larger than the value corresponding to the discharging ended state.

According to (6), in a case where the remaining amount of the power supply is smaller than the first threshold and equal to or larger than the second threshold, in response to the operation unit being operated, the light emitting element emits light in a color different from the color in a case where the result of the flavor determination or the result of the latest flavor determination is notified. As a result, a notification unit (the light emitting element) used in a notification for notifying the result of the flavor determination or the result of the latest flavor determination and a notification unit (the light emitting element) used in a notification related to the remaining amount of the power supply can be shared. Therefore, it is possible to issue a notification related to the remaining amount of the power supply while preventing an increase in the number of notification units mounted in the aerosol generation device, as compared with a case where a notification unit that issues a notification related to the remaining amount of the power supply is separately provided. The user can appropriately confirm whether the remaining amount of the power supply is smaller than the first threshold by operating the operation unit at a desired time. Therefore, convenience of the aerosol generation device can be improved.

(7) The power supply unit for an aerosol generation device according to any one of (3) to (6), in which

the controller is configured to

cause the light emitting element to emit light in the color set based on the result of the flavor determination or the result of the latest flavor determination when the result of the flavor determination or the result of the latest flavor determination is notified, and
acquire information related to the remaining amount of the power supply,

in a case where the remaining amount is smaller than the first threshold and equal to or larger than the second threshold, during generation of the aerosol, the controller is configured to cause the light emitting element to emit light in a color different from the color set based on the result,
the first threshold is equal to or smaller than the value corresponding to the fully-charged state of the power supply and is larger than the value corresponding to the discharging ended state of the power supply, and
the second threshold is larger than the value corresponding to the discharging ended state.

According to (7), in a case where the remaining amount of the power supply is smaller than the first threshold and equal to or larger than the second threshold, during generation of aerosol, the light emitting element emits light in a color different from the color in a case where the result of the flavor determination or the result of the latest flavor determination is notified. As a result, a notification unit (the light emitting element) used in a notification for notifying the result of the flavor determination or the result of the latest flavor determination and a notification unit (the light emitting element) used in a notification related to the remaining amount of the power supply can be shared. Therefore, it is possible to issue a notification related to the remaining amount of the power supply while preventing an increase in the number of notification units mounted in the aerosol generation device, as compared with a case where a notification unit that issues a notification related to the remaining amount of the power supply is separately provided. The user can appropriately confirm whether the remaining amount of the power supply is smaller than the first threshold during generation of aerosol. Therefore, convenience of the aerosol generation device can be improved.

(8) The power supply unit for an aerosol generation device according to (6) or (7), in which the different color is constant regardless of the result of the flavor determination or the result of the latest flavor determination.

According to (8), in a case where the remaining amount of the power supply is smaller than the first threshold and equal to or larger than the second threshold, the light emitting element emits light in a constant color regardless of the result of the flavor determination or the result of the latest flavor determination. As a result, the user can be notified that the remaining amount of the power supply is smaller than the first threshold, that is, the remaining amount of the power supply is reduced, in an easy-to-understand manner, and convenience of the aerosol generation device can be improved.

(9) The power supply unit for an aerosol generation device according to any one of (3) to (6), in which the controller is configured to

cause the light emitting element to emit light in a first mode in the color set based on the result of the flavor determination or the result of the latest flavor determination when the result of the flavor determination or the result of the latest flavor determination is notified,
acquire information related to the remaining amount of the power supply, and
cause the light emitting element to emit light in a second mode different from the first mode in a color set based on the remaining amount of the power supply during generation of the aerosol.

According to (9), light emitting modes of the light emitting element in a notification for notifying the result of the flavor determination or the result of the latest flavor determination and a notification related to the remaining amount of the power supply during generation of aerosol are different from each other. As a result, notifications can be issued using various light emitting modes of the light emitting element. Therefore, marketability of the aerosol generation device can be improved.

(10) The power supply unit for an aerosol generation device according to (6), in which

in a case where the remaining amount is smaller than the first threshold and equal to or larger than the second threshold, in response to the operation unit being operated, the controller is configured to cause the light emitting element to emit light in a first color different from the color set based on the result, and
in a case where the remaining amount is smaller than the second threshold and larger than the value corresponding to the discharging ended state of the power supply, in response to the operation unit being operated, the controller is configured to cause the light emitting element to emit light in a second color different from the color set based on the result and the first color.

According to (10), the light emitting element emits light in a color in a case where the operation unit is operated when the remaining amount of the power supply is smaller than the second threshold and equal to or larger than the value corresponding to the discharging ended state to be different from a color in a case where the result of the flavor determination or the result of the latest flavor determination is notified and a color in a case where the remaining amount of the power supply is equal to or larger than the second threshold. As a result, a user can appropriately confirm whether the remaining amount of the power supply is smaller than the second threshold by operating the operation unit at a desired time. Therefore, convenience of the aerosol generation device can be improved.

(11) The power supply unit for an aerosol generation device according to (7), in which

in a case where the remaining amount is smaller than the first threshold and equal to or larger than the second threshold, during generation of the aerosol, the controller is configured to cause the light emitting element to emit light in a first color different from the color set based on the result, and
in a case where the remaining amount is smaller than the second threshold and larger than the value corresponding to the discharging ended state of the power supply, during generation of the aerosol, the controller is configured to cause the light emitting element to emit light in a second color different from the color set based on the result and the first color.

According to (11), the light emitting element emits light in different colors in a case where the aerosol is being generated when the remaining amount of the power supply is smaller than the second threshold and equal to or larger than the value corresponding to the discharging ended state, in a case where the result of the flavor determination or the result of the latest flavor determination is notified, and in a case where the remaining amount of the power supply is equal to or larger than the second threshold. As a result, a user can appropriately confirm whether the remaining amount of the power supply is smaller than the second threshold during generation of aerosol. Therefore, convenience of the aerosol generation device can be improved.

(12) The power supply unit for an aerosol generation device according to (10) or (11), in which the second color is constant regardless of the result of the flavor determination or the result of the latest flavor determination.

According to (12), in a case where the remaining amount of the power supply is smaller than the second threshold and equal to or larger than the value corresponding to the discharging ended state, the light emitting element emits light in a constant color regardless of the result of the flavor determination or the result of the latest flavor determination. As a result, the user can be notified that the remaining amount of the power supply is smaller than the second threshold, that is, the remaining amount of the power supply is further reduced, in an easy-to-understand manner, and convenience of the aerosol generation device can be improved.

(13) A power supply unit for an aerosol generation device, the power supply unit including:

a first connector (the discharge terminal 12) that is detachable from a first heater (the first load 45) of an aerosol source unit (the cartridge 40) including an aerosol source (the aerosol source 71) and the first heater, the first heater being configured to heat the aerosol source;

a second connector (the discharge terminal 17) connected to a second heater (the second load 34) configured to heat a flavor source (the flavor source 52) capable of adding a flavor to the aerosol source vaporized and/or atomized by heating the aerosol source with the first heater;

a power supply (the power supply 61) that is electrically connected to the first connector and the second connector, configured to discharge to the first heater via the first connector, and configured to discharge to the second heater via the second connector;

a notification unit (the notification unit 16, the light emitting element 161) configured to notify a user of information; and

a controller (the MCU 63) configured to control a notification issued by the notification unit, in which

the controller is configured to

execute a flavor determination for determining whether the aerosol source and the flavor source contain menthol,

cause the notification unit to notify the user of a result of the flavor determination when the flavor determination is executed before generation of aerosol to which the flavor of the flavor source is to be added, and

cause the notification unit not to notify the user of the result of the flavor determination when the flavor determination is not executed before generation of the aerosol to which the flavor of the flavor source is to be added.

According to (13), in a case where the flavor determination is executed before generation of aerosol, the result of the flavor determination is notified to the user by the notification unit. On the other hand, in a case where the flavor determination is not executed before generation of aerosol, the result of the flavor determination is not notified to the user by the notification unit. As a result, when the flavor determination is executed, the result of the flavor determination is notified to the user, so that the user can confirm whether the result of the flavor determination corresponds to intention of the user. On the other hand, when the flavor determination is not executed, no notification is issued to the user, so that it is possible to prevent the occurrence of a notification that may bother the user. Since no notification is issued, it is also possible to reduce power consumption due to a notification.

Although various embodiments have been described above with reference to the drawings, it is needless to say that the present invention is not limited to these examples. It will be apparent to those skilled in the art that various changes and modifications may be conceived within the scope of the claims. It is also understood that various changes and modifications belong to the technical scope of the present invention. In addition, respective constituent elements in the above-described embodiments may be combined as desired without departing from the gist of the invention.

The present application is based on Japanese Patent Application NO. 2020-193903 filed on Nov. 20, 2020, and the contents thereof are incorporated herein by reference.

REFERENCE SIGNS LIST

1       aerosol inhaler (aerosol generation device)
10      power supply unit
12      discharge terminal (first connector)
16      notification unit
161     light emitting element (first notification unit)
162     vibration element (second notification unit)
17      discharge terminal (second connector)
34      second load (second heater)
40      cartridge (aerosol source unit)
45      first load (first heater)
52      flavor source
61      power supply
63      MCU (controller)

71      aerosol source

**Claims**

1.  A power supply unit for an aerosol generation device, the power supply unit comprising:

    a first connector that is detachable from a first heater of an aerosol source unit including an aerosol source and the first heater, the first heater being configured to heat the aerosol source;
    a second connector connected to a second heater configured to heat a flavor source capable of adding a flavor to the aerosol source vaporized and/or atomized by heating the aerosol source with the first heater;
    a power supply that is electrically connected to the first connector and the second connector, configured to discharge to the first heater via the first connector, and configured to discharge to the second heater via the second connector;
    a first notification unit configured to notify a user of information;
    a second notification unit that is provided separately from the first notification unit and configured to notify a user of information; and
    a controller configured to control notifications issued by the first notification unit and the second notification unit, wherein the controller is configured to

    execute a flavor determination for determining whether the aerosol source and the flavor source contain menthol,
    cause the first notification unit and the second notification unit to notify the user of a result of the flavor determination, when the flavor determination is executed before generation of aerosol to which the flavor of the flavor source is added, and
    cause only the first notification unit of the first notification unit and the second notification unit to notify the user of a result of the latest flavor determination, when the flavor determination is not executed before generation of the aerosol to which the flavor of the flavor source is added.

2.  The power supply unit for an aerosol generation device according to claim 1,

    wherein the first notification unit issues a notification acting on a sense of vision of the user, and
    wherein the second notification unit issues a notification acting on a sense of touch of the user.

3.  The power supply unit for an aerosol generation device according to claim 1 or 2, wherein the first notification unit includes a light emitting element.

4.  The power supply unit for an aerosol generation device according to claim 3, further comprising:

    an operation unit configured to be operated by the user,
    wherein the controller is configured to

    cause the light emitting element to emit light in a color set based on the result of the flavor determination or a result of the latest flavor determination, when the result of the flavor determination or the result of the latest flavor determination is notified, and
    acquire information related to a remaining amount of the power supply,

    wherein in a case where the remaining amount is equal to or larger than a first threshold, in response to the operation unit being operated, the controller is configured to cause the light emitting element to emit light in the same color as the color set based on the result, and
    wherein the first threshold is equal to or smaller than a value corresponding to a fully-charged state of the power supply and is larger than a value corresponding to a discharging ended state of the power supply.

5.  The power supply unit for an aerosol generation device according to claim 3 or 4,

    wherein the controller is configured to

    cause the light emitting element to emit light in a color set based on the result of the flavor determination or the result of the latest flavor determination when the result of the flavor determination or the result of the latest flavor determination is notified, and
acquire information related to the remaining amount of the power supply,

wherein in a case where the remaining amount is equal to or larger than the first threshold, during generation of the aerosol, the controller is configured to cause the light emitting element to emit light in the same color as the color set based on the result, and
wherein the first threshold is equal to or smaller than the value corresponding to the fully-charged state of the power supply and is larger than the value corresponding to the discharging ended state of the power supply.

6. The power supply unit for an aerosol generation device according to any one of claims 3 to 5, further comprising:

an operation unit configured to be operated by the user,
wherein the controller is configured to

cause the light emitting element to emit light in the color set based on the result of the flavor determination or the result of the latest flavor determination when the result of the flavor determination or the result of the latest flavor determination is notified, and
acquire information related to the remaining amount of the power supply,

wherein in a case where the remaining amount is smaller than the first threshold and equal to or larger than a second threshold, in response to the operation unit being operated, the controller is configured to cause the light emitting element to emit light in a color different from the color set based on the result,
wherein the first threshold is equal to or smaller than the value corresponding to the fully-charged state of the power supply and is larger than the value corresponding to the discharging ended state of the power supply, and
wherein the second threshold is larger than the value corresponding to the discharging ended state.

7. The power supply unit for an aerosol generation device according to any one of claims 3 to 6,

wherein the controller is configured to

cause the light emitting element to emit light in the color set based on the result of the flavor determination or the result of the latest flavor determination when the result of the flavor determination or the result of the latest flavor determination is notified, and
acquire information related to the remaining amount of the power supply,

wherein in a case where the remaining amount is smaller than the first threshold and equal to or larger than the second threshold, during generation of the aerosol, the controller is configured to cause the light emitting element to emit light in a color different from the color set based on the result,
wherein the first threshold is equal to or smaller than the value corresponding to the fully-charged state of the power supply and is larger than the value corresponding to the discharging ended state of the power supply, and
wherein the second threshold is larger than the value corresponding to the discharging ended state.

8. The power supply unit for an aerosol generation device according to claim 6 or 7, wherein the different color is constant regardless of the result of the flavor determination or the result of the latest flavor determination.

9. The power supply unit for an aerosol generation device according to any one of claims 3 to 6,
wherein the controller is configured to

cause the light emitting element to emit light in a first mode in the color set based on the result of the flavor determination or the result of the latest flavor determination when the result of the flavor determination or the result of the latest flavor determination is notified,
acquire information related to the remaining amount of the power supply, and
cause the light emitting element to emit light in a second mode different from the first mode in a color set based on the remaining amount of the power supply during generation of the aerosol.

10. The power supply unit for an aerosol generation device according to claim 6, wherein in a case where the remaining amount is smaller than the first threshold and equal to or larger than the second threshold, in response to the operation unit being operated, the controller is configured to cause the light emitting element to emit light in a first color different from the color set based on the result, and

wherein in a case where the remaining amount is smaller than the second threshold and larger than the value corresponding to the discharging ended state of the power supply, in response to the operation unit being operated, the controller is configured to cause the light emitting element to emit light in a second color different from the color set based on the result and the first color.

11. The power supply unit for an aerosol generation device according to claim 7,

wherein in a case where the remaining amount is smaller than the first threshold and equal to or larger than the second threshold, during generation of the aerosol, the controller is configured to cause the light emitting element to emit light in a first color different from the color set based on the result, and

wherein in a case where the remaining amount is smaller than the second threshold and larger than the value corresponding to the discharging ended state of the power supply, the controller is configured to cause the light emitting element to emit light in a second color different from the color set based on the result and the first color.

12. The power supply unit for an aerosol generation device according to claim 10 or 11,
wherein the second color is constant regardless of the result of the flavor determination or the result of the latest flavor determination.

13. A power supply unit for an aerosol generation device, the power supply unit comprising:

a first connector that is detachable from a first heater of an aerosol source unit including an aerosol source and the first heater, the first heater being configured to heat the aerosol source;

a second connector connected to a second heater configured to heat a flavor source capable of adding a flavor to the aerosol source vaporized and/or atomized by heating the aerosol source with the first heater;

a power supply that is electrically connected to the first connector and the second connector, configured to discharge to the first heater via the first connector, and configured to discharge to the second heater via the second connector;

a notification unit configured to notify a user of information; and

a controller configured to control a notification issued by the notification unit,

wherein the controller is configured to

execute a flavor determination for determining whether the aerosol source and the flavor source contain menthol,

cause the notification unit to notify the user of a result of the flavor determination when the flavor determination is executed before generation of aerosol to which the flavor of the flavor source is added, and

cause the notification unit not to notify the user of the result of the flavor determination, when the flavor determination is not executed before generation of the aerosol to which the flavor of the flavor source is added.

# FIG. 1

# FIG. 2

*FIG. 3*

EP 4 248 778 A1

## FIG. 4

# FIG. 5

*FIG. 6*

# FIG. 7

## FIG. 8

| NOTIFICATION | | NOTIFICATION ISSUED BEFORE GENERATION OF AEROSOL (a) | | NOTIFICATION ISSUED DURING GENERATION OF AEROSOL (b) | | NOTIFICATION ISSUED WHEN THERE IS OPERATION (c) | | CHARGING REQUEST NOTIFICATION (d) |
|---|---|---|---|---|---|---|---|---|
| | | FIRST PRE-GENERATION NOTIFICATION | SECOND PRE-GENERATION NOTIFICATION | FIRST DURING-GENERATION NOTIFICATION | SECOND DURING-GENERATION NOTIFICATION | FIRST OPERATION NOTIFICATION | SECOND OPERATION NOTIFICATION | |
| EXECUTION CONDITION | | FLAVOR DETERMINATION IS EXECUTED BEFORE GENERATION OF AEROSOL | FLAVOR DETERMINATION IS NOT EXECUTED BEFORE GENERATION OF AEROSOL | REMAINING AMOUNT OF POWER SUPPLY IS EQUAL TO OR LARGER THAN FIRST THRESHOLD | REMAINING AMOUNT OF POWER SUPPLY IS SMALLER THAN FIRST THRESHOLD AND EQUAL TO OR LARGER THAN SECOND THRESHOLD | REMAINING AMOUNT OF POWER SUPPLY IS EQUAL TO OR LARGER THAN FIRST THRESHOLD | REMAINING AMOUNT OF POWER SUPPLY IS SMALLER THAN FIRST THRESHOLD AND EQUAL TO OR LARGER THAN SECOND THRESHOLD | REMAINING AMOUNT OF POWER SUPPLY IS SMALLER THAN SECOND THRESHOLD |
| NOTIFICATION MODE | LIGHT EMITTING ELEMENT | TURN ON IN GREEN OR TURN ON IN WHITE | TURN ON IN GREEN OR TURN ON IN WHITE | TURN ON IN GREEN (BLINK) OR TURN ON IN WHITE (BLINK) | TURN ON IN PURPLE | TURN ON IN GREEN (BLINK) OR TURN ON IN WHITE (BLINK) | TURN ON IN PURPLE | BLINK IN RED |
| | VIBRATION ELEMENT | VIBRATE | NOT VIBRATE | NOT VIBRATE | NOT VIBRATE | NOT VIBRATE | NOT VIBRATE | NOT VIBRATE |

# FIG. 9

(TIME t0)
POWER SUPPLY
IS TURNED ON
TIME

(TIME t1)
BEFORE GENERATION OF AEROSOL
(FLAVOR DETERMINATION IS
EXECUTED)

(TIME t2)
DURING GENERATION
OF AEROSOL

LIGHT EMITTING
ELEMENT: TURN OFF
VIBRATION ELEMENT:
STOP

LIGHT EMITTING ELEMENT:
TURN ON IN GREEN
VIBRATION ELEMENT: VIBRATE

LIGHT EMITTING ELEMENT:
TURN ON IN GREEN
VIBRATION ELEMENT: STOP

910

(TIME t3A)
BEFORE GENERATION OF AEROSOL
(FLAVOR DETERMINATION IS NOT EXECUTED)

(TIME t4A)
DURING GENERATION
OF AEROSOL

CARTRIDGE OR
CAPSULE IS NOT
ATTACHED OR
DETACHED

LIGHT EMITTING ELEMENT:
TURN ON IN GREEN
VIBRATION ELEMENT: STOP

LIGHT EMITTING ELEMENT:
TURN ON IN GREEN
VIBRATION ELEMENT: STOP

920

(TIME t3B)
BEFORE GENERATION OF AEROSOL
(FLAVOR DETERMINATION IS EXECUTED)

(TIME t4B)
DURING GENERATION
OF AEROSOL

CARTRIDGE OR
CAPSULE IS
ATTACHED OR
DETACHED

LIGHT EMITTING ELEMENT:
TURN ON IN WHITE
VIBRATION ELEMENT: STOP

LIGHT EMITTING ELEMENT:
TURN ON IN WHITE
VIBRATION ELEMENT: STOP

## FIG. 10

```
                    ┌──────────────┐
                    │    START     │
                    └──────────────┘
                            │
                            ▼
                                          S0
                    ╱────────────────────╲        NO
     ┌──E◄────────╱    POWER SUPPLY       ╲──────────┐
     │            ╲   IS TURNED ON?       ╱          │
     │             ╲────────────────────╱           │
     │                      │ YES                    │
     │                      ▼                        │
     │     ┌────────────────────────────────────┐   │
     │     │ FLAVOR IDENTIFICATION PROCESSING   │─ S1
     │     └────────────────────────────────────┘
     │                      │          S2
     │            ╱────────────────────╲        NO
     │           ╱    CARTRIDGE OR CAPSULE ╲──────────► B
     │           ╲    IS OF MENTHOL TYPE?  ╱
     │            ╲────────────────────╱
     │                      │ YES
```

MENTHOL MODE PROCESSING

NOTIFY THAT IT IS MENTHOL MODE (FIRST PRE-GENERATION NOTIFICATION OR SECOND PRE-GENERATION NOTIFICATION) — S3

SET TARGET TEMPERATURE $T_{cap\_target}$ OF SECOND LOAD AND ATOMIZED ELECTRIC POWER $P_{liquid}$ SUPPLIED TO FIRST LOAD BASED ON FLAVOR COMPONENT REMAINING AMOUNT $W_{capsule}$ ($n_{puff}$ - 1) — S4

C

S5 — ACQUIRE CURRENT TEMPERATURE $T_{cap\_sense}$ OF SECOND LOAD

S6 — CONTROL DISCHARGING TO SECOND LOAD BASED ON TARGET TEMPERATURE $T_{cap\_target}$ OF SECOND LOAD AND CURRENT TEMPERATURE $T_{cap\_sense}$ OF SECOND LOAD

S7 — AEROSOL GENERATION REQUEST IS DETECTED? — NO

YES

A

S8 — PREDETERMINED PERIOD IS ELAPSED? — NO

YES

STOP DISCHARGING TO SECOND LOAD — S9

TRANSITION TO SLEEP MODE — S10

F

# FIG. 11

A

ACQUIRE CURRENT TEMPERATURE $T_{cap\_sense}$ OF SECOND LOAD — S11

S12

$T_{cap\_sense} > T_{cap\_target} - \delta$ ?

YES

NO

S14

$T_{cap\_sense} < T_{cap\_target} - \delta$ ?

YES

NO

S13
$P_{liquid} \rightarrow P_{liquid} - \triangle$

S15
$P_{liquid} \rightarrow P_{liquid} + \triangle$

DURING-GENERATION NOTIFICATION PROCESSING
(FIRST DURING-GENERATION NOTIFICATION OR SECOND
DURING-GENERATION NOTIFICATION) — S16

SUPPLY ATOMIZED ELECTRIC POWER $P_{liquid}$ TO FIRST LOAD — S17

S18

AEROSOL GENERATION
REQUEST IS ENDED?

NO

YES

S19

REACH $t_{upper}$ ?

YES

NO

STOP POWER SUPPLY TO FIRST LOAD — S20

D

# FIG. 12

```
                          ( D )
```

REMAINING AMOUNT UPDATE PROCESSING

ACQUIRE SUPPLY TIME $t_{sense}$ OF SUPPLYING ATOMIZED ELECTRIC POWER $P_{liquid}$ TO FIRST LOAD — S21

$n_{puff} \rightarrow n_{puff} + 1$ — S22

UPDATE REMAINING AMOUNT $W_{capsule}$ $(n_{puff})$ OF FLAVOR COMPONENT CONTAINED IN FLAVOR SOURCE — S23

S24 — $W_{capsule}$ $(n_{puff})$ < REMAINING AMOUNT THRESHOLD? — NO / YES

S25 — REPLACEMENT OF CAPSULE IS PERFORMED FOR PREDETERMINED NUMBER OF TIMES AFTER REPLACEMENT OF CARTRIDGE? — YES / NO

S28 — PERFORM CARTRIDGE REPLACEMENT NOTIFICATION

PERFORM CAPSULE REPLACEMENT NOTIFICATION — S26

SET $n_{puff}$ to 1 AND INITIALIZE TARGET TEMPERATURE $T_{cap\_targe}$ — S27

( F )

S29 — POWER SUPPLY IS TURNED OFF? — NO → ( E ) / YES

END

# FIG. 13

B

REGULAR MODE PROCESSING

NOTIFY THAT IT IS REGULAR MODE
(FIRST PRE-GENERATION NOTIFICATION OR
SECOND PRE-GENERATION NOTIFICATION) — S30

DETERMINE AEROSOL WEIGHT $W_{aerosol}$ REQUIRED
TO ACHIEVE TARGET FLAVOR COMPONENT
AMOUNT $W_{flavor}$ BASED ON FLAVOR COMPONENT
REMAINING AMOUNT $W_{capsule}$ ($n_{puff} - 1$) — S31

SET ATOMIZED ELECTRIC POWER $P_{liquid}$
TO BE SUPPLIED TO FIRST LOAD BASED
ON AEROSOL WEIGHT $W_{aerosol}$ — S32

S33

$P_{liquid} \leq$ UPPER LIMIT
ELECTRIC POWER?

NO

YES

S34

INCREASE TARGET TEMPERATURE
$T_{cap\_target}$ OF SECOND LOAD

C

# FIG. 14

S1

FLAVOR IDENTIFICATION PROCESSING

S41

IMMEDIATELY
AFTER POWER SUPPLY
IS TURNED ON?

YES

NO

S47

CARTRIDGE OR
CAPSULE IS ATTACHED OR
DETACHED?

YES

NO

S42

TRY TO ACQUIRE TYPES OF
CARTRIDGE AND CAPSULE

S43

TYPES OF
CARTRIDGE AND CAPSULE
ARE ACQUIRED?

NO

YES

S44

STORE ACQUIRED TYPES OF
CARTRIDGE AND CAPSULE

S45

SET FLAVOR DETERMINATION
EXECUTION FLAG TO ON

S48

READ STORED TYPES OF
CARTRIDGE AND CAPSULE

S46

ERROR PROCESSING

END

## FIG. 15

(a)

Winitial    Wth1    Wth2

Tm1    Tm2

SECOND LOAD TARGET TEMPERATURE [°C]

85
80

70

60

30
R.T.

0

FLAVOR COMPONENT REMAINING AMOUNT IN CAPSULE [mg]

(b)

VOLTAGE APPLIED TO FIRST LOAD [V]

V2
V3

V1

0

FLAVOR COMPONENT REMAINING AMOUNT IN CAPSULE [mg]

(c)

MENTHOL AMOUNT SUPPLIED TO MOUTH OF USER BY ONE INHALING OPERATION [mg/puff]

131b    131a    132a

133a

132b

133b

0

FLAVOR COMPONENT REMAINING AMOUNT IN CAPSULE [mg]

FLAVOR COMPONENT AMOUNT SUPPLIED TO MOUTH OF USER BY ONE INHALING OPERATION [mg/puff]

0

# FIG. 16

(a)

SECOND LOAD TARGET TEMPERATURE [°C]

FLAVOR COMPONENT REMAINING AMOUNT IN CAPSULE [mg]

(b)

VOLTAGE APPLIED TO FIRST LOAD [V]

FLAVOR COMPONENT REMAINING AMOUNT IN CAPSULE [mg]

(c)

MENTHOL AMOUNT SUPPLIED TO MOUTH OF USER BY ONE INHALING OPERATION [mg/puff]

FLAVOR COMPONENT AMOUNT SUPPLIED TO MOUTH OF USER BY ONE INHALING OPERATION [mg/puff]

FLAVOR COMPONENT REMAINING AMOUNT IN CAPSULE [mg]

**EP 4 248 778 A1**

# INTERNATIONAL SEARCH REPORT

| International application No. |
|---|
| **PCT/JP2021/032902** |

**A. CLASSIFICATION OF SUBJECT MATTER**

*A24F 40/50*(2020.01)i; *A24F 40/60*(2020.01)i
FI: A24F40/50; A24F40/60

According to International Patent Classification (IPC) or to both national classification and IPC

**B. FIELDS SEARCHED**

Minimum documentation searched (classification system followed by classification symbols)

A24F40/50; A24F40/60

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-526232 A (KT & G CORP) 31 August 2020 (2020-08-31) paragraphs [0028]-[0059], fig. 1 | 1-13 |
| A | JP 2020-503054 A (GOFIRE INC ) 30 January 2020 (2020-01-30) paragraphs [0022], [0049]-[0051] | 1-13 |
| A | US 2020/0077708 A1 (FLOYD, Evan E.) 12 March 2020 (2020-03-12) paragraphs [0047], [0054], [0056] | 1-13 |
| P, A | JP 6922062 B1 (JAPAN TOBACCO INC) 18 August 2021 (2021-08-18) claim 1 | 1-13 |
| P, A | JP 6915143 B1 (JAPAN TOBACCO INC) 04 August 2021 (2021-08-04) claim 1 | 1-13 |
| P, A | JP 6915142 B1 (JAPAN TOBACCO INC) 04 August 2021 (2021-08-04) claim 1 | 1-13 |

☐ Further documents are listed in the continuation of Box C.   ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 October 2021** | **19 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

59

### INTERNATIONAL SEARCH REPORT
**Information on patent family members**

International application No.

**PCT/JP2021/032902**

| Patent document cited in search report | | | Publication date (day/month/year) | Patent family member(s) | | | Publication date (day/month/year) |
|---|---|---|---|---|---|---|---|
| JP | 2020-526232 | A | 31 August 2020 | US | 2020/0329772 | A1 | |
| | | | | fig. 1, paragraphs [0032]-[0056], [0062] | | | |
| | | | | WO | 2019/088586 | A2 | |
| | | | | EP | 3704965 | A2 | |
| | | | | KR | 10-2019-0049396 | A | |
| | | | | CN | 110958841 | A | |
| JP | 2020-503054 | A | 30 January 2020 | US | 2018/0177231 | A1 | |
| | | | | paragraphs [0022], [0049]-[0051] | | | |
| | | | | WO | 2018/125889 | A1 | |
| | | | | CN | 110352015 | A | |
| | | | | KR | 10-2019-0102030 | A | |
| US | 2020/0077708 | A1 | 12 March 2020 | (Family: none) | | | |
| JP | 6922062 | B1 | 18 August 2021 | (Family: none) | | | |
| JP | 6915143 | B1 | 04 August 2021 | (Family: none) | | | |
| JP | 6915142 | B1 | 04 August 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019150031 A

- NO 2020193903